# EUROPEAN PATENT SPECIFICATION

(11) **EP 1 762 419 B1**
(45) Date of publication and mention of the grant of the patent: **05.01.2011**
(21) Application number: 06017825.8
(22) Date of filing: 25.08.2006
(51) Int. Cl.: B60K 37/02, B60K 37/06, G01C 21/36

(54) **Information indication device, method and computer program product for a vehicle**
Informations-Anzeige-Vorrichtung, Verfahren und Computer Programm Produkt für ein Fahrzeug
Dispositif d'affichage d'informations, procécé d'affichage d'informations et produit de programme informatique pour un véhicule

(30) Priority: 09.09.2005 JP 2005262741; 09.09.2005 JP 2005262747; 09.09.2005 JP 2005262748; 09.09.2005 JP 2005262749
(43) Date of publication of application: 14.03.2007
(73) Proprietor: Mazda Motor Corporation, Aki-gun, Hiroshima 730-8670 (JP)
(72) Inventor: Okamoto, Yoshihisa, Aki-gun, Hiroshima 730-8670 (JP); Kyogoku, Makoto, Aki-gun, Hiroshima 730-8670 (JP); Hoshino, Youko, Aki-gun, Hiroshima 730-8670 (JP); Kawamura, Hiromichi, Aki-gun, Hiroshima 730-8670 (JP)
(74) Representative: Müller-Boré & Partner Patentanwälte

(56) References cited:
- EP-A- 1 128 261
- WO-A-97/13657
- DE-A1- 10 061 190
- DE-A1- 10 339 050
- DE-C1- 10 056 305
- JP-A- 9 113 298
- US-B1- 6 285 952
- WAGNER, U.; ANGERMÜLLER, H.: "Die Instrumentenkombination im neuen 7er BMW: Anzeigephilosophie und Technik" VDI-BERICHTE: "ELEKTRONIK IM KRAFTFAHRZEUG", no. 1646, 27 September 2001 (2001-09-27), pages 941-967, XP002407240 VDI-Verlag, Düsseldorf (DE)

## Description

The present invention relates to an information indication device, method and computer program product for a vehicle that comprises an indication device to indicate information on a display, and in particular, relates to an information indication device for a vehicle that comprises two indication devices to indicate information on displays.

Conventionally, an information indication device for a vehicle such as an automotive vehicle, in which desired information such as map information of a navigation system is indicated on a display such as a liquid crystal type of display, is well known. Herein, this display indication may be changed according to a passenger's operation and the like, and thereby various information may be indicated properly even by a single display.

Further, another type of device has been recently proposed, which is, for example, disclosed in US Patent Application Publication No. 2004/0140959. In this device, a first display for indicating desired information and a second display for operating or controlling the first display, that is comprised of a so-called touch panel, are provided separately in order to improve both visibility and operability of the device.

According to the above conventional device, there are provided a flat touch-panel display that can change its transparency state at need and an image indication display that is disposed behind the touch-panel display. And, a touching-control operational portion such as a button is indicated on the touch-panel display, so the indication by the image indication display may be controlled by operating this touching-control operational portion. Herein, the above image indication display is so located sufficiently far away from the touch-panel display that a driver may view the image indicated by this display without any improper burden of viewing.

The above-described device, however, could not necessarily take advantage of two displays fully because the respective displays just perform their single function, namely, one display is only for indicating the operation information and the other is only for indicating the visual information.

Herein, it may be preferable that even if a certain display is originally provided for indicating the visual information, at least part of this display also indicate the operation information according to a vehicle traveling state or an operation of the passenger. Likewise, it may be preferable that even if another display is originally provided for indicating the operation information, at least part of this display also indicate the visual information according to the vehicle traveling state or the operation of the passenger.

WO 97/13657 A describes a driver control interface system for displaying information from the vehicle to the driver comprising a plurality of selection switches and an eves-front display. JP 09 113298 A describes an on-vehicle navigation device provided with a first and a second display as well as first and second manipulating devices. DE 100 56 305 C1 discloses a manipulating and displaying system for an automotive vehicle comprising a plurality of display means arranged at varios locations of the vehicle. All three documents disclose features corresponding to those of the preambles of the independent claims.

In view of the above, the present invention has an object of to provide an information indication device for a vehicle having at least two information indication devices for display that can improve both visibility and operability and also improve facility of the device.

These objects are solved according to the invention by the features of the independent claims. Preferred embodiments of the present invention are subject of the dependent claims.

According to the present invention, there is provided an information indication device for a vehicle, comprising at least one first indication device with a first display, the first display indicating at least visual information, at least one second indication device with a second display, the second display indicating at least operation information for operating the visual information indicated by the first display, an operation detecting device provided at or in connection with the second indication device and operative to detect an operation by a passenger that is conducted to the operation information indicated by the second display, an operation signal generating device operative to generate at least one operation signal or control instruction based on the operation information indicated by the second display and a detecting signal of the operation detecting device, a first indication control device operative to control an indication state of the information on the first display based on the operation signal generated by the operation signal generating device, and wherein the second indication control device operative to make the first display indicate the operation information and/or make the second display indicate the visual information according to the operation of the passenger; and wherein the second indication control device operative to make the second display indicate the visual information relating to the first display according to the operation of the passenger on the first display; wherein when the passenger executes an operation for changing scale of map information, the second indication control device operative to make the second display indicate map information that is indicated by the first display, the map information indicated by the second display being old map information whose scale has not changed or having a scale that is reverse to the scale of map information indicated by the first display or relating to camera-image information that is indicated by the first display.

According to the present invention, the information indication device for a vehicle further comprises the second indication device with the second display for indicating at least the operation information for operating the visual information indicated by the first display, in addition to the first indication device with the first display for indicating at least the visual information. And, the operation signal is generated based on the operation information indicated by the second display and the detecting signal of the operation detecting device provided at the second indication device, and the indication state of the information on the first display is controlled based on this operation signal by the first indication control device. Accordingly, the operation of the indication control of the first display can be executed based on the operation information of the second display without any improper influence on the visibility of the visual information of the first display. Namely, both the visibility and the operability can be properly improved. Further, since the first display is made at least partly indicate the operation information and/or the second display is made indicate the visual information according to the vehicle traveling state and/or the operation of the passenger by the second indication control device, two indication devices can be utilized variously and thereby the facility can be improved.

According to an embodiment of the present invention, the second indication control device operative to make the second display indicate the visual information relating to the first display according to the vehicle traveling state. Thereby, the various information indication can be attained by the second display, thereby improving the facility.

According to another embodiment of the present invention, the map information indicated by the second display shows a larger map area than that indicated by the first display at a vehicle high-speed traveling state. In general, changing of the visual information of the first display at the vehicle traveling at a high speed does not happen so often compared to at the vehicle traveling at a low speed or stops. Thus, opportunity of using the operation information indicated by the second display may be fewer at the vehicle high-speed traveling state. Thereby, according to the present embodiment, more various information indication can be attained by properly utilizing the second display having fewer use opportunity, thereby improving the facility.

According to another embodiment of the present invention, the map information indicated by the second display shows an enlarged map area that is located in front of the traveling vehicle compared to the map information indicated by the first display at the vehicle high-speed traveling state. As described above, the changing of the visual information of the first display at the vehicle traveling at the high speed does not generally happen so often compared to at the vehicle traveling at the low speed or stops. Thus, the opportunity of using the operation information indicated by the second display may be fewer at the vehicle high-speed traveling state. Thereby, according to the present embodiment, the more various information indication can be attained by properly utilizing the second display having fewer use opportunity, thereby improving the facility.

According to another embodiment of the present invention, in a case where the first display indicates map information, the second indication control device operative to make the second display indicate information of service area and/or interchange based on the map information indicated by the first display, as the visual information relating to the first display, at a vehicle expressway traveling state. Thereby, more map information can be indicated by utilizing the second display, and thereby the facility of the vehicle traveling on an expressway can be improved. Herein, likewise, the changing of the visual information of the first display at the vehicle traveling on the expressway does not generally happen so often compared to at the vehicle traveling at the low speed or stops, and thus the opportunity of using the operation information indicated by the second display may be fewer at the vehicle expressway traveling state.

According to another embodiment of the present invention, in a case where the first display indicates map information, the second indication control device operative to make the second display indicate map information that is more specific than that indicated by the first display, as the visual information relating to the first display, at a vehicle low-speed traveling state. In general, map information of places relatively near the traveling vehicle at the vehicle traveling at the low speed or stops may be demanded more compared to at the vehicle traveling at the high speed. Thereby, according to the present embodiment, more various information indication can be attained by properly utilizing the second display indicating the more specific map information, thereby improving the facility.

According to another embodiment of the present invention, the second indication control device operative to make the second display indicate the visual information relating to the first display on part of the second display at the vehicle low-speed traveling state. In general, since necessity of changing the indication of the first display at the vehicle traveling at the low speed or stops may increase compared to at the vehicle traveling at the high speed, the opportunity of viewing at the second display indicating the operation information may also increase. Accordingly, by indicating the visual information relating to the first display on part of the second display at the vehicle low-speed traveling state, both the operation information and the visual information can be indicated by the second display. Thus, the facility can be more improved.

According to another embodiment of the present invention, the visual information is displayed on the second display at an area that is on a side closer to a driver. Thereby, it can be easy for the driver to view the visual information of the first display, thereby further improving the facility.

According to another embodiment of the present invention, in a case where the first display indicates map information, the second indication control device operative to make the second display indicate circumference information based on the map information indicated by the first display, as the visual information relating to the first display, at a vehicle urban-area traveling state. Thereby, the more various map information can be indicated by properly utilizing the second display, thereby improving the facility of the vehicle traveling in an urban area.

According to another embodiment of the present invention, the second indication control device operative to make the first display indicate the operation information relating to the second display at a vehicle low-speed traveling state or a vehicle stop state. Although in general the necessity of changing the indication of the first display at the vehicle traveling at the low speed or stops may increase compared to at the vehicle traveling at the high speed, the information relating to the second display is also indicated by the first display in addition to the second display according to the present embodiment. Thus, the information relating to the second display can be indicated more variously, thereby improving the facility.

According to another embodiment of the present invention, the second indication control device operative to make the first display indicate explanation of contents of the operation information indicated by the second display, as the operation information relating to the second display. Thereby, the operation of the operation information of the second display can be executed more smoothly.

According to another embodiment of the present invention, the second indication control device operative to make the first display indicate information that is obtained through a simplification from the operation information indicated by the second display, as the operation information relating to the second display. Thereby, the operation information of the second display can be indicated by the first display without making the indication of the first display complicated.

According to another embodiment of the present invention, the second indication control device operative to make the first display indicate hierarchical operation contents of the operation information indicated by the second display, as the operation information relating to the second display. Thereby, a hierarchical operation to the operation information of the second display can be executed more smoothly.

According to another embodiment of the present invention, the second indication control device operative to make the first display indicate at least part of the operation information indicated by the second display, as the operation information relating to the second display. Thus, the information of the second display can be indicated more variously, thereby improving the facility.

According to another embodiment of the present invention, the indication control by the second indication control device to make the first display indicate the operation information relating to the second display is prohibited while the vehicle is accelerated at the vehicle low-speed traveling state. Thereby, the execution of the indication control can be surely limited to the vehicle low-speed traveling state or the vehicle-stop state, prohibiting the indication control at other vehicle traveling state, for example, the vehicle high-speed traveling state.

According to another embodiment of the present invention, near at a driver's hand is provided an operational device that conducts the operation by the passenger that is conducted to the operation information indicated by the second display, and an icon indication portion that corresponds to operation contents of the operational device is indicated by the first display at the vehicle traveling state. Thereby, since the operational device near at the driver's hand is provided, the operation information indicated by the second display can be executed near at the driver's hand, thereby improving the facility. Also, since there is provided the icon indication portion corresponding to the operation contents of this operational device near at the driver's hand and this icon indication portion is indicated by the first display, the facility can be further improved.

According to another embodiment of the present invention, the indication of the icon indication portion by the first display is stopped at the vehicle stop state. Thereby, since there may be no need for indicating the icon indication portion on the first display because the driver could view the second display carefully when the vehicle stops, the complicated indication on the first display can be properly avoided by stopping the indication.

According to another embodiment of the present invention, the first display is provided at a location where a driver can view the first display with a relatively-short movement of driver's eyes during a vehicle driving, and the second display is provided at another location, which is closer to the driver than the first display, where a relatively long movement of driver's eyes is necessary to view the second display during the vehicle driving. Thereby, since the indication state of the information of the first display can be controlled based on the operation information indicated by the second display located nearer the driver, the operability of the indication control of the first display can be improved. Also, since the first display the first display is provided at the location where the driver can view the first display with the relatively-short movement of driver's eyes, the proper visibility can be provided.

According to another embodiment of the present invention, there is provided a warning device operative to warn the passenger when the indication control by the second indication control device is executed. Thereby, since the passenger is warned at the indication control, the facility can be improved.

According to another embodiment of the present invention, there is provided a setting device operative to set contents of the indication control by the second indication control device. Thereby, since the contents of the indication control is set according to the passenger's will, the facility can be improved further.

According to another embodiment of the present invention, the first display is configured to be larger than the second display. Thereby, the visibility of the first display can be improved.

According to another embodiment of the present invention, the second display is configured such that a vertical center line of the second display is inclined toward a driver's seat. Thereby, the driver can view the second display easily.

According to the present invention, the second indication control device operative to make the first display indicate the operation information and/or make the second display indicate the visual information according to the operation of the passenger. Thereby, since the first display is made indicate the operation information and/or the second display is made indicate the visual information according to the passenger's operation by the second indication control device, two indication devices can be utilized variously and thereby the facility can be improved.

According to another embodiment of the present invention, the second indication control device operative to make the first display indicate the operation information relating to the second display according to the operation of the passenger on the second display. Thereby, since the operation information relating to the second display is indicated by the first display in addition to the second display, the operation information relating to the second display can be indicated more variously, thereby improving the facility.

According to another embodiment of the present invention, the second indication control device operative to make the first display indicate explanation of contents of the operation information indicated by the second display as the operation information relating to the second display when the passenger executes the operation that is conducted to the operation information indicated by the second display. Thereby, since the contents explanation of the operation information of the second display is indicated by the first display as the operation information relating to the second display, the operation to the operation information of the second display can be executed more smoothly.

According to another embodiment of the present invention, the second indication control device operative to make the first display indicate information that is obtained through a simplification from the operation information indicated by the second display as the operation information relating to the second display when the passenger executes the operation that is conducted to the operation information indicated by the second display. Thereby, since the operation information of the second display is indicated through the simplification by the first display, the indication of the operation information on the first display can be simplified.

According to another embodiment of the present invention, the second indication control device operative to make the first display indicate hierarchical operation contents of the operation information indicated by the second display as the operation information relating to the second display when the passenger executes the operation that is conducted to the operation information indicated by the second display. Thereby, since the hierarchical operation contents of the operation information of the second display is indicated by the first display, the hierarchical operation to the operation information of the second display can be executed more smoothly.

According to another embodiment of the present invention, the second indication control device operative to make the first display indicate destination-related information when the passenger executes an operation for setting destination of vehicle traveling. Thereby, the facility at the operation of setting the destination can be improved.

According to another embodiment of the present invention, the destination-related information indicated by the first display is shown so as to at least partly overlap with or being overlaid (preferably in a at least partly transparent manner) on map information indicated by the first display. Thereby, the destination setting operation can be executed smoothly with the improved facility.

According to another embodiment of the present invention, the map information indicated by the first display is changed according to the destination-related information. Thereby, the facility of the destination setting operation can be improved further.

According to another embodiment of the present invention, the second indication control device operative to make the first display indicate searched information when the passenger executes an operation for information search. Thereby, the operation for the information search can be facilitated.

According to another embodiment of the present invention, the second indication control device operative to make the first display indicate future-prediction information of searched traffic-congestion information that is indicated by the second display when the passenger executes an operation for traffic-congestion information search. Thereby, both the current traffic-congestion information and the future-prediction traffic-congestion information can be provided, and thus the facility can be improved greatly.

According to another embodiment of the present invention, future time for prediction of the future-prediction information is controllable. Thereby, the future-prediction information at any time can be obtained, thereby further improving the facility.

According to another embodiment of the present invention, the second indication control device operative to make the first display indicate at least part of the operation information when the passenger executes an operation in which the operation information increases. Thereby, it can be properly avoided that the amount of information indicated by the second display would become too much, and a smooth operation can be provided.

According to another embodiment of the present invention, low-priority operation information is indicated by the first display. Thereby, since the high-priority operation information is indicated by the second display, the facility can be improved.

According to another embodiment of the present invention, when the passenger executes an operation for scrolling the operation information, the second indication control device operative to make the first display indicate at least part of deleted information through the scrolling operation. Thereby, since the deleted operation information by scrolling is still indicated by the first display, the passenger can obtain those information with the first display without operation to return the scrolling. Thus, the facility of the scrolling operation can be improved.

According to the present invention, the second indication control device operative to make the second display indicate the visual information relating to the first display according to the operation of the passenger on the first display. Thereby, since the visual information relating to the first display can be indicated more variously, thereby improving the facility.

According to another embodiment of the present invention, when the passenger executes an operation for map information, the second indication control device operative to make the second display indicate the map information that is indicated by the first display. Thereby, the facility at the map-information viewing can be improved.

According to another embodiment of the present invention, when the passenger executes an operation for scrolling map information, the second indication control device operative to make the second display indicate map information that shows a larger map area than that indicated by the first display, as the visual information relating to the first display. Thereby, the more various indication of the map information can be obtained by utilizing the second display, thereby improving the facility.

According to the present invention, when the passenger executes an operation for changing scale of map information, the second indication control device operative to make the second display indicate map information that is indicated by the first display, the map information indicated by the second display being old map information whose scale has not changed. Thereby, since both map information before the scale changing and after the scale changing are indicated at the same time, the both information can be compared with each other, thereby further improving the facility.

According to the present invention, when the passenger executes an operation for changing scale of map information, the second indication control device operative to make the second display indicate map information that is indicated by the first display, the map information indicated by the second display having a scale that is reverse to the scale of map information indicated by the first display. Thereby, since both map information with the scale changing and the reverse-scale changing are indicated at the same time, the both information can be compared with each other, thereby further improving the facility.

According to another embodiment of the present invention, the reverse scale of the map information that is indicated by the second display is restricted within a specified range. Thereby, it can be properly prevented that the above-described comparison of the both map information with the scale changing and the reverse-scale changing would become difficult due to a too-large difference in the scale.

According to the present invention, the second indication control device operative to make the second display indicate information relating to camera-image information that is indicated by the first display. Thereby, the visual information relating to the camera-image information can be indicated more variously, thereby improving the facility.

According to another embodiment of the present invention, when the passenger executes an operation of the visual information, the second indication control device operative to make the second display indicate visual information for confirmation relating to the operation by the passenger for a specified time. Thereby, the confirmation of the visual information can be facilitated, thereby improving the facility. Herein, since the indication of the visual information for confirmation by the second display is limited to the specified time, the original indication by the second display may not be deteriorated.

According to another embodiment of the present invention, when the passenger executes an operation in which the visual information indicated by the first display increases, the second indication control device operative to make the second display indicate at least part of the visual information. Thereby, it can be properly prevented that the indication of the first display would become too complicated, and thus the proper visibility of the first display can be obtained.

According to another embodiment of the present invention, low-priority visual information is indicated by the second display. Thereby, since the high-priority visual information is not indicated by the second display, the proper indication can be provided.

According to another embodiment of the present invention, when the passenger executes an operation for scrolling the visual information, the second indication control device operative to make the second display indicate at least part of deleted information through the scrolling operation. Thereby, since the deleted visual information by the scrolling and the visual information after the scrolling are indicated at the same time, the both information can be compared with each other, thereby improving the facility at the scrolling.

According to another embodiment of the present invention, the first display is provided at a location where a driver can view the first display with a relatively-short movement of driver's eyes during a vehicle driving, and the second display is provided at another location, which is closer to the driver than the first display, where a relatively long movement of driver's eyes is necessary to view the second display during the vehicle driving. Thereby, since the indication state of the information of the first display can be controlled based on the operation information indicated by the second display located nearer the driver, the operability of the indication control of the first display can be improved. Also, since the first display is provided at the location where the driver can view the first display with the relatively-short movement of driver's eyes, the proper visibility can be provided.

According to another embodiment of the present invention, there is provided a switch for controlling the second indication control device. Thereby, the indication control by the second indication control device can be easily executed by operating the switch according to the passenger's will.

According to another embodiment of the present invention, the switch is indicated by the second display. Thereby, since the switch is indicated by the second display that is closer to the driver than the first display, the proper operation can be provided by the switch.

According to another embodiment of the present invention, the visual information indicated by the second display with the second indication control device is different from the visual information indicated by the first display in an indication manner. Thereby, more various information can be used.

According to another embodiment of the present invention, the operation information indicated by the first display with the second indication control device is different from the operation information indicated by the second display in an indication manner. Thereby, more various information can be used.

According to another embodiment of the present invention, near at a driver's hand is provided an operational device that conducts the operation by the passenger that is conducted to the operation information indicated by the second display, and an icon indication portion that corresponds to operation contents of the operational device is indicated by the first display when the operation device is operated. Thereby, the facility can be further improved.

According to another embodiment of the present invention, there is provided another operational device to operate the visual information indicated by the first display. Thereby, the operation of the visual information to be indicated by the first display can be executed by this another operational device, the facility can be improved.

According to another embodiment of the present invention, when the visual information indicated by the first display is operated by the operational device, the first display is configured to be operated only by the operational device. Thereby, the indication control of the first display can be properly prevented from becoming toomuch complicated.

According to another embodiment of the present invention, when the visual information indicated by the first display is operated by the operational device, the visual information indicated by the first display is indicated by the second display, whereby the visual information indicated can be operated. Thereby, the visual information can be indicated variously, thereby further improving the facility.

According to another embodiment of the present invention, when the first display is out of order, the visual information indicated by the first display is indicated by the second display, whereby the visual information indicated can be operated. Thereby, availability and facility of the visual information at the out-of-order condition of the first display can be ensured.

According to another embodiment of the present invention, when the second display is out of order, the visual information indicated by the first display can be operated by the operational device. Thereby, the operation of the visual information at the out-of-order condition of the second display can be ensured.

According to another embodiment of the present invention, there is provided a warning device operative to warn the driver when the indication control by the second indication control device is executed. Thereby, the facility can be further improved.

According to another embodiment of the present invention, there is provided a setting device operative to set contents of the indication control by the second indication control device. Thereby, the facility can be further improved.

According to another embodiment of the present invention, the first display is configured to be larger than the second display. Thereby, the visibility of the first display can be further improved.

According to another embodiment of the present invention, the second display is configured such that a vertical center line of the second display is inclined toward a driver's seat. Thereby, the driver can view the second display easily.

According to the present invention, there is further provided an information indication method for a vehicle comprising an information device, in particular according to the invention or a preferred embodiment thereof, comprising at least one first indication device with a first display, the first display indicating at least visual information and at least one second indication device with a second display, the second display indicating at least operation information for operating the visual information indicated by the first display, the method comprising the following steps:
detecting an operation by a passenger that is conducted to the operation information indicated by the second display by means of an operation detecting device provided at or in connection with the second indication device;
generating at least one operation signal by means of an operation signal generating device based on the operation information indicated by the second display and a detecting signal of the operation detecting device;
controlling an indication state of the information on the first display based on the operation signal generated by the operation signal generating device; and
operating the second indication control device so as to make the first display indicate the operation information and/or make the second display indicate the visual information according to the operation of the passenger; and
operating the second indication control device so as to make the second display indicate the visual information relating to the first display according to the operation of the passenger on the first display;
wherein when the passenger executes an operation for changing scale of map information, operating the second indication control device so as to make the second display indicate map information that is indicated by the first display, the map information indicated by the second display being old map information whose scale has not changed or having a scale that is reverse to the scale of map information indicated by the first display or relating to camera-image information that is indicated by the first display.

According to the present invention, there is further provided a computer program product, in particular embodied in a computer-readable storage medium or as a signal, comprising computer-readable instructions which, when loaded and executed on a suitable system perform an information indication method for a vehicle according to the invention or a preferred embodiment thereof.

Other features, aspects, and advantages of the present invention will become apparent from the following description which refers to the accompanying drawings. It should be understood that even though embodiments are separately described, single features thereof may be combined to additional embodiments.
FIG. 1 is an explanatory elevation view schematically showing a cabin front portion of an automotive vehicle according to an embodiment of the present invention.
FIG. 2 is an explanatory plan view of a switch provided at a steering wheel of the automotive vehicle.
FIG. 3 is an explanatory plan view schematically showing a vehicle front portion of the automotive vehicle.
FIG. 4 is a block diagram schematically showing constitution of an information indication system for a vehicle of the automotive vehicle.
FIG. 5 is an explanatory view showing an indication example of a first display.
FIG. 6 is an explanatory view showing an indication example of a second display.
FIGS. 7A, 7B are explanatory views of the first and second displays showing an indication control to make the first display indicate an icon indication portion at a vehicle traveling state.
FIG. 8 is a flowchart of the indication control of FIGS. 7A, 7B.
FIGS. 9A, 9B are explanatory views of the first and second displays showing an indication control to make the second display indicate information relating to the first display at a vehicle high-speed traveling state.
FIGS. 10A, 10B are explanatory views of the first and second displays showing an indication control to make the second display indicate information relating to the first display at a vehicle expressway traveling state.
FIGS. 11A, 11B are explanatory views of the first and second displays showing an indication control to make the second display indicate information relating to the first display at a vehicle low-speed traveling state.
FIGS. 12A, 12B are explanatory views of the first and second displays showing an indication control to make the first display indicate information relating to the second display at the vehicle low-speed traveling state.
FIGS. 13A, 13B are explanatory views of the first and second displays showing an indication control to make the first display indicate explanation of contents of an operational switch of the second display at the vehicle low-speed traveling state or a vehicle stop state.
FIGS. 14A, 14B are explanatory views of the first and second displays showing an indication control to make the first display indicate hierarchical operation contents of the operational switch of the second display at the vehicle low-speed traveling state or the vehicle stop state.
FIGS. 15A, 15B are explanatory views of the second display showing setting operation of contents of an indication control by an assist control portion.
FIGS. 16A, 16B are explanatory diagrams showing an example of size and layout of the first and second displays.
FIGS. 17A, 17B, 17C are explanatory diagrams showing another example of size and layout of the first and second displays.
FIGS. 18A, 18B are explanatory views of the first and second displays showing an indication control to make the first display indicate explanation of contents of the operational switch of the second display when the operation is conducted to the second display.
FIG. 19 is a flowchart of the indication control of FIGS. 18A, 18B.
FIGS. 20A, 20B are explanatory views of the first and second displays showing an indication control to make the first display indicate information that is obtained through a simplification from the operation information of the second display when the operation is conducted to the second display.
FIGS. 21 A, 21 B are explanatory views of the first and second displays showing an indication control to make the first display indicate hierarchical operation contents of the operational switch of the second display when the operation is conducted to the second display.
FIGS. 22A, 22B are explanatory views of the first and second displays showing an indication control to make the first display indicate destination-related information when the operation for setting destination of vehicle traveling is conducted to the second display.
FIGS. 23A, 23B are explanatory views of the first and second displays showing an indication control to change the map information according to the destination-related information when the operation for setting destination of vehicle traveling is conducted to the second display.
FIGS. 24A, 24B are explanatory views of the first and second displays showing an indication control to make the first display indicate searched information when the operation for information search is conducted to the second display.
FIGS. 25A, 25B are explanatory views of the first and second displays showing an indication control to make the first display indicate future-prediction information of searched traffic-congestion information when the operation for traffic-congestion information search is conducted to the second display.
FIGS. 26A, 26B are explanatory views of the first and second displays showing an indication control to make the first display indicate at least part of operation information when an operation in which operation information increases is conducted.
FIGS. 27A - 27C are explanatory views of the first and second displays showing an indication control to make the first display indicate at least part of deleted information through scrolling operation when the scrolling operation of the operation information is conducted to the second display.
FIGS. 28A - 28D are explanatory views explaining an indication control to make the second display indicate first-display related information when the scrolling operation of the map information is conducted to the first display.
FIGS. 29A - 29D are explanatory views explaining an indication control to make the second display indicate first-display related information when scale changing operation of the map information of the first display is conducted.
FIGS. 30A , 30B are explanatory views explaining an indication control to make the second display indicate information relating to camera-image information of the first display when indication operation of the camera image of the first display is conducted.
FIG. 31 is an explanatory view explaining another indication control to make the second display indicate the visual information relating to the camera-image information indicated by the first display.
FIGS. 32A, 328B are explanatory views of the first and second displays showing an indication control to make the first display indicate an icon indication portion when a switch at hand is operated.
FIG. 33 is a flowchart of the indication control of FIGS. 32A, 32B.
FIGS. 34A, 34B are explanatory views of the first and second displays showing an indication control to make the first display indicate the icon indication portion of the second display when the switch at hand is operated.
FIGS. 35A, 35B are explanatory views of the first and second displays showing an indication control to make the second display indicate first-display related information when an assist switch is operated.
FIGS. 36A, 36B are explanatory views of the first and second displays showing an indication control to make the first display indicate second-display related information when the assist switch is operated.
FIGS. 37A, 37B are explanatory views of the first and second displays showing an indication control to conduct an operation to visual information indicated by the first display according to an operation of remote control.
FIGS. 38A, 38B are explanatory views of the first and second displays showing an indication control to conduct an operation to visual information indicated by the first display according to an operation of an independent switch.
FIGS. 39A, 39B are explanatory views of the first and second displays showing an indication control to make the second display indicate the visual information of the first display when the first display is out of order.
FIGS. 40A, 40B are explanatory views of the first and second displays showing an indication control to make the first display indicate the visual information of the second display when the second display is out of order.

Hereinafter, preferred embodiments of an information indication device for a vehicle according to the present invention will be described referring to the accompanying drawings. It should be understood that even though embodiments are separately described, single features may be combined to additional embodiments.

### EMBODIMENT 1

Hereinafter, an embodiment in which a first display indicates operation information as a second-display related information and a second display indicates visual information as a first-display related information according to a vehicle traveling state primarily will be described.

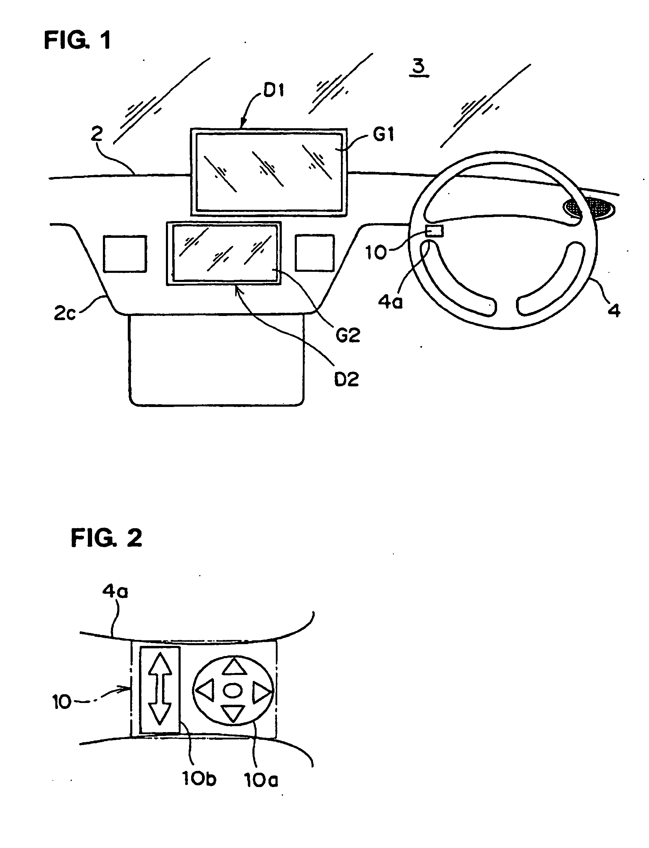

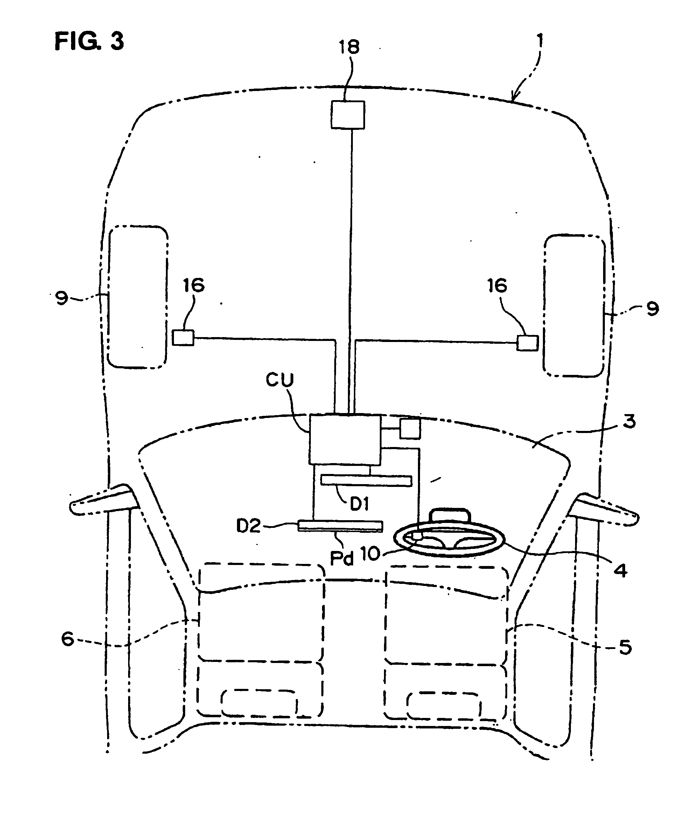

FIG. 1 is an explanatory elevation view schematically showing a cabin front portion of an automotive vehicle according to an embodiment of the present invention. FIG. 2 is an explanatory view of a steering-wheel operational key which will be described. FIG. 3 is an explanatory plan view schematically showing a vehicle front portion of the automotive vehicle. At a front of a cabin of an automotive vehicle 1, as shown in FIG. 1, is provided an instrument panel 2 to at least partly cover a front lower portion of the cabin, and substantially above the instrument panel 2 is provided a windshield 3 to at least partly cover a front upper portion of the cabin. A front edge of the instrument panel 2 preferably is located near a lower edge of the windshield 3. At a central or intermediate portion of the instrument panel 2 is provided a center or intermediate console portion 2c, and a driver' seat 5 (see FIG. 3) is provided at the lateral side (e.g. right) of the center or intermediate console portion 2c and a steering heel 4 is provided at the front of the driver's seat 5.

In the present embodiment, there are provided at least first and second monitors D1, D2 as an indication device to indicate or display information on a display. These monitors D1, D2 are, for example, a type of liquid crystal, which are attached to the instrument panel 2. The first display D1 preferably is basically to indicate visual information that a passenger (such as a driver, a driver's assistant, a front passenger, a rear passenger or the like) wants to view. For example, map information of a navigation system or an image of a television receiver, DVD player or the like is an example of such visual information.

Meanwhile, the second monitor D2 preferably is basically to indicate operation information for operating (or controlling or influencing or modifying or executing) indication on an indication display G1 (first display) of the first monitor D1. For example, an image of an operational button or switch or operational scroll bar (such as a linear control button or slider) or the like are an example of such operation information. At the second monitor D2 is provided a so-called touch panel type of position detection panel Pd as an operation detecting device operative to detect an operation position of the operation by the passenger that is conducted to the operation information indicated by the display G2 (second display). The touch panel type of position detection panel Pd, which is conventional, is disposed adjacent to the second display G2 (preferably at least partly at a front face of the second display G2), and the operation position of the operation by the passenger (e.g. with a finger touched on the display) can be detected preferably in an untouched manner.

The first monitor D1 is located at a relatively front portion of the cabin, which is adjacent to or substantially above the instrument panel 2 and/or near the windshield 3. Accordingly, the passenger (e.g. a driver, not illustrated) seated in the driver's seat can view the first display G1 with a relatively-short movement of driver's eyes from a front view through the windshield 3 during a vehicle driving. Thus, when viewing at the first display G1, the driver would not need to move the eyes so much, thereby properly lightening a burden of the driver properly. As a result, a safe driving can be ensured.

Meanwhile, the second monitor D2 preferably is substantially located at a position (preferably at a relatively lower portion of the cabin), which is closer to the driver's seat 5 than the first monitor D1, as shown in FIG. 3. Accordingly, the passenger may view the second display G2 with a relatively-long movement of driver's eyes from the front view through the windshield 3 during the vehicle driving, compared with viewing at the first display G1. However, since the second display G2 is located at a closer position to the driver, the operation by the passenger can be made easier. As a result, since the indication state on the first display G1 is controlled based on the operation indication indicated by the second display G2 near to the driver, the operability of the indication control of the first display G1 can be improved.

As described above, the indication function of the monitor is set to be different from each other in the first and second monitors D1, D2, i.e., the first monitor D1 for indicating the visual information, and the second monitor D2 for indicating the operation information. Accordingly, the operation of the indication control of the first display G1 of the first monitor D1 can be executed based on the operation information of the second monitor D2 without any improper influence on the visibility of the visual information of the first monitor D1. Namely, both the visibility and the operability can be improved. Particularly, since the first display G1 of the first monitor D1 that is relatively far away from the driver's seat 5 indicates the visual information and the second display G2 of the second monitor D2 that is relatively near the driver's seat 5 indicates the operation information, both the visibility and the operability can be surely improved.

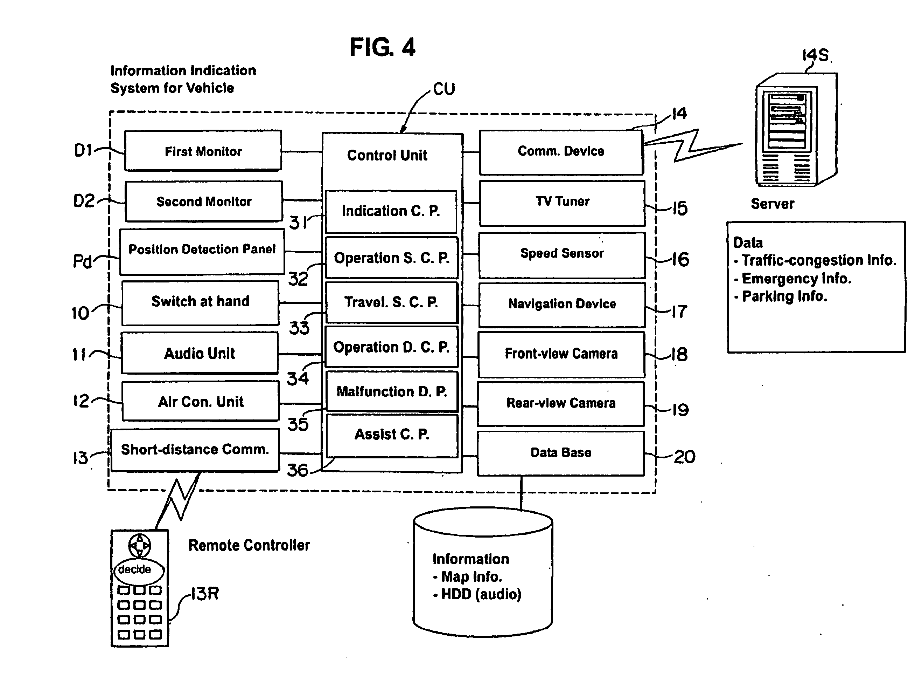

The first monitor D1, second monitor D2 and position detection panel Pd are operationally coupled to a control unit CU for indication control, which may be disposed in the instrument panel 2. The control unit CU may be mainly comprised of a microcomputer. FIG. 4 is a block diagram schematically showing constitution of an information indication system for a vehicle that comprises the control unit CU.

As shown in FIG. 4, to the control unit CU are operationally coupled, in addition to the first and second monitors D1, D2 and the position detection panel Pd to at least one of the following devices: a switch 10, an audio unit 11, an air heating and/or conditioning unit 12, a short-distance communication device 13, a communication between vehicle and road 14, a television (TV) tuner or DVD player 15, a vehicle-wheel rotational speed sensor 16, a navigation device 17, a front-view camera 18, a rear-view camera 19 and a data base 20.

The switch 10, as shown in FIGS. 1 and 2, which is provided at the steering wheel 4, for example, at a steering spoke portion 4a, may comprise one or more, e.g. two operational keys 10a and 10b and can conduct its operation to an icon indication portion 41, which will be described below, by operating these keys 10a, 10b properly. In the present embodiment, operations of device that are often used, such as the audio unit 11 and the air heating and/or conditioning unit 12, preferably are executed by the switch 10. Thus, since the operations of switch and button are conducted by the switch 10 that is provided near at driver's hand particularly on the steering wheel 4, the facility or operability can be improved.

The short-distance commutation device 13, which executes a wireless communication in a short-distance range (such as via infrared electromagnetic waves), can conduct an operation to the visual information indicated by the first display G1 by operating, for example, a remote controller 13R. For example, communication with another vehicle traveling nearby, so-called communication between vehicles, can be executed. Thereby, changing information between vehicles traveling in a traffic congestion state preferably can be executed. Herein, in the present embodiment, the device 13 (remote controller) may be used as another operational device (different from the second monitor D2) that can operate the visual information indicated by the first display G1. The communication device between vehicle and road 14 is to execute a wireless communication with a receiving and/or transmitting antenna that is provided at a traveling road (such as at a side thereof, on a bridge or gate bridging the road or the like). Thereby, traveling vehicles can obtain various information data such as on traffic congestion, emergency, parking or the like from a server 14S of an (preferably internet-based) system via the antenna. The above communication between vehicle and road and communication between vehicles are conventional.

The vehicle-wheel rotational speed sensor 16 is a sensor to detect a rotational speed of a vehicle wheel 9 (see FIG. 3) and/or of an engine as well known, by which a traveling speed of the vehicle 1 can be (directly or indirectly) detected or determined. The navigation system 17 detects a vehicle traveling position and/or speed and preferably indicates its position on a map by using a so-called GPS system or similar such as Galileo, which is well known.

The cameras 18 and 19 are ones, which preferably may be made of an infrared camera, get images of the front and the rear of the traveling vehicle 1, respectively, and indicate those mainly on the first display G1. For example, the front-view camera 18 is provided near at a front end of the vehicle as shown in FIG. 3. The data base 20 may store data of map information for the navigation system 17 and comprise a hard disk and/or memory and the like which are used for the audio unit 11.

Meanwhile, the control unit CU comprises one or more control elements, such as an indication control portion 31, an operational signal control portion 32, a traveling-state determining portion 33, an operation determining portion 34, a malfunction determining portion 35 and/or an assist control portion 36. When the operation by the passenger (e.g. with the finger or the like) is conducted to the second display G2, the operational signal control portion 32 generates an operational signal according to its operation position based on the position detecting panel Pd and the operation information indicated by the second display G2 of the second monitor D2, and outputs the operational signal to the indication control portion 31.

The indication control portion 31 controls at least part of the indication state of the information indicated by the first display G1 based on the operational signal from the operational signal control portion 32. The traveling-state determining portion 33 determines the traveling state of the vehicle 1 preferably based on the vehicle traveling speed according to the detecting signal from the speed sensor 16, such as a high-speed state (e.g., about 40 km/h or higher), a low-speed state (e.g., about 30 km/h or lower), or a vehicle stop state. However, the traveling state may be determined by the traveling-state determining portion 33 based on other information or signals such as from the navigation system 17 e.g. showing that a position is changing and/or detecting a speed of the vehicle 1, or from a sensor detecting the switch state of an automatic gear (e.g. that the automatic gear is switched to "R" or "D" driving state for a traveling state or switched to "P" state for a stop state) or by detecting a rotational speed of the engine and/or an operation amount of a brake or the like). Determination as to whether the vehicle 1 travels on a specific (predetermined or predeterminable) traveling area (such as an expressway or in an urban area or a parking lot or the like) may be also made according to data of the traveling position and/or map information from the navigation system 17 and/or based on the information of the communication device between vehicle and road 14.

The operation determining portion 34 determines, based on the position detecting panel Pd and the operation information indicated by the second display G2 of the second monitor D2, whether or not the operation by the passenger (e.g. with the finger or the like) is conducted to or by means of the second display G2, and when the operation is conducted, it determines the operational switch according to its operation position. The malfunction determining portion 35 determines whether or not at least one of the monitors D1, D2 is out of order.

The assist control portion 36 executes, according to the traveling state of the vehicle 1, the indication control to make the first display G1 indicate information relating to the second display G2 and make the second display G2 indicate information relating to the first display G1. Namely, as described above, basically the first display G1 indicates the visual information such as the map information that the passenger (such as the driver) wants to view, and the second display G2 indicates the operation information to operate the indication on the first display G1, such as images of the operational button or switch. However, the above assist control portion 36 can make the first display G1 indicate the information relating to the second display (operation information or its related information) and make the second display G2 indicate the information relating to the first display (visual information or its related information) in a certain traveling state of the vehicle 1. In other words, by operating the assist control portion 36 one may invert or switch the functions of the first and second displays G1, G2 to selectively display operation on the first display G1 and visual information on the second display G2 or alternatively visual information of the first display G1 and operation information on the second display G2, respectively. For this purposes, the first display G1 may be configured as a touch panel display similar to the second display G2.

Thus, by providing the assist control portion 36, making the first display G1 indicate the operation related information and making the second display G2 indicate the visual related information can be executed according to the vehicle traveling state, improving both the visibility and the operation by the first display G1 for the visual information located relatively away from the driver and the second display G2 for the operation information located relatively close to the driver. Accordingly, two indication devices G1, G2 can be used more variously, thereby improving the facility.

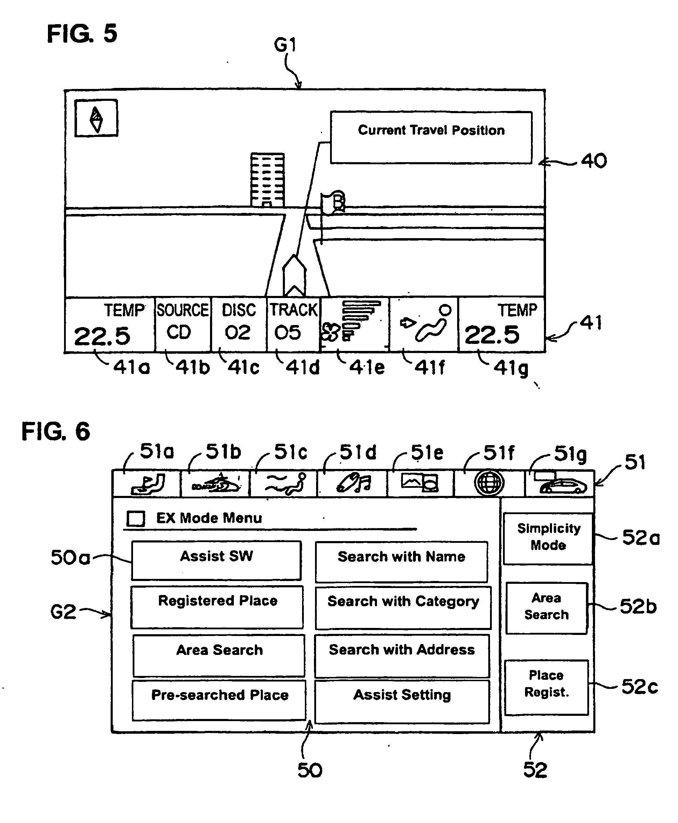

FIGS. 5 and 6 are explanatory views showing indication examples of the first and second displays G1 and G2, respectively. The first display G1, as shown in FIG. 5, basically indicates map information including a traveling position of the vehicle 1 by using the map information data of the navigation system 17 and the data base 20, as the visual information that the passenger wants to view. According to the example of FIG. 5, an icon indication portion 41 for operations of one or more units such as of the audio unit 11 and the air heating and/or conditioning unit 12 that are operated by the switch 10 near at the driver's hand, which may be used at relatively many times, is disposed at an edge portion such as a lower end portion of the first display G1. The rest of the first display may form part of a main indication portion 40.

The icon indication portion 41 indicates a source icon 41 b for showing the kind of sounds such as CD, MD, TV, HDD, a disc icon 41c for identifying the disc number in a disc changer or HDD, and a track icon 41 d for identifying the track number of a particular disc, which are examples of the operation icon of the audio unit 11. Also, the icon indication portion 41 indicates a measured-temperature icon 41 a for showing a measured temperature (such as of a temperature inside the vehicle cabin), a set-temperature icon 41 g for showing a set temperature, an air-flow amount icon 41 e for showing an amount of air flow, and an air-direction icon 41f for showing a direction of air flow, which are examples of the operation icon of the air heating and/or conditioning unit 12.

The above icon indication portion 41 is indicated by the first display G1 when the switch 10 is operated and the vehicle 1 preferably is in the traveling state. Thereby, since the operation contents are display according to the operation of the switch at the vehicle traveling state, the facility can be improved.

The second display G2, as shown in FIG. 6, basically indicates one or more images of operation icons, buttons, switches and the like as the operation information for operating the indication by the first display G1. FIG. 6 shows a standard mode selection indication image for a mode menu selection. An icon indication portion 51 to indicate one or more operation icons for operating various devices and systems is provided at a portion (preferably an upper end portion) of the second display G2. The icon indication portion 51 indicates a navigation icon 51a for the navigation device 17, a traveling icon 51b for showing useful traveling information (such as traffic information or parking information), an air conditioning icon 51 c for the air heating and/or conditioning unit 12, an audio icon 51 d for the audio unit, a telephone icon 51 e for a car telephone (or a cellular phone connected thereto e.g. by means of bluetooth) and/or email or SMS-messaging, an internet icon 51f for an internet communication, and/or a support icon 51g for support menus of services such as oil exchanging timing, car inspection timing, failure warnings etc..

At another portion (such as a lateral (e.g. right) end portion) of the second display G2 is provided a normal-use indication portion 52 for normally indicating one or more switches that may be used often. At this indication portion 52 is provided, for example, a simplicity mode button 52a, a surrounding-area searching button 52b, and/or a location-name (place) registration button 52c for the navigation device 17 that may be used very often.

Herein, the rest of the indication area except the icon indication portion 51 and the normal-use indication portion 52 may form part of the main indication portion 50. One or more operational switches providing mode menus are indicated at this main indication portion 50. An assist switch 50a for the assist mode to operate the assist control portion 36 is also indicated on the main indication portion 50.

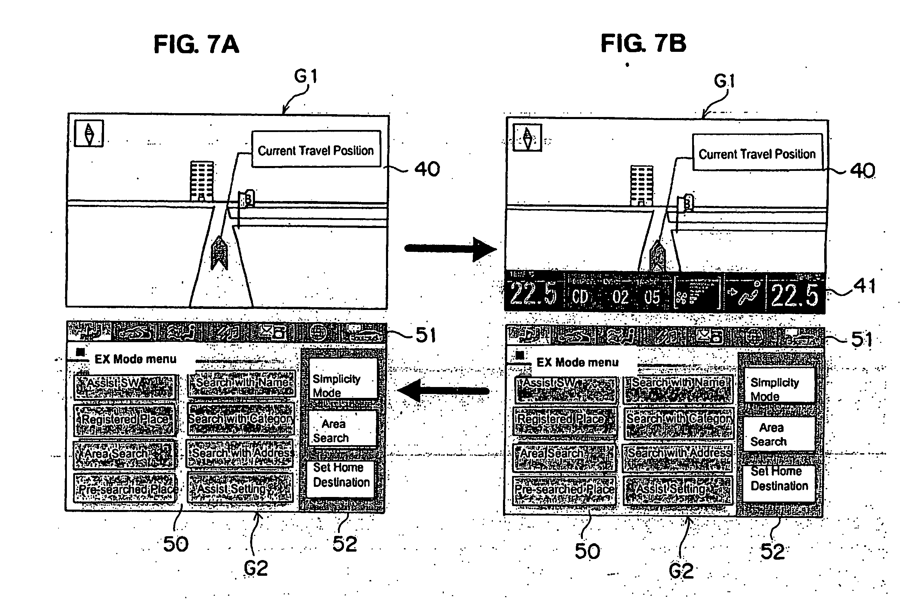

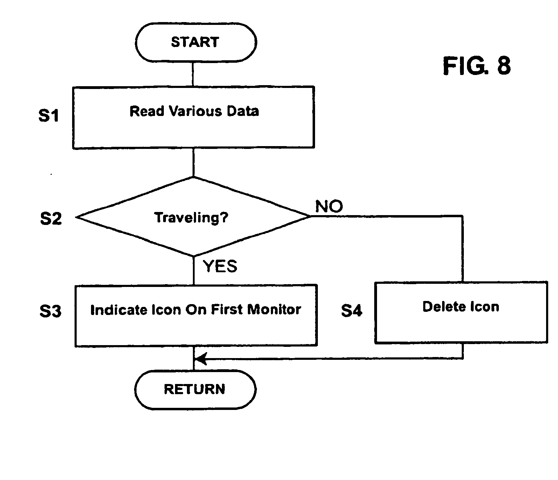

Next, examples of the indication control of the first and second displays G1, G2 by the assist control portion 36 will be described. FIGS. 7A, 7B are explanatory views of the first and second displays G1, G2 showing the indication control to make the first display G1 indicate the icon indication portion 41 corresponding to the operational contents of the switch 10 at the vehicle traveling state. FIG. 8 is a flowchart of the indication control of FIGS. 7A, 7B. When the vehicle 1 is in a non-traveling state like the stop state, as shown in FIG. 7A, the first display G1 indicates only the map information and preferably does not indicate the icon indication portion 41. Thus, the entire indication area may substantially constitute the main indication portion 40. However, when the vehicle 1 starts traveling at an ON operation of the assist switch 50a (i.e., at the assist mode state), the icon indication portion 41 is indicated by the first display G1 as shown in FIG. 7B.

The indication control will be described referring to the flowchart of FIG. 8. After the system start, various data are read in step S1, and it is determined by the traveling-state determining portion 33 whether the vehicle is in the traveling state or not. When the answer is YES, the icon indication portion 41 is indicated by the first display G1 (step S3). When the answer is NO in the step S2, the icon indication portion 41 is not indicated by the first display G1, or in a case where it is already indicated, the indication is deleted (step S4).

Since the driver may view the second display G2 sufficiently at the vehicle stop state, it may not be necessary to indicate the icon indication portion 41 on the first display G1. Accordingly, the indication on the first display G1 can be prevented from improperly becoming complicated, without indicating it at the vehicle stop state. Herein, the icon indication portion 41 may be indicated by the second display G2 at the vehicle stop state and may be indicated by the first display G1 at the vehicle traveling state. In this case, the indication on the first display G1 can be prevented from improperly becoming complicated, and the icon indication portion 41 is remained indicated. Thereby, the icon indication portion 41 can be operated at any time, and the facility or operability or readability of the displays G1, G2 can be improved.

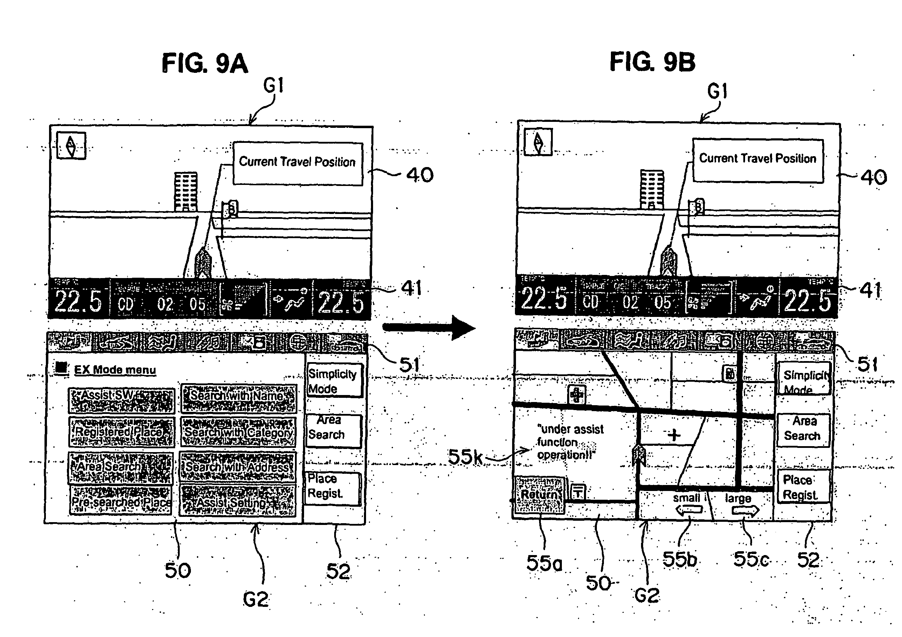

FIGS. 9A, 9B are explanatory views of the first and second displays G1, G2 showing an indication control to make the second display G2 indicate information relating to the first display (visual information or the related information) at a vehicle high-speed traveling state. It is determined by the traveling-state determining portion 33 whether or not the vehicle is in a high-speed traveling state, i.e, whether the vehicle 1 travels at a specified (predetermined or predeterminable) speed or more. When the vehicle 1 is not in the high-speed traveling state, the first display G1 indicates the map information and the icon indication portion 41 as shown in FIG. 9A and the second display G2 indicates the standard mode selection indication image as shown in FIG. 6.

When the vehicle high-speed traveling state is determined, as shown in FIG. 9B, part of the second display G2 (herein, the main indication portion 50) at least partly indicates a second map information that is different from the map information indicated by the first display G1 in an indication manner as the first-display related information (the visual information relating to the first display). In this particular case, the map information indicated by the second display G2 as the second map information shows a larger map area than that indicated by the first display G1.

Thus, since the second display G2 at least partly indicates the visual information relating to the first display G1 according to the traveling state of the vehicle 1, the more various information can be indicated by the second display G2, thereby improving the facility or operability or readability. In general, changing of the indication of the first display G1 at the vehicle traveling at the high speed does not happen so often compared to at the vehicle traveling at the low speed or stops. Thus, opportunity of using the operation information indicated by the second display G2 may be fewer at the vehicle high-speed traveling state. Herein, by making the second display G2 at least partly indicate the first-display related information, the more various information can be indicated by the second display G2, thereby improving the facility or operability or readability further.

Also, by making the second display G2 preferably indicate the second map information that is at least partly different from the map information indicated by the first display G1 in the indication manner as the visual information relating to the first display G1, the more various map information can be utilized. Specifically, the second display G2 preferably is made to indicate the second map information that shows a larger map area (or a map having a different scale or resolution or a map having a different viewing mode such as planar map view, 3D map view, perspective view including buildings, etc.) than that indicated by the first display G1. In other words, the second display G2 may display at least part of the information displayed in the first display G1 in a different format or display mode and/or may additionally display visual information not displayed on the first display G1. Accordingly, since the first display G1 indicates the relatively specific map information and the second display G2 indicates the map information with the enlarged map area, various map information with a combination of the first and second displays G1, G2 can be indicated, thereby improving the facility or operability or readability further.

On the map information of the second display G2 at the vehicle high-speed traveling state are provided a return button 55a operative to return to an original indication particularly without indicating the map information (see FIG. 9A), a scale-down button 55b operative to indicate the map information with a down scale, an enlargement button 55c operative to indicate the map information with an enlarged scale, and/or a warning indication portion 55k operative to show a warning of "under assist function operation!!" as a warning device for warning the passenger that the indication control by the assist control portion 36 according to the vehicle traveling state is under execution. Accordingly, the execution of the indication control by the assist control portion 36 can be warned the passenger by the warning indication portion 55k, thereby improving the facility further.

Herein, the map information, not specifically illustrated, that shows an enlarged map area that is located adjacent to or substantially in front of the traveling vehicle 1 compared to the map information indicated by the first display G1 may be used at the vehicle high-speed traveling state, instead of or in addition to the above-described map information. In this case, the various map information with the combination of the first and second displays G1, G2 can be indicated as well, thereby improving the facility or operability or readability further.

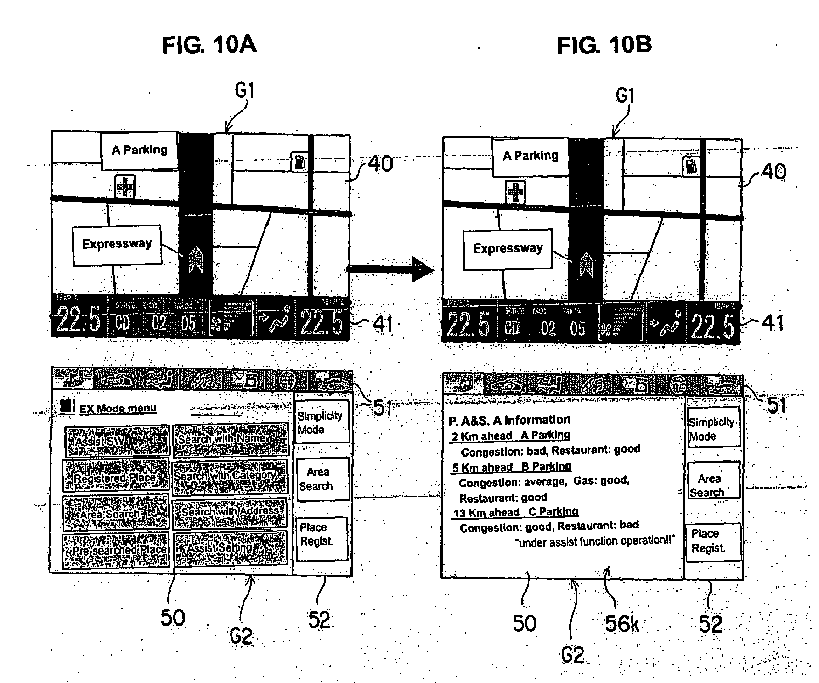

FIGS. 10A, 10B are explanatory views of the first and second displays G1, G2 showing an indication control to make the second display G1 indicate information relating to the first display (visual information or the related information) at a vehicle expressway or highway traveling state. A determination as to whether the vehicle 1 travels on an expressway or highway or not may be made by the traveling-state determining portion 33 based on data of the vehicle traveling position and/or map information from the navigation device 17 and/or based on information from the communication device between vehicle and road 14. When the vehicle does not travel on the expressway or highway, as shown in FIG. 10A, the first display G1 indicate the map information and the icon indication portion 41, and the second display G2 indicates the standard mode selection indication image shown in FIG. 6.

When it is determined that the vehicle travels on the expressway or highway, as shown in FIG. 10B, information of service area and/or interchange preferably is indicated on part of the second display G2 (the main indication portion 50) at least partly based on the map information indicated by the first display G1 as the first-display related information (visual information relating to the first display G1). Herein, a warning indication portion 56k operative to show the warning of "under assist function operation!!" preferably is provided at the second display G2 as well.

Likewise, changing of the information of the first display G1 at the vehicle traveling at the expressway or highway does not happen so often compared to at the vehicle traveling at the low speed or stops. Thus, opportunity of using the operation information indicated by the second display G2 may be fewer at the vehicle expressway/highway traveling state. Thereby, more various information indication can be attained by making the second display G2 having fewer use opportunity indicate the first-display related information, thereby improving the facility or operability or readability further.

In particular, in a case where the first display G1 indicates map information, the second display G2 indicates the information of service area and/or interchange based on the map information indicated by the first display G1 as the visual information relating to the first display G1 at the vehicle expressway/highway traveling state. Thereby, more map information can be indicated by utilizing the second display G2, and thereby the facility of the vehicle traveling on the expressway or highway can be improved.

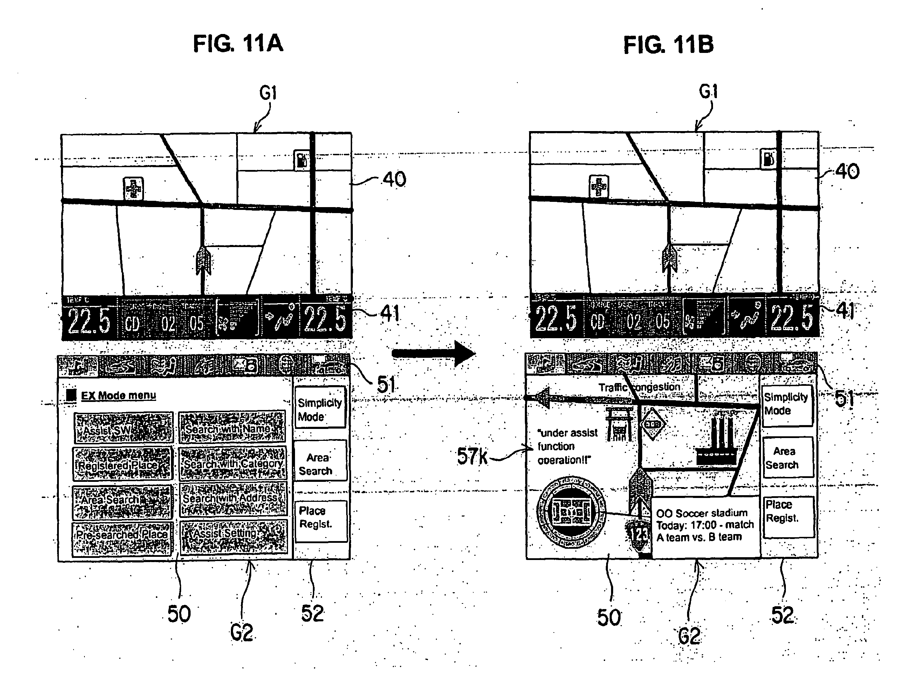

FIGS. 11A, 11 B are explanatory views of the first and second displays G1, G2 showing an indication control to make the second display G1 indicate information relating to the first display (visual information or its related information) when the vehicle 1 travels at a low speed that is lower than a specified (predetermined or predeterminable) speed (specifically, at a vehicle urban-area traveling state). A determination as to whether the vehicle 1 is at the low speed or not is made by the traveling-state determining portion 33. Also, a determination as to whether the vehicle 1 travels in the urban area or not may be made by the traveling-state determining portion 33 based on the data of the vehicle traveling position and the map information from the navigation device 17 and/or based on information from the communication device between vehicle and road 14.

When the vehicle does not travel at the low speed, as shown in FIG. 11A, the first display G1 preferably indicates the map information and the icon identification portion 41, and the second display G2 preferably indicates the standard mode selection image shown in FIG. 6. And, when the vehicle speed decreases and the vehicle low-speed traveling state is determined and/or the vehicle urban-area traveling state is determined, as shown in FIG. 11 B, at least part of the second display G2 (herein, the main indication portion 50) indicates a second map information that is different (in content and/or format) from the map information indicated by the first display G1 in an indication manner as the first-display related information (the visual information relating to the first display G1).

In this particular case, the map information indicated by the second display G2 as the second map information shows a more specific map than that indicated by the first display G1. In a case where the vehicle travels in the urban area, the map information indicated by the second display G2 as the second map information preferably shows circumference urban-area information (e.g., information of shrines, factories, sports fields) particularly based or depending on the map information indicated by the first display G1. Herein, a warning indication portion 57k operative to show the warning of "under assist function operation!!" preferably is provided at the second display G2 as well.

In general, changing of the indication of the first display G1 at the vehicle traveling at the high speed does not happen so often compared to at the vehicle traveling at the low speed or stops. Thus, opportunity of using the operation information indicated by the second display G2 may be fewer at the vehicle high-speed traveling state. Herein, by making the second display G2 indicate the first-display related information, the more various information can be indicated by the second display G2, thereby improving the facility or operability or readability further.

In general, map information of places relatively near the traveling vehicle 1 at the vehicle traveling at the low speed and/or in the urban area may be demanded more compared to at the vehicle traveling at the high speed. Thereby, by making the second display G2 indicate the more specific and/or different map information than the map information indicated by the first display G1 at the vehicle traveling at the low speed and/or in the urban area as the visual information relating to the first display G1, the more various information indication can be attained by properly utilizing the second display G2, thereby improving the facility or operability or readability.

Particularly, in a case where the first display G1 indicates the map information, the second display G2 preferably is made indicate circumference information based or depending on the map information indicated by the first display G1, as the visual information relating to the first display G1, at the vehicle urban-area traveling state. Thereby, the more various map information can be indicated by properly utilizing the second display G2, thereby improving the facility or operability or readability of the vehicle traveling in the urban area.

Herein, the visual information of the first display G1 may be indicated on part of the second display G2 at the vehicle low-speed traveling state, which is not specifically illustrated here. In this case, it is preferable that the visual information of the first display G1 be indicated at the second display G2 on a side that is closer to the driver.

In general, since necessity of changing the indication of the first display G1 at the vehicle traveling at the low speed may increase compared to at the vehicle traveling at the high speed, the opportunity of viewing at the second display G2 indicating the operation information may also increase. Accordingly, by indicating the visual information relating to the first display G1 on part of the second display G2 at the vehicle low-speed traveling state, both the operation information and the visual information can be indicated by the second display G2. Thus, the facility or operability or readability can be more improved. Herein, since the visual information of the first display G1 preferably is indicated at the second display G2 on a side that is

(relatively) closer to the driver, the driver can view the visual information G1 easily, thereby improving the facility or operability or readability.

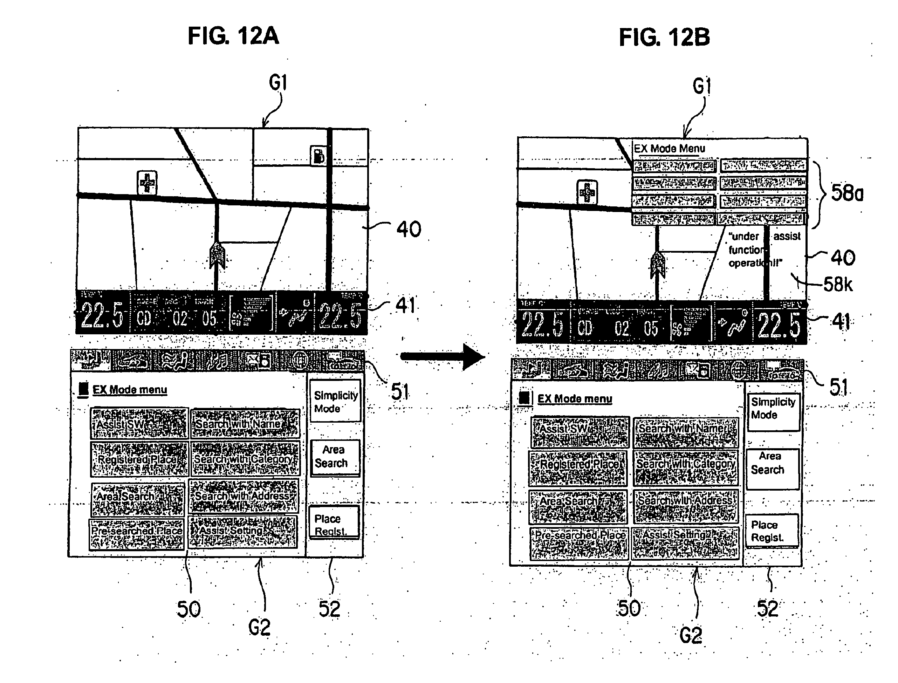

FIGS. 12A, 12B are explanatory views of the first and second displays G1, G2 showing an indication control to make the first display G1 indicate information relating to the second display (operation information or its related information) when the vehicle 1 travels at a low speed that is lower than a specified (predetermined or predeterminable) speed or stops. A determination as to whether the vehicle 1 is at the low speed or not preferably is made by the traveling-state determining portion 33. When the vehicle 1 does not travel at the low speed, as shown in FIG. 12A, the first display G1 indicates the map information and the icon identification portion 41, and the second display G2 indicates the standard mode selection image shown e.g. in FIG. 6.

And, when the vehicle speed decreases and the vehicle low-speed traveling state is determined, as shown in FIG. 12B, part of the first display G1 (herein, its upper right portion of the main indication portion 40) indicates at least part of the operation information of the second display G2. Herein, a warning indication portion 58k operative to show the warning of "under assist function operation!!" preferably is provided at the first display G1 as well.

In general, as described above, changing of the indication of the first display G1 at the vehicle 1 traveling at the low speed or stop may be demanded more compared to at the vehicle 1 traveling at the high speed. Herein, by making the first display G1 indicate at least part of the second-display related information in addition to the second display G2, the second-display related information (such as operation information) can be indicated more variously, thereby improving the facility or operability or readability.

Herein, information that is different from the switch information of the second display G2 in an indication manner may be indicated by the first display G1 as the second-display related information. In this case, the switch information relating to the second display G2 can be indicated in various manners.

Further, operation information that is obtained through a simplification (or reduction in amount and/or functionality of displays such as switches) from the operation information of the second display G1, for example, through a scale down, as the operation information relating to the second display G1, may be indicated by the first display G1. Thereby, the operation information of the second display G2 can be indicated by the first display G1 without making the indication of the first display G1 complicated.

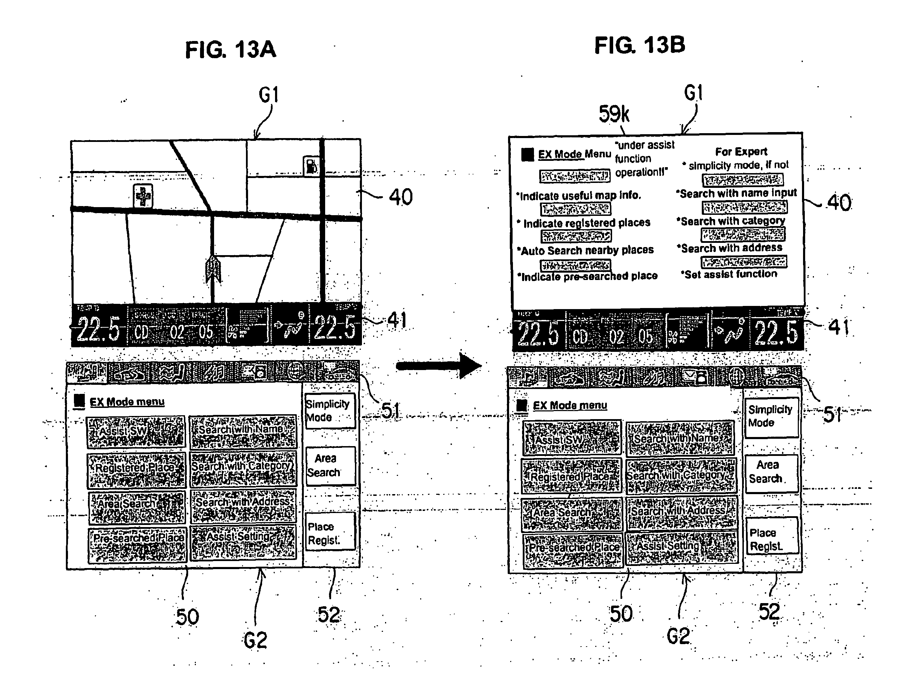

FIGS. 13A, 13B are explanatory views of the first and second displays G1, G2 showing an indication control to make the second display G1 indicate explanation of contents of the operation information of the second display G2 at the vehicle low-speed traveling state and/or a vehicle stop state. A determination as to whether the vehicle 1 is at the low speed or not is made by the traveling-state determining portion 33. When the vehicle 1 does not travel at the low speed, as shown in FIG. 13A, the first display G1 indicates the map information and the icon identification portion 41, and the second display G2 indicates the standard mode selection image shown in FIG. 6.

And, when the vehicle speed decreases and the vehicle low-speed traveling state is determined, as shown in FIG. 13B, at least part of the first display G1 (herein, an entire part of the main indication portion 40) indicates the contents explanation of the respective operational switches of the second display G2 as the operation information relating to the second display G2. Herein, a warning indication portion 59k operative to show the warning of "under assist function operation!!" preferably is provided at the first display G1 as well.

Thus, by making the first display G1 at least partly indicate the contents explanation of the operational switches of the second display G2 as the operation information relating to the second display G2, the operation to the operation information of the second display G2 can be executed more smoothly. Herein, since the driver can view the contents explanation of the switches carefully, this indication control may be especially useful at the vehicle stop state.

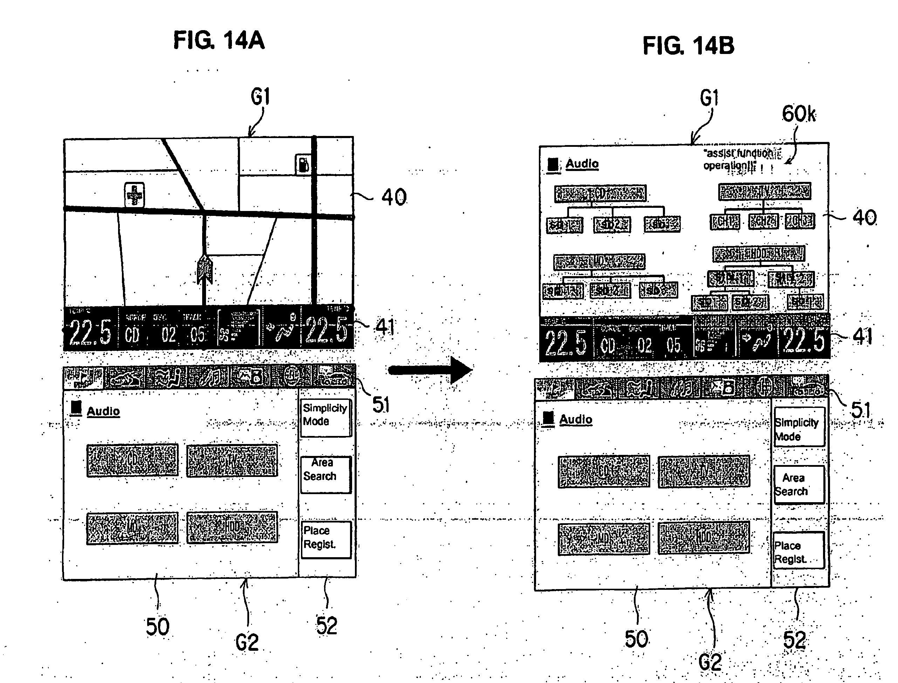

FIGS. 14A, 14B are explanatory views of the first and second displays G1, G2 showing an indication control to make the second display G1 indicate hierarchical operation contents of the operation information of the second display G2 at the vehicle low-speed traveling state and/or the vehicle stop state. A determination as to whether the vehicle 1 travels at the low speed or not is made by the traveling-state determining portion 33. When the vehicle 1 does not travel at the low speed and/or is not stopped, as shown in FIG. 14A, the first display G1 indicates the map information and/or the icon identification portion 41, and the second display G2 indicates selection indication images of various switches such as CD, MD, TV, HDD of the audio unit 11.

And, when the vehicle speed decreases and the vehicle low-speed traveling state and/or the vehicle stop state is determined, as shown in FIG. 14B, at least part of the first display G1 (herein, an entire part of the main indication portion 40) indicates the hierarchical operation contents of the respective operational switches of the second display G2 as the operation information relating to the second display G2. Herein, a warning indication portion 60k operative to show the warning of "under assist function operation!!" preferably is provided at the first display G1 as well.

Thus, by making the first display G1 indicate the hierarchical operation contents of the operational switches of the second display G2 as the operation information relating to the second display G2, the hierarchical operation to the operational switches can be executed more smoothly. Herein, since the driver can view the contents explanation of the switches carefully, this indication control may be especially useful at the vehicle stop state.

Herein, the indication control by the assist control portion 36 to make the first display G1 indicate the second-display related information is prohibited while the vehicle 1 is accelerated at the vehicle low-speed traveling state. Thereby, the execution of the indication control can be surely limited to the vehicle low-speed traveling state or the vehicle-stop state, prohibiting the indication control at other vehicle traveling state, for example, the vehicle high-speed traveling state.

According to the present embodiment, there is provided a setting device operative to set contents of the indication control by the assist control portion 36. Thereby, the contents of the indication control preferably can be set according to the passenger's will or selection.

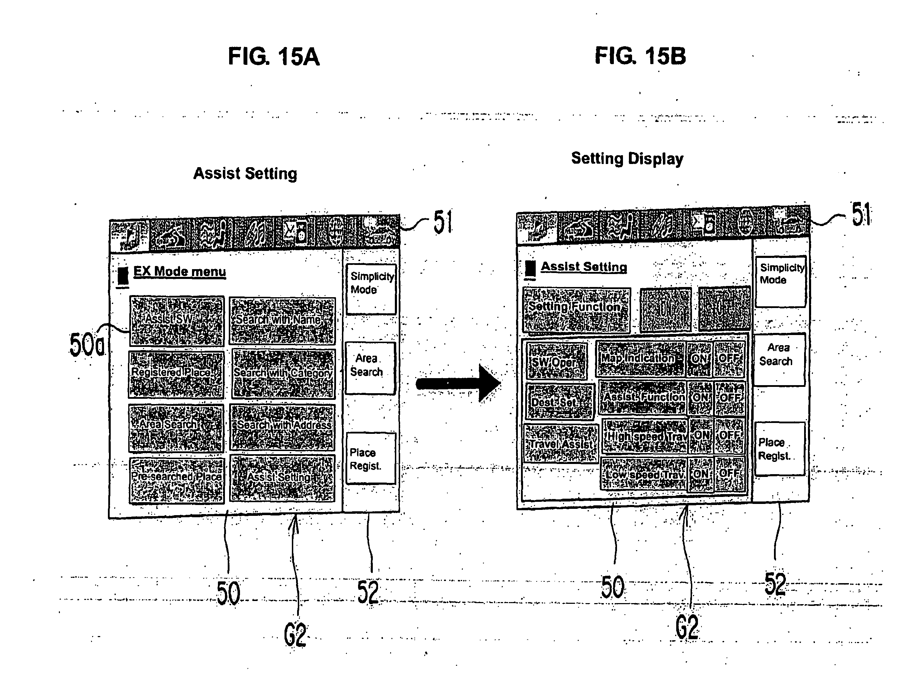

FIGS. 15A, 15B are explanatory views of the second display G2 showing setting operation of contents of the indication control by the assist control portion 36. FIG. 15A shows the second display G2 indicating an indication image similar to the standard mode selection indication image shown in FIG. 6. When the assist switch 50a in the mode selection indication image is turned on (ON), the main indication portion 50 indicates the setting display shown in FIG. 15B. This setting display includes, preferably in addition to the ON/OFF switch for the entire assist function, an ON/OFF switch for map indication and/or an ON/OFF switch for the assist function at the destination setting. It preferably includes respective ON/OFF switches for the assist function at the vehicle high-speed traveling state and/or the low-speed traveling state.

The ON/OFF of the entire assist function and the respective assist function can be set by operating these ON/OFF switches of the setting display. Namely, the contents of the indication control by the assist control portion 36 according to the vehicle traveling state can be set according to the passenger's will, thereby improving the facility or operability or readability further.

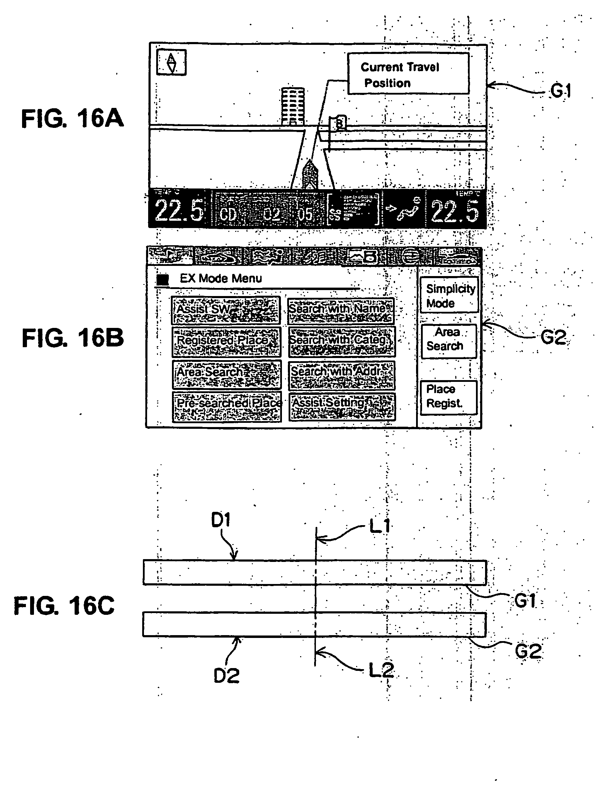

Herein, the first and second displays G1 and G2 may be configured to have the same size and the same direction in such a manner that respective vertical center lines L1, L2 of these displays G1, G2 lap with each other, as shown in FIGS. 16A - C. In the drawing, the both vertical center lines L1, L2 is located to extend in a vehicle longitudinal direction.

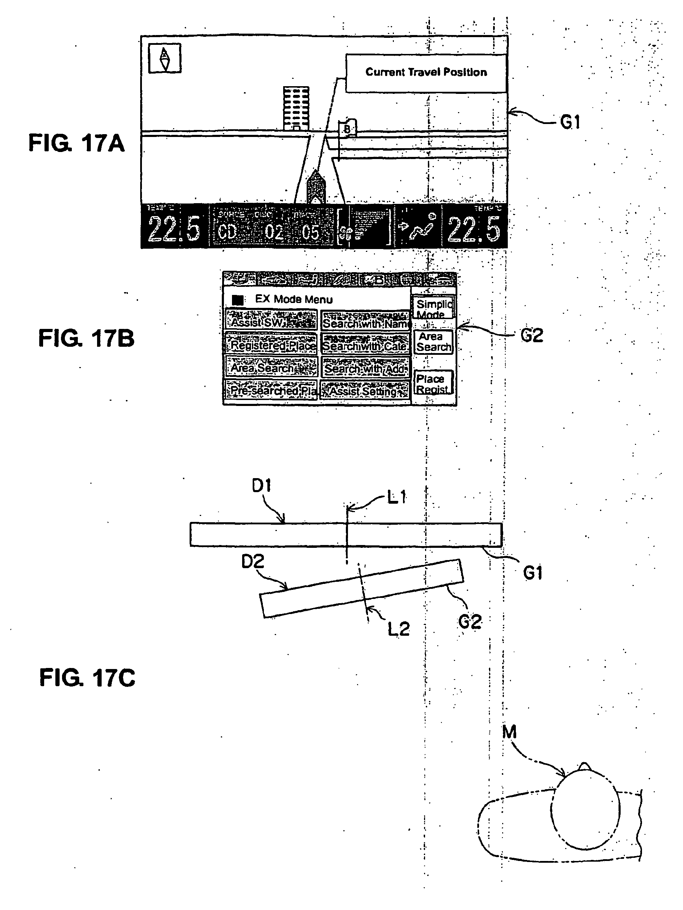

However, as shown in FIGS. 17A - C, the size of the first display G1 may be configured to be larger than that of the second display G2, so that the visibility of the first display G1 indicating the visual information can be improved. Also, the vertical center line L1 of the first display G1 may be located to extend substantially in the vehicle longitudinal direction, while the vertical center line L2 of the second display G2 may be located to be inclined at an angle different from 0° or 180° substantially toward the passenger (driver) M seated in the driver's seat 5, as shown in FIG. 17C. Thereby, the driver M can view the second display G2 easily. Herein, the vertical center line L1 of the first display G1 may be located to be inclined toward the driver M as well.

### EMBODIMENT 2

In the above-described indication control, the assist control portion 36 makes the first display G1 indicate the operation information as the second-display related information and makes the second display G2 indicate the visual information as the first-display related information according to the vehicle traveling state primarily. Herein, the assist control portion 36 may make the first display G1 indicate the operation information as the second-display related information and/or makes the second display G2 indicate the visual information as the first-display related information according to the operation of the passenger primarily. Hereinafter, this embodiment will be described.

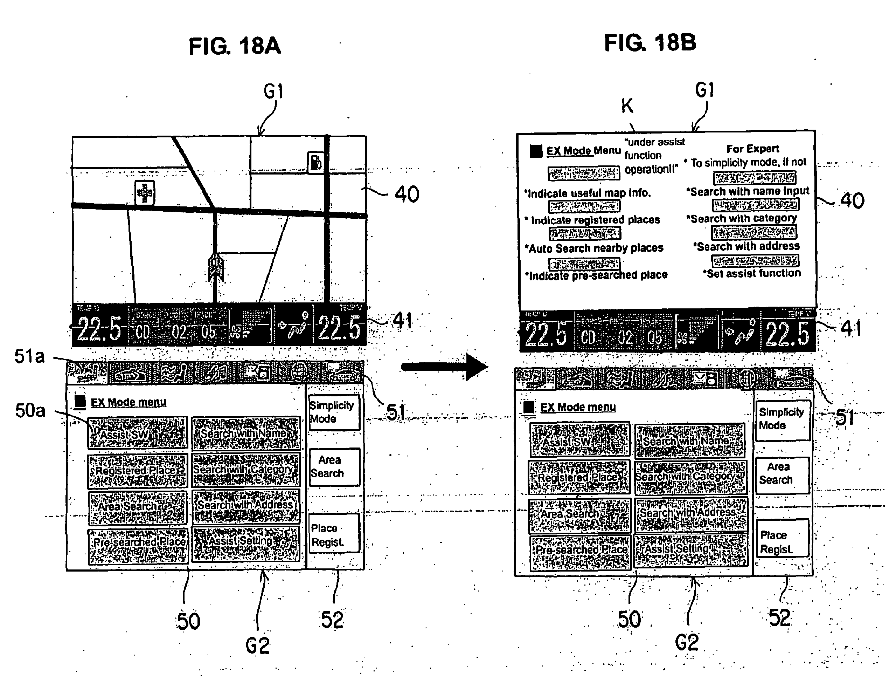

FIGS. 18A, 18B are explanatory views of the first and second displays showing an indication control to make the first display G1 indicate explanation of contents of the operation as the operation information relating to the second display G2 when the passenger's operation on the second display G2 is conducted. In a state where the assist switch 50a is ON (i.e., at the assist mode state), when the passenger does not operate the operational switch on the second display G2, the map information and the icon indication portion 41 are indicated by the first display G1 as shown in FIG. 18A, and the standard mode selection indication image e.g. shown in FIG. 6 is indicated by the second display G2.

Then, when the passenger operates the operation information on the second display G2 (e.g., the navigation icon 51a of the icon indication portion 51), as shown in FIG. 18B, part of the first display G1 (e.g., the entire main indication portion 40) indicates contents explanation of the one or more respective operational switches of the second display G2 as the operation information relating to the second display G2. Herein, at the first display G1 preferably is provided a warning indication portion K that shows a warning of "under assist function operation!!" to warn that the assist function is underway or being performed.

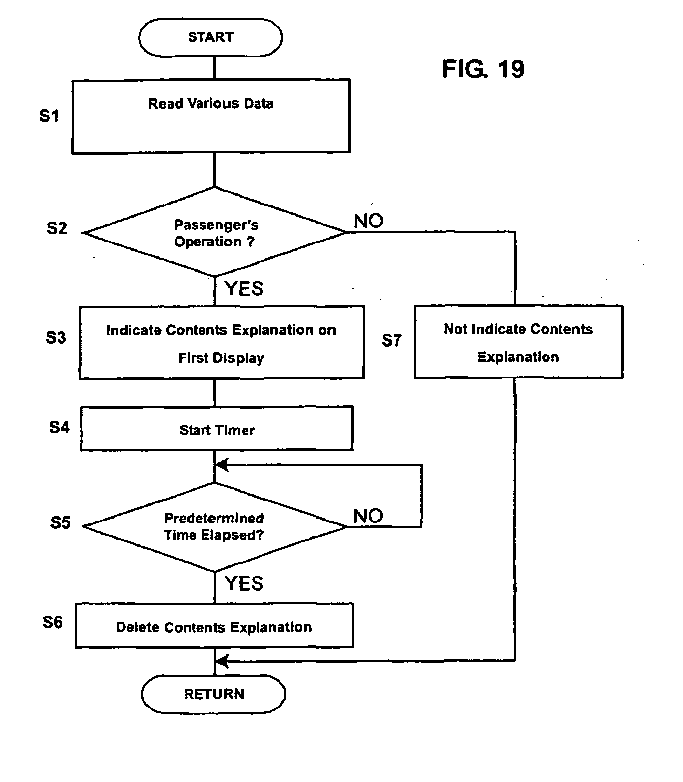

The indication control will be described referring to FIG. 19. First, various data are read in step S1 after the system start. Then, in step S2, it is determined whether the operation on the second display G2 is conducted by the passenger or not. When the answer is YES, the first display G1 indicates the above contents explanation of the operational switches of the second display G2 (step S3), and a timer to count elapse time passing after the indication starts (step S4). Then, it is determined whether a specified (predetermined or predeterminable) time has elapsed or not in step S5. When the answer is YES, the above contents explanation indicated on the first display G1 is deleted (step S6). When the answer is NO in the step S2, the contents explanation is not indicated by the first display G1 (step S7).

Accordingly, since the operation information relating to the second display G2 is at least partly indicated by the first display G1 in addition to the second display G2 according to the passenger's operation on the second display G2, the operation information relating to the second display G2 can be indicated more variously, thereby improving the facility or operability or readability by the passenger such as the driver. In particular, since the contents explanation of the operational switch of the second display G2 is indicated by the first display G1 as the operation information relating to the second display G2, the operation to the operation information of the second display G2 can be executed more smoothly. Herein, since the indication of the contents explanation of the operational switch of the second display G2 is done for the above specified time, the indication function of the first display may not be deteriorated by this indication of the contents explanation of the operational switch.

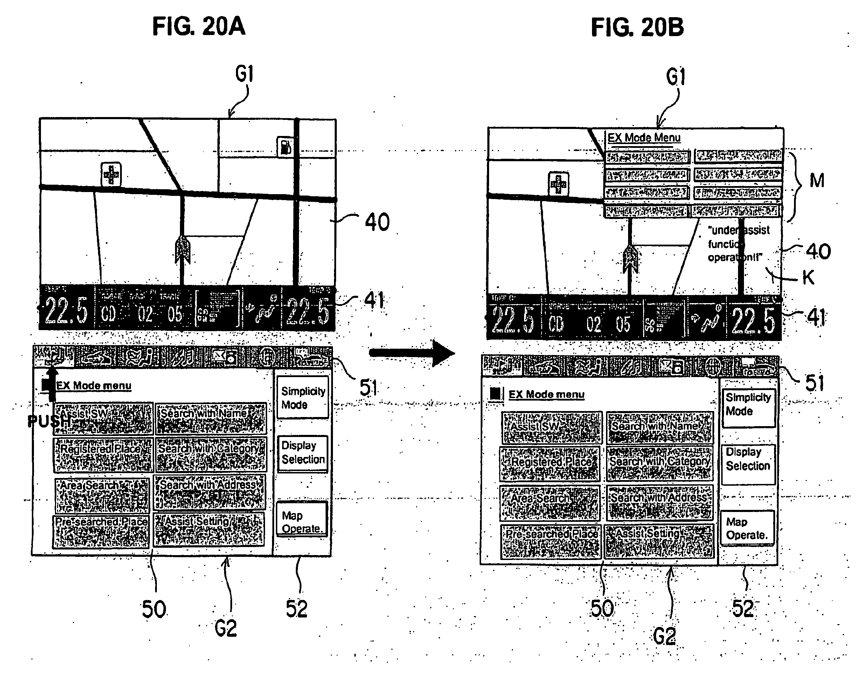

FIGS. 20A, 20B are explanatory views of the first and second displays G1, G2 showing an indication control to make the first display G1 indicate information that is obtained through a simplification from the operation information of the second display G2 as the information relating to the second display G2 when the operation is conducted (see arrow "PUSH") to the second display G2. When the passenger does not operate (e.g. push) the operational switch on the second display G2 in the assist mode, the first display G1 indicates the map portion and/or the icon indication portion 41 as shown in FIG. 20A, and the second display G2 indicates the standard mode selection image e.g. shown in FIG. 6.

Then, when the passenger operates the operation information on the second display G2 (e.g., pushes the navigation icon 51 a on the icon indication portion 51), at least part of the first display G1 (e.g., upper part of the main indication portion 40) indicates at least part of the operation information of the second display G2 (e.g., mode menu M) as the operation information relating to the second display G2 as shown in FIG. 20B. Herein, at the first display G1 preferably is provided the warning indication portion K showing the warning of "under assist function operation!!" as well.

Accordingly, since the first display G1 indicates information that is obtained through the simplification from the operation information of the second display G2 as the operation information relating to the second display G2, the operation information of the second display G2 can be indicated by the first display G1 without making the indication of the first display G1 complicated.

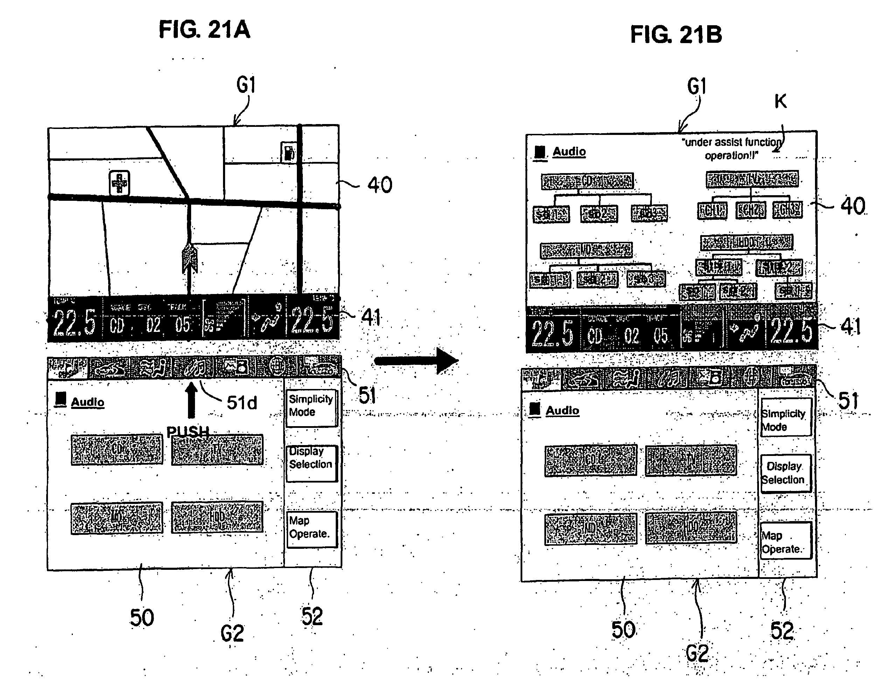

FIGS. 21A, 21 B are explanatory views of the first and second displays G1, G2 showing an indication control to make the first display G1 indicate hierarchical operation contents of the operation information of the second display G1 when the passenger's operation on the second display G2 is executed. When the passenger does not operate the operational switch on the second display G2 in the assist mode, the first display G1 indicates the map portion and/or the icon indication portion 41 as shown in FIG. 20A, and the second display G2 indicates selection indication image of various switches of CD, MD, TV, HDD of the audio unit as the operation information for hierarchical operation.

Then, when the passenger operates (see arrow "PUSH") the operation information on the second display G2 (e.g., the audio icon 51 d on the icon indication portion 51), at least part of the first display G1 (e.g., the substantially entire main indication portion 40) indicates the hierarchical operation contents of the operational switch of the second display G2 as the operation information relating to the second display G2 as shown in FIG. 21 B. Herein, at the first display G1 preferably is provided the warning indication portion K showing the warning of "under assist function operation!!" as well.

Accordingly, since the first display G1 at least partly indicates the hierarchical operation contents of the operational switch of the second display G2 as the operation information relating to the second display G2, the hierarchical operation to the operational switch of the second display G2 can be executed more smoothly. Herein, since the driver can view the contents explanation of the operational switch carefully, this indication control may be especially useful at the vehicle stop state.

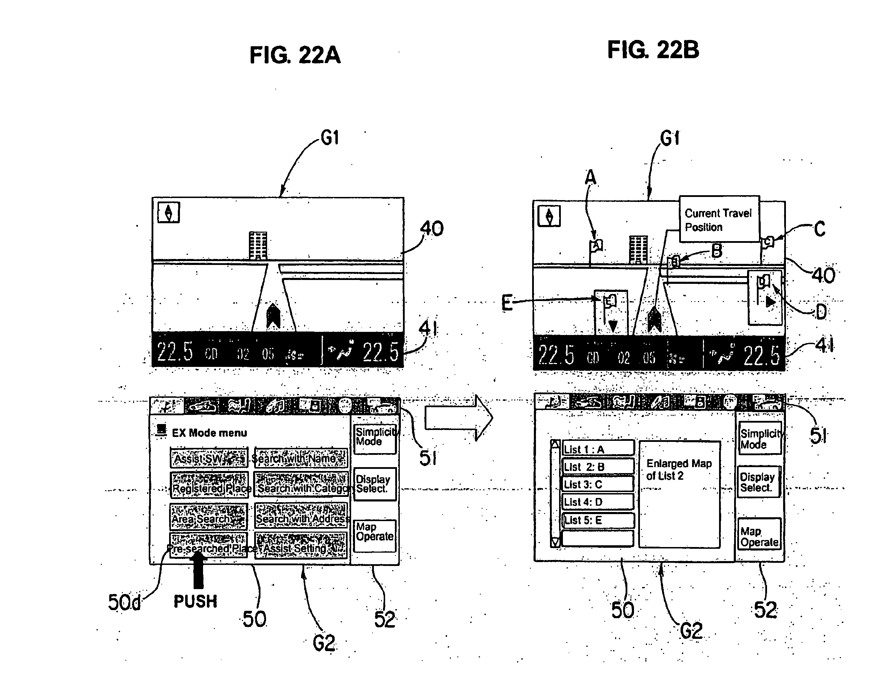

FIGS. 22A, 22B are explanatory views of the first and second displays G1, G2 showing an indication control to make the first display G1 indicate destination-related information when the operation for setting destination of vehicle traveling is conducted to the second display G2. When the passenger does not conduct the operation for setting destination of the vehicle traveling on the second display G2 in the assist mode, the first display G1 indicates the map portion and the icon indication portion 41 as shown in FIG. 22A, and the second display G2 indicates the standard mode selection indication image shown e.g. in FIG. 6.

Then, when the passenger operates the switch (see arrow "PUSH") for setting the destination on the second display G2 (e.g., a "previously-searched place" switch 50d), part of the first display G1 (e.g., the main indication portion 40) indicates "previously-searched place" A - E as the destination related information as shown in FIG. 22B, at least partly overlapping with or overlaid on the map information of the first display G1. Herein, it is preferable that the second display G2 indicate a list of the "previously-searched place" A - E.

Accordingly, since the first display G1 indicates the destination-related information when the passenger executes the operation for setting destination of vehicle traveling, the facility at the operation of setting the destination can be improved. In particular, since the destination-related information indicated by the first display is shown so as to at least partly overlap with or being overlaid on map information indicated by the first display G1, the destination setting operation can be executed smoothly with the improved facility or operability or readability.

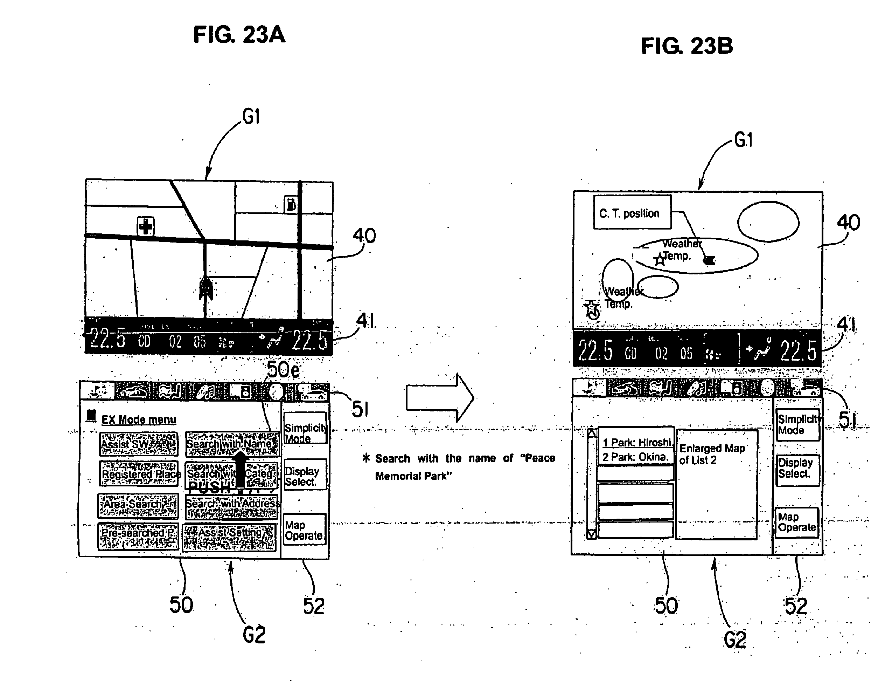

FIGS. 23A, 23B are explanatory views of the first and second displays G1, G2 showing an indication control to at least partly change the map information according to the destination-related information when the operation for setting destination of vehicle traveling is conducted to the second display G2. When the passenger does not conduct the destination setting operation on the second display G2 in the assist mode, the first display G1 indicates the map portion and the icon indication portion 41 as shown in FIG. 23A, and the second display G2 indicates the standard mode selection image shown e.g. in FIG. 6.

Then, when the passenger operates the switch (see arrow "PUSH") for destination setting (e.g., a "searching with name" switch 50e) on the second display G2 and, for example, inputs a searching name of "Peace Memorial Park," the map information showing a plurality of park locations with this name (e.g., two parks exist in Hiroshima and Okinawa) is indicated properly as shown in FIG. 23B. Herein, it is preferable that the second display G2 indicate a list of locations searched with the name or substantially matching the search criteria.

Accordingly, since the map information of the first display G1 is changed according to the destination-related information, the facility of the destination setting operation can be improved further.

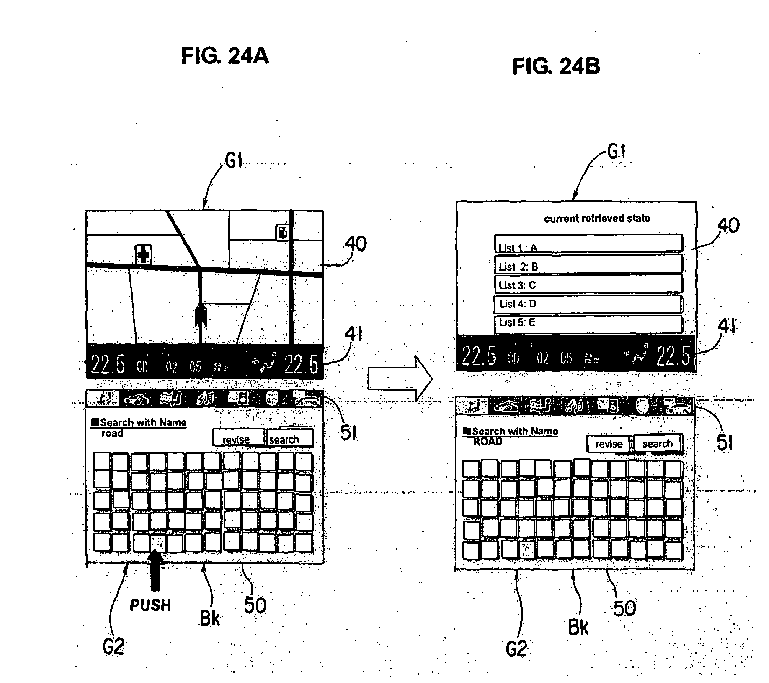

FIGS. 24A, 24B are explanatory views of the first and second displays G1, G2 showing an indication control to make the first display G1 indicate searched information when the operation for information search is conducted to the second display G2. When the passenger does not conduct the operation for information search with a keyboard Bk on the second display G2 in the assist mode, the first display G1 indicates a list of searched information as shown in FIG. 24A.

Accordingly, since the first display G1 indicates the searched information at the passenger's information search operation, the operation for the information search can be facilitated.

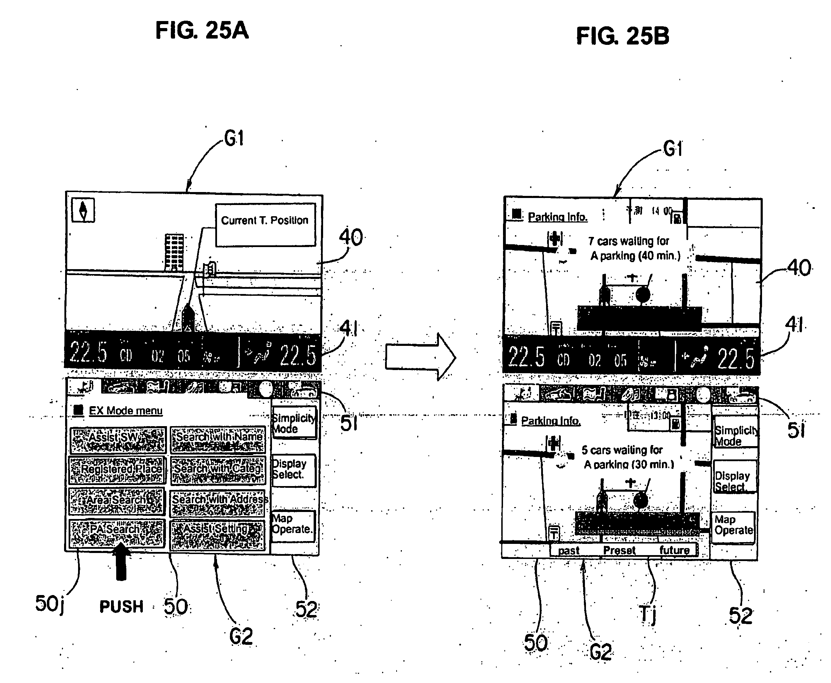

FIGS. 25A, 25B are explanatory views of the first and second displays G1, G2 showing an indication control to make the first display G1 indicate future-prediction information of searched traffic-congestion information when the passenger conducts the operation for traffic-congestion information search on the second display G2. When the passenger does not conduct the operation for traffic-congestion information search on the second display G2 in the assist mode, the first display G1 indicates the map information and/or the icon indication portion 41 as shown in FIG. 25A, and the second display G2 indicates the mode selection indication image.

Then, when the passenger operates a "parking area search" switch 50j on the second display G2, the traffic-congestion information at this moment (at 13:00) is indicated by the second display G2 as shown in FIG. 25B. Herein, future-prediction information of the (current) searched traffic-congestion information indicated by the second display G2 is searched preferably at the substantially same time (e.g. by means of a TCM system), and this future-prediction information is also indicated by the first display G1.

The second display G2 indicates a time axis Tj of the above future-prediction information, which is for setting time from "past" to "future" by way of "present." For example, by setting the future (14: 00) that is one-hour later from the present (13: 00) on the time axis Tj, the future-prediction information of the traffic-congestion information at a later time (e.g. at one-hour later) is searched, and the searched future-prediction information is indicated by the first display G1.

Accordingly, since the first display G1 indicates the future-prediction information of searched traffic-congestion information that is searched at the traffic-congestion information search, preferably both the current traffic-congestion information and the future-prediction traffic-congestion information can be provided, thereby improving the facility or operability or readability greatly. In particular, since the future time is controllable with the time axis Tj, the future-prediction at any timing can be obtained, thereby further improving the facility or operability.

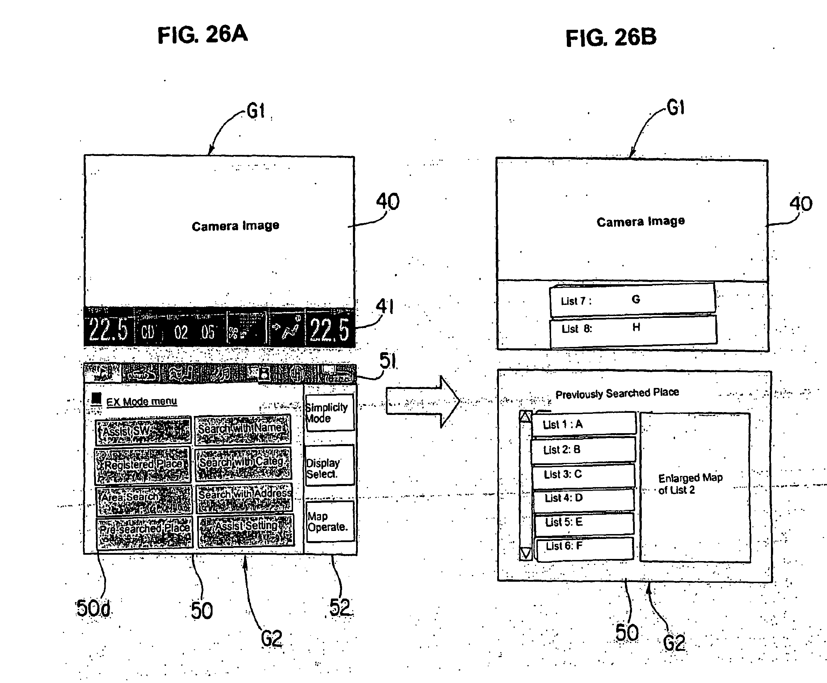

FIGS. 26A , 26B are explanatory views of the first and second displays G1, G2 showing an indication control to make the first display G1 indicate at least part of operation information when an operation in which operation information increases is conducted by the passenger on the second display G2. When the passenger does not operate on the second display G2 in the assist mode, the first display G1 indicates the map information and/or the icon indication portion 41 as shown in FIG. 26A, and the second display G2 indicates the mode selection indication image.

Then, when the passenger operates a switch whose operation may increase the operation information increases on the second display G2 (e.g., "previously-searched place" switch 50d), the first display G1 indicates at least part of the search information by this operation as shown in FIG. 26B. Herein, for example, the icon indication portion 41 is deleted, and the lower portion including this portion of the first display G1 indicates part of a list of the search information. Herein, lists of low-priority search information G, H are indicated by the first display G1, and lists of high-priority search information A - F are indicated by the second display G2 e.g. according to a preset table or condition.

Accordingly, since the first display G1 indicates at least part of the operation information when the operation information increases, it can be properly avoided that the amount of information indicated by the second display G2 becomes too much and a smooth operation can be provided. In particular, since the low-priority operation information G, H are indicated by the first display G1, any inconvenience due to the high-priority operation information being indicated by the first display G1 can be prevented.

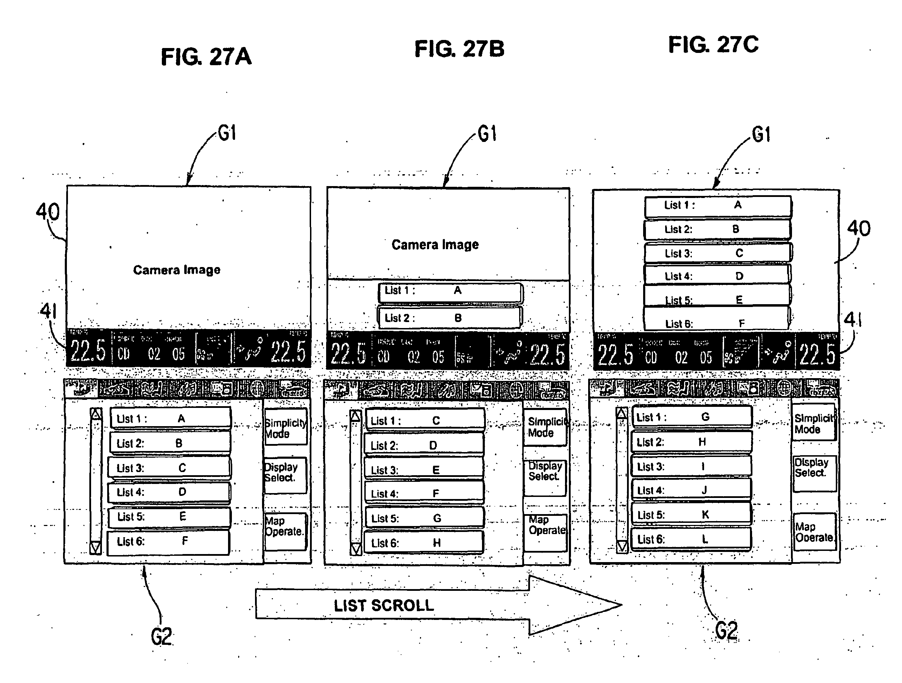

FIGS. 27A - 27C are explanatory views of the first and second displays G1, G2 showing an indication control to make the first display G1 indicate at least part of deleted information through scrolling operation when the scrolling operation of the operation information is conducted to the second display G2. When in the assist mode the passenger executes the search operation on the second display G2 and the first display G1 preferably indicates camera image and/or the icon indication portion 41, as shown in FIG. 27A, and executes the scrolling operation to the lists A - F indicated by the second display G2, at least part of deleted or undisplayed operation information by progress of the scrolling are indicated by the first display G1 in order as shown in FIGS. 27B and 27C. FIG. 27C shows the deleted A - F lists at the preferably substantially entire area of the main indication portion 40.

Accordingly, since the first display G1 indicates at least part of deleted or undisplayed information through the scrolling operation at the scrolling of the operation information, the deleted or undisplayed operation information by scrolling is still indicated by the first display G1 and thereby the passenger can know those information with the first display G1 without operation to return the scrolling. Thus, the facility of the scrolling operation can be improved.

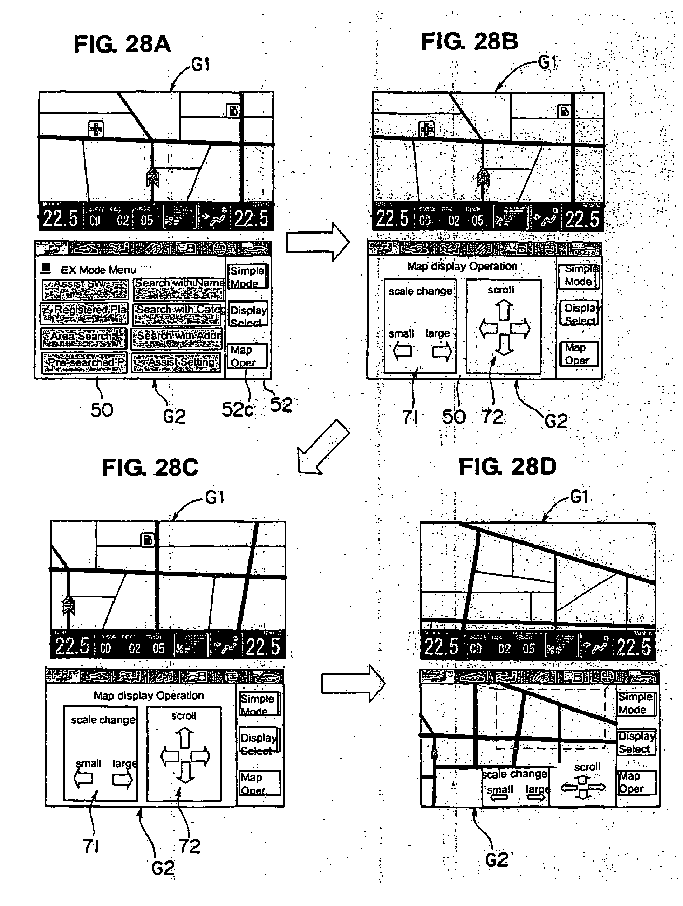

FIGS. 28A - 28D are explanatory views explaining an indication control to make the second display G2 indicate first-display related information when the scrolling operation of the map information is conducted to the first display G1. FIGS. 28A shows an initial state of the first and second displays G1, G2, in which the first display G1 indicates the map information and/or the icon indication portion 41 and the second display G2 indicates the standard mode selection indication image.

Then, when the passenger operates a map operational switch 52c of the second display G2 in the assist mode, a scale changing key 71 and/or a scroll key 72 are indicated on the main indication portion 50 of the second display G2 as one or more map operational keys as shown in FIG. 28B. And, by operating the scroll key 72, the map is moved or shifted (scrolled) on the first display G1 as shown in FIG. 28C. By further scrolling, the map information relating to the first display G1 is indicated by the second display G2 as shown in FIG. 28D. It is preferable that the second display G2 indicate a larger map area than that indicated by the first display G1.

Accordingly, since the second display G2 indicates the visual information relating to the first display G1 according to the operation of the passenger on the first display G1, the visual information relating to the first display G1 can be indicated more variously, thereby improving the facility or operability or readability. In particular, since in a case where the first display G1 indicates the map information, the second display G2 indicates the map information that is indicated by the first display G1 at the map information operation, the facility or operability or readability at the map-information viewing can be improved. And, by making the second display G2 indicate map information that shows the larger map area than that indicated by the first display G1, as the visual information relating to the first display G1 at the map scrolling, the more various indication of the map information can be obtained by utilizing the second display G2, thereby improving the facility or operability or readability.

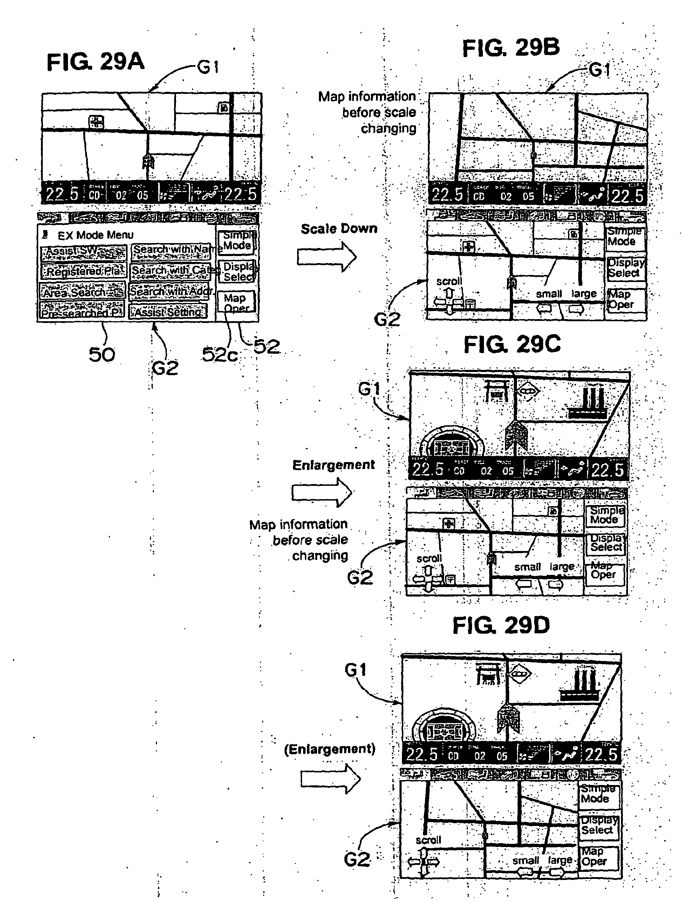

FIGS. 29A - 29D are explanatory views explaining an indication control to make the second display G2 indicate first-display related information when scale changing operation of the map information of the first display G1 is conducted. FIG. 29A indicates an initial state of the first and second displays G1, G2, in which the first display G1 indicates the map information and/or the icon indication portion 41 and the second display G2 indicates the standard mode selection image.

When the passenger executes the scale changing operation of the map information of the first display G1 in the assist mode, the second display G2 indicate old map information whose scale has not changed before the scale changing to the first display G1 as the visual information relating to the first display G1. Namely, in a case where the operation for scale down of the map is executed, the old map information before the scale changing is indicated at the main indication portion 50 of the second display G2 as shown in FIG. 29B. Also, in a case where the operation for enlargement of the map is executed, the old map information before the scale changing is indicated at the main indication portion 50 of the second display G2 as shown in FIG. 29C as well.

Accordingly, since in a case where the map information is indicated by the first display G1, the second display G2 indicates the old map information whose scale has not changed as the visual information relating to the first display G1 at the map scale changing, preferably both map information before the scale changing and after the scale changing are indicated at the substantially same time and thereby the both information can be compared with each other. Thus, facility or operability or readability can be further improved.

Also, the map information having a scale that is reverse to the scale of map information indicated by the first display G1 may be indicated by the second display

G2, as the visual information relating to the first display G1, at the map scale changing as shown in FIG. 29D. Herein, it is preferable that the reverse scale of the map information that indicated by the second display G2 be restricted within a specified (predetermined or predeterminable) range.

Accordingly, since in a case where the map information is indicated by the first display G1, the second display G2 indicates the map information having a scale that is reverse to the scale of map information indicated by the first display G1 as the visual information relating to the first display G1 at the map scale changing, both map information with the scale changing and the reverse-scale changing are indicated at the substantially same time and thereby the both information can be compared with each other. Thus, the facility or operability or readability can be further improved. Also, since the reverse scale of the map information that indicated by the second display G2 is restricted within the specified (predetermined or predeterminable) range, it can be properly prevented that the above-described comparison of the both map information with the scale changing and the reverse-scale changing becomes difficult due to a too-large difference in the scale.

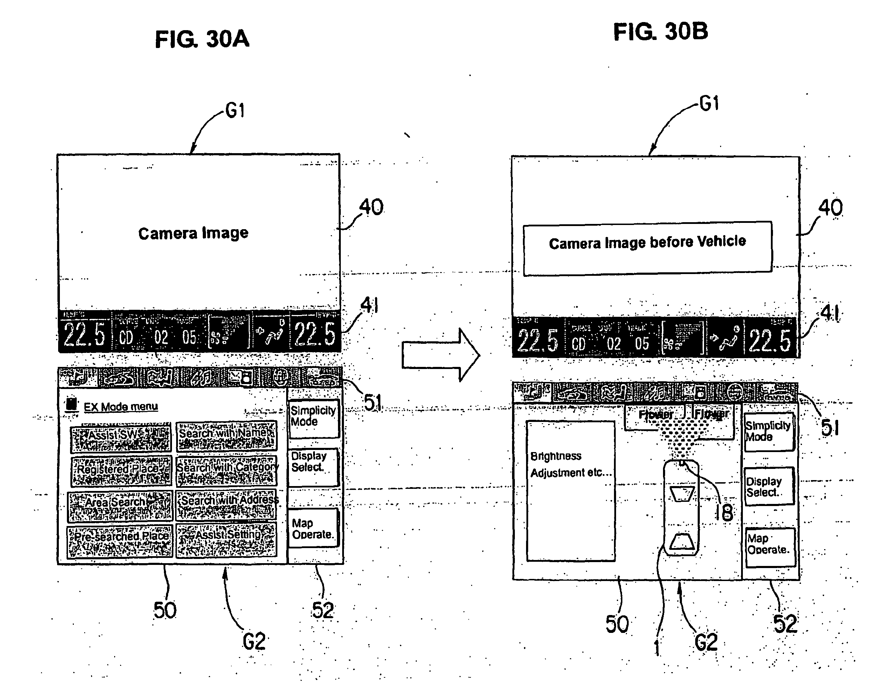

FIGS. 30A , 30B are explanatory views explaining an indication control to make the second display G2 indicate information relating to camera-image information of the first display G1 when indication operation of the camera image of the first display is conducted. FIG. 30A indicates an initial state of the first and second displays G1, G2, in which the first display G1 indicates an image behind the vehicle 1 that is caught by the rear-view camera 19 (see FIG. 4) and the second display G2 indicates the standard mode selection image.

When the passenger changes the camera image of the first display G1 to an image substantially before the vehicle 1 that is caught by the front-view camera 18 in the assist mode, information on positions of the camera (front-view camera 18) and/or an object or an image adjusting are indicated by the second display G2 as the visual information relating to the first display G1 as shown in FIG. 30B.

Accordingly, in a case where the camera image information is at least partly indicated or displayed by the first display G1, the second display G2 indicates or displays information relating to the camera-image information that is indicated or displayed by the first display G1. Thereby, the visual information relating to the camera-image information can be indicated more variously, thereby improving the facility or operability or readability.

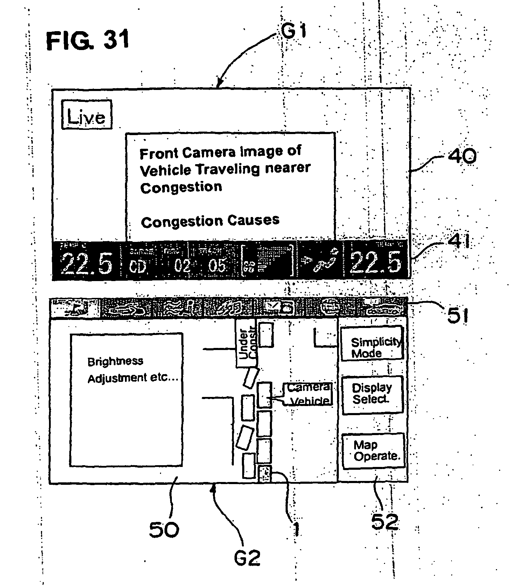

FIG. 31 is an explanatory view explaining another indication control to make the second display G2 indicate the visual information relating to the camera-image information indicated by the first display G1. According to an example by this indication control, a so-called communication between vehicles preferably with the short-range communication device 13 (see FIG. 4) is used in the assist mode. Herein, the second display G2 indicates positions of many vehicles near locations at under-construction that may cause the traffic congestion, and the first display G1 indicates a front image of a certain vehicle traveling nearer the under-construction locations, that is caught by a camera of this certain vehicle.

Accordingly, when the passenger executes the operation in which the visual information indicated by the first display G1 increases, the second display G2 indicates at least part of the visual information according to the operation on the first display G1. Thereby, it can be properly prevented that the indication of the first display G1 becomes too complicated, and thus the proper visibility of the first display G1 can be obtained.

Herein, it is preferable that the low-priority visual information be indicated by the second display G2 to prevent any inconvenience due to the high-priority operation information being indicated by the second display G2.

Also, the second display G2 may indicate visual information for confirmation relating to the operation of the visual information of the first display G1 for a specified (predetermined or predeterminable) time. Thereby, the confirmation of the visual information can be facilitated, thereby improving the facility or operability or readability. Herein, since the indication of the visual information for confirmation by the second display G2 is limited to the specified (predetermined or predeterminable) time, the original indication by the second display G2 may not be deteriorated.

Also, when the operation for scrolling the visual information is conducted, the second display G2 may indicate at least part of the deleted information through the scrolling operation. Thereby, since the deleted visual information by the scrolling can be confirmed by the second display G2 and there is no need for returning the scrolling, the facility or operability at the scrolling can be improved.

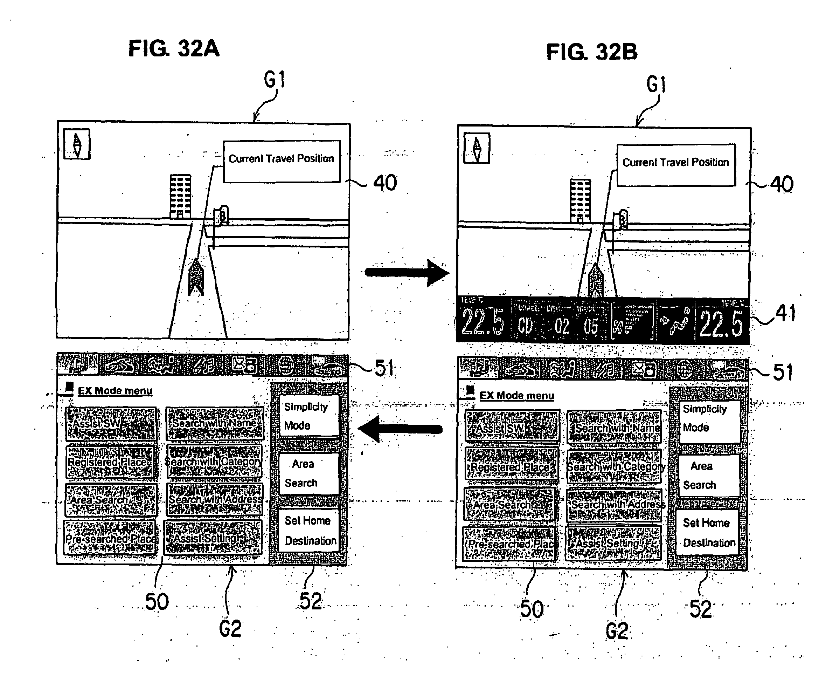

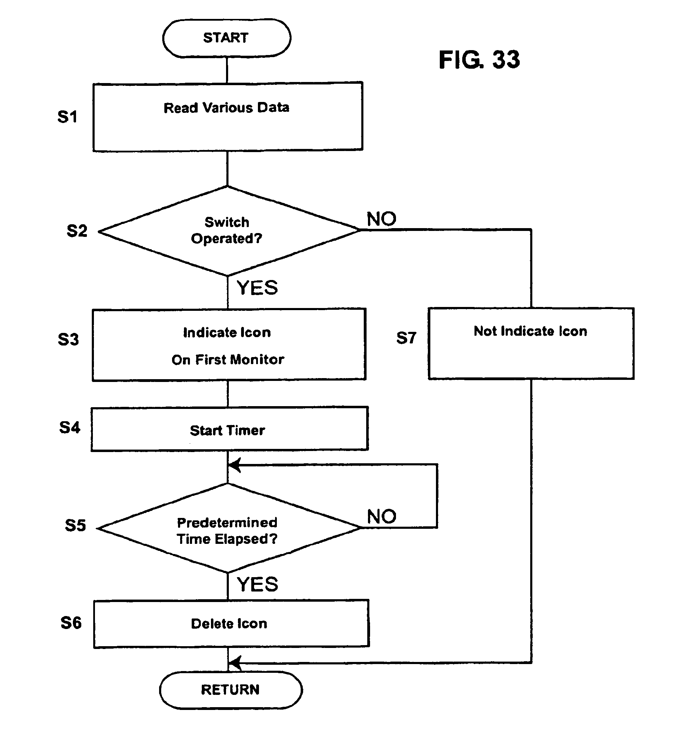

FIGS. 32A, 32B are explanatory views of the first and second displays G1, G2 showing an indication control to make the first display G1 indicate the icon indication portion 41 according to the operation contents of the switch 10 that is located near at the driver's hand when the switch 10 is operated. FIG. 33 is a flowchart of the indication control of FIGS. 32A, 32B. In a state where the assist switch 50a is ON (namely, at the assist mode state), when the switch is not operated, the first display G1 indicates only the map information without the icon indication portion 41 as shown in FIG. 32A. Accordingly, in this case the substantially entire indication area is the main indication portion 40. When the switch 10 is operated, however, the icon indication portion 41 is indicated by the first display G1 as shown in FIG. 32B.

The indication control will be described referring to FIG. 33. First, one or more various data are read in step S1 after the system start. Then, in step S2, it is determined whether the switch 10 is operated or not. When the answer is YES, the first display G1 indicates the icon indication portion 41 (step S3), and a timer to count elapse time passing after the indication starts (step S4). Then, it is determined whether a specified (predetermined or predeterminable) time has elapsed or not in step S5. When the answer is YES, the indication of the icon indication portion 41 is deleted (step S6). When the answer is NO in the step S2, the icon indication portion 41 is not indicated by the first display G1 (step S7).

Accordingly, the switch 10 is provided, the icon indication portion 41 is indicated by the first display G1 according to the operation of the switch 10. Thus, the facility or operability or readability can be improved.

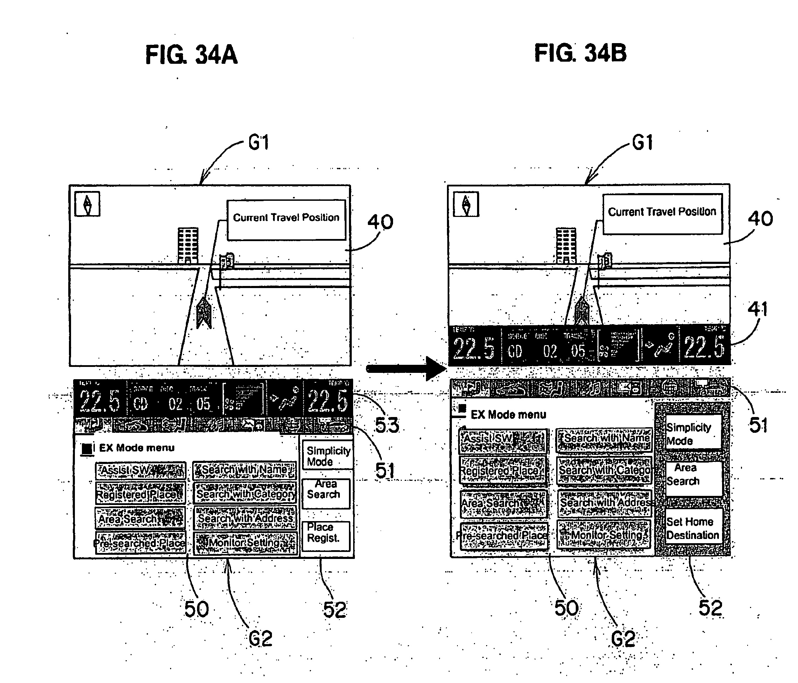

FIGS. 34A, 34B are explanatory views of the first and second displays G1, G2 showing an indication control to make the first display G1 indicate an icon indication portion 53 that is (also) provided on the second display G2 as the icon indication portion 41 according to contents of the operation of the switch 10 when the switch 10 is operated. When the switch 10 is not operated, the icon indication portion 53 is indicated at a portion (e.g. at an upper portion) of the second display G2 according to the contents of the operation of the switch 10 as shown in FIG. 34A. Herein, the first display G1 indicates substantially only the map information, without the icon indication portion 41.

And, when the switch 10 is operated, as shown in FIG. 34B, the icon indication portion 53 is deleted or removed from the second display G2, and the operation information that is the substantially same as this is indicated by the first display G1 as the icon indication portion 41. Namely, the icon indication portion 53 of the second display G2 is moved to and indicated or displayed on the first display G1 as the icon indication portion 41 corresponding to the operational contents of the switch 10. Herein, the indication may be returned to the original one according to the elapse of time like the above described case referring to FIG. 33. Thereby, it can be prevented that the substantially same operation information (the icon indication portions 41, 53 according to the operational contents of the switch 10) are indicated at the same time, thereby properly preventing needless indications and improving facility or operability or readability.

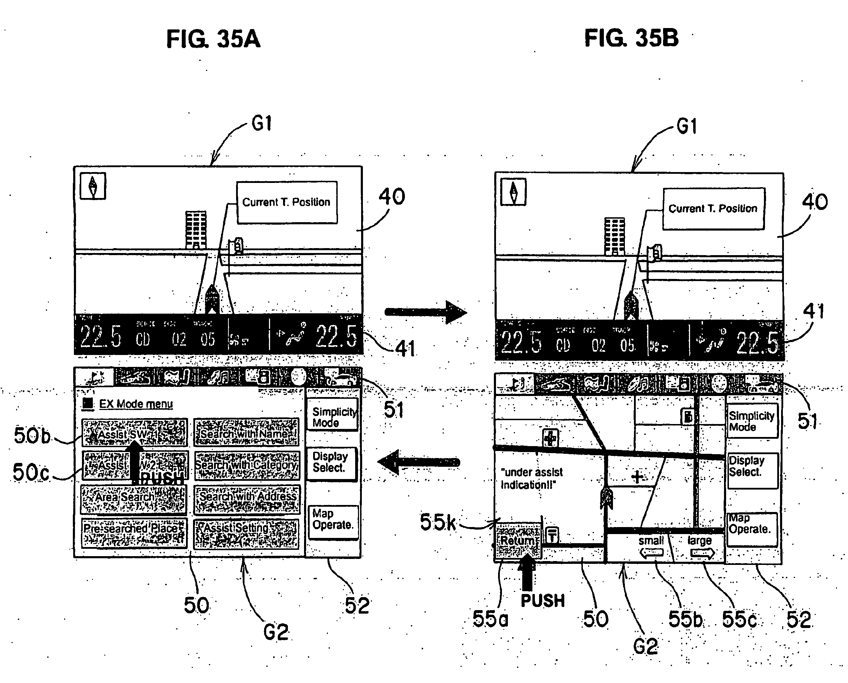

FIGS. 35A, 35B are explanatory views of the first and second displays G1, G2 showing an indication control to make the second display G2 indicate first-display related information (the visual information or its related information) when an assist switch is operated (see arrow "PUSH" in FIG. 35A). As shown in FIG. 35A, at the main indication portion 50 are provided two assist switches 50b, 50c (assist SW1, assist SW2) for the indication control of the first and second displays G1, G2 by the assist control portion 36, as an operational switch of the mode menu. By operating the assist switches 50b, 50c, the indication control to make the first display G1 indicate the second-display related information and/or make the second display G2 indicate the first-display related information by the assist control portion 36 can be easily executed according to the passenger's will.

When the assist switches 50b, 50c are not operated, the first display G1 indicates the map information and the icon indication portion 41 and the second display G2 indicates the standard mode selection indication image. And, when the first assist switch 50b is operated, as shown in FIG. 35A, part of the second display G2 (the main indication portion 50) indicates a second map information that is different from the map information indicated by the first display G1 in an indication manner as the first-display related information (the visual information relating to the first display). In this particular case, the map information indicated by the second display G2 as the second map information shows a larger map area than that indicated by the first display G1.

Thus, since the second display G2 indicates the visual information relating to the first display G1 according to the passenger's will with the operation of the assist switch 50b, the more various information can be indicated by the second display G2, thereby improving the facility or operability or readability. In general, changing of the indication of the first display G1 at the vehicle 1 traveling at the high speed does not happen so often compared to at the vehicle 1 traveling at the low speed or stops. Thus, opportunity of using the operation information indicated by the second display G2 may be fewer at the vehicle high-speed traveling state. Herein, by making the second display G2 indicate the first-display related information, the more various information can be indicated by the second display G2, thereby improving the facility or operability or readability further.

Also, by making the second display G2 indicate the second map information that preferably is at least partly different from the map information indicated by the first display G1 in the indication manner as the visual information relating to the first display G1, the more various map information can be utilized. Specifically, the second display G2 is made indicate the second map information that e.g. shows a larger map area than that indicated by the first display G1. Accordingly, since the first display G1 indicates the relatively specific map information and the second display G2 indicates the map information with the enlarged map area, various map information with a combination of the first and second displays G1, G2 can be indicated, thereby improving the facility further.

On the map information of the second display G2 at the vehicle high-speed traveling state are provided a return button 55a operative to return to an original indication without indicating the map information (see FIG. 35A), a scale-down button 55b operative to indicate the map information with a down scale, and an enlargement button 55c operative to indicate the map information with an enlarged scale. The indication of the second display G2 can be returned by operating the return button 55a (see arrow "PUSH" in FIG. s). Instead, this indication returning of the second display G2 may be attained by the lapse of time that preferably is the same as the case described above referring to FIG. 33.

Also, at the map information of the second display G2 by the operation of the first assist switch 50b preferably is provided a warning indication portion 55k operative to show a warning of "under assist function operation!!" as a warning device for warning the passenger that the indication control by the assist control portion 36 according to the vehicle traveling state is under execution. Accordingly, the execution of the indication control by the assist control portion 36 can be warned the passenger by the warning indication portion 55k, thereby improving the facility or operability or understandability further.

Herein, the map information, not specifically illustrated, that shows an enlarged map area that is located in front of the traveling vehicle 1 compared to the map information indicated by the first display G1 may be used at the vehicle high-speed traveling state as the map information indicated by the second display G2 with the operation of the first assist switch 50b, instead of the above-described map information. In this case, the various map information with the combination of the first and second displays G1, G2 can be indicated as well, thereby improving the facility or operability or readability further.

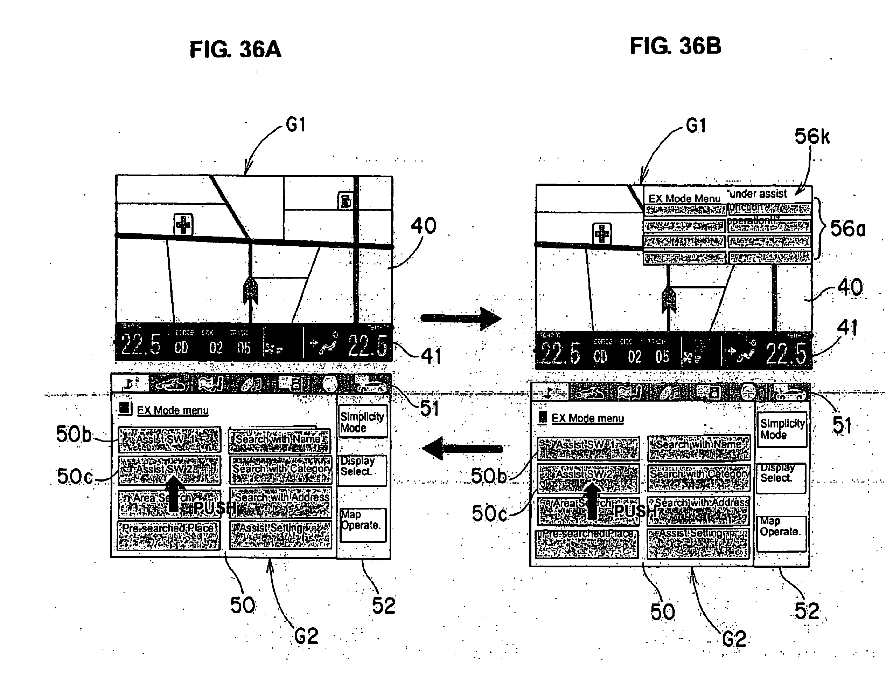

FIGS. 36A, 36B are explanatory views of the first and second displays G1, G2 showing an indication control to make the first display G1 indicate second-display related information (operation information or its related information) when the assist switch 50b/50c is operated (see arrow "PUSH"). When the assist switches 50b, 50c are not operated, the first display G1 indicates the map information and the icon indication portion 41 and the second display G2 indicates the standard mode selection indication image.

And, when the second assist switch 50c is operated (see arrow "PUSH"), as shown in FIG. 36B, part of the second display G2 (the right upper part of the main indication portion 40) indicates at least part of the operation information of the second display G2 as the second-display related information. The indication of the second display G2 can be returned to the original or standard one (see FIG. 36A) by operating the second assist switch 50c again. Herein, a warning indication portion 56k operative to show the warning of "under assist function operation!!" preferably is provided at the first display G1 as well.

In general, as described above, changing of the indication of the first display G1 at the vehicle 1 traveling at the low speed or stop may be demanded more compared to at the vehicle traveling at the high speed. Herein, by making the first display G1 indicate at least part of the second-display related information in addition to the second display G2, the second-display related information can be indicated more variously, thereby improving the facility or operability or readability.

Herein, information that is different from the switch information of the second display G2 in an indication manner may be indicated by the first display G1 as the second-display related information. In this case, the switch information relating to the second display G2 can be indicated in various manners.

Further, operation information that is obtained through a simplification from the operation information of the second display G1, for example, through a scale down, as the operation information relating to the second display G1, may be indicated by the first display G1. Thereby, the operation information of the second display G2 can be indicated by the first display G1 without making the indication of the first display G1 complicated.

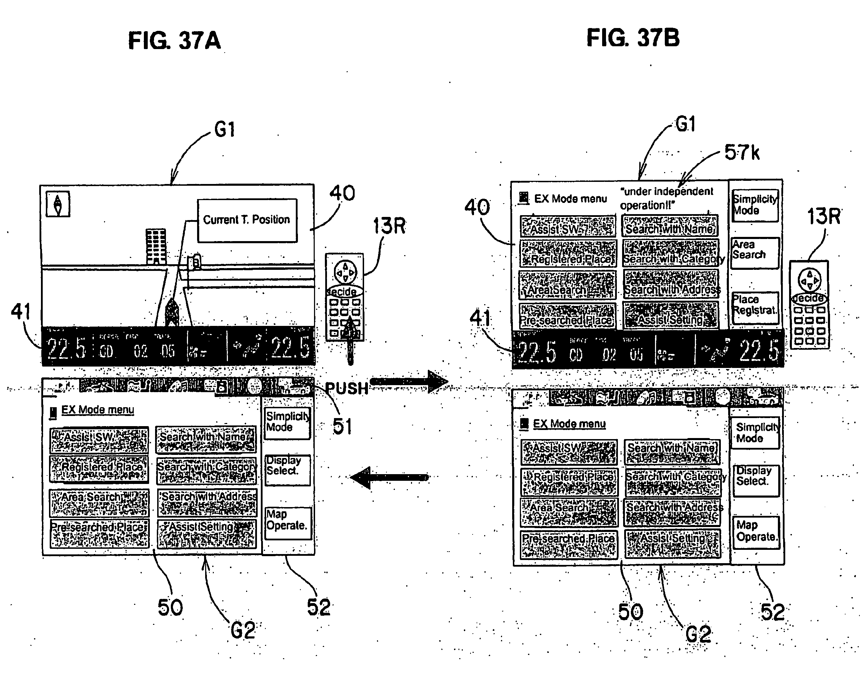

FIGS. 37A, 37B are explanatory views of the first and second displays G1, G2 showing an indication control to conduct an operation to visual information indicated by the first display G1 according to the remote control 13R. When the remote control 13R is not operated, the first display G1 at least partly indicates the map information and the icon indication portion 41 and the second display G2 indicates the standard mode selection indication image e.g. as shown in FIG. 37A.

And, when the remote control 13R is operated, as shown in FIG. 37B, the first display G1 indicates main part of the operation information of the second display G2 as the second-display related information. The indication of the second display G2 can be returned to the original or standard one (see FIG. 37A) by operating the remote control 13R. Herein, a warning indication portion 57k operative to show the warning of "under independent operation!!" preferably is provided at the first display as well.

Herein, when the visual information of the first display G1 is operated by the remote control 13R (see arrow "PUSH"), the first display G1 is configured to be operated only by the remote control 13R, namely independently, Thereby, the indication control of the first display G1 can be properly prevented from becoming toomuch complicated.

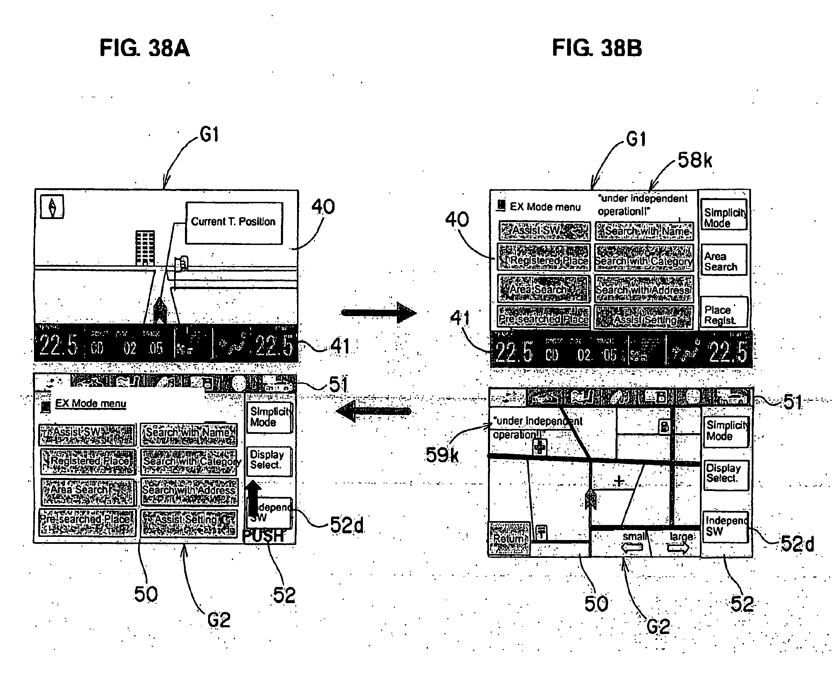

FIGS. 38A, 38B are explanatory views of the first and second displays G1, G2 showing an indication control to conduct an operation to visual information indicated by the first display G1 according to an operation of at least one independent switch provided at the first display G1. As shown in FIGS. 38A, 38B, at or near a portion (e.g. at a lower end portion) of the indication portion 52 of the first display G1 is provided at least one independent switch 52d to operate the visual information indicated by the first display G1 preferably independently from other switches. When the independent switch 52d is not operated, the first display G1 indicates the map information and/or the icon indication portion 41 and the second display G2 indicates the standard mode selection indication image as shown in FIG. 38A.

And, when the independent switch 52d is operated, as shown in FIG. 38B, the first display G1 indicates main part of the operation information of the second display G2 as the second-display related information. The indication of the second display G2 can be returned to the original one (see FIG. 38A) by operating the independent switch 52d again. Herein, a warning indication portion 58k operative to show the warning of "under independent operation!!" is provided at the first display G1 as well.

And, when the visual information of the first display G1 is operated by the independent switch 52d, the second display G2 indicates the map information having the larger map area as shown in FIG. 38B as the first-display related information. Thus, the visual information can be indicated variously, thereby improving the facility further. Herein, a warning indication portion 59k operative to show the warning of "under independent operation!!" preferably is provided at the first display G1 as well. When the visual information indicated by the first display G1 is operated by the independent switch 52d, the second display G2 may indicate the visual information of the first display G1 itself.

Herein, although the first display G1 indicates the visual information and the second display G2 indicates the operation information to operate the visual information indicated by the first display G1, when either one of displays G1, G2 is out of order, the other one may be configured to indicate the information to be indicated by this display that is out of order.

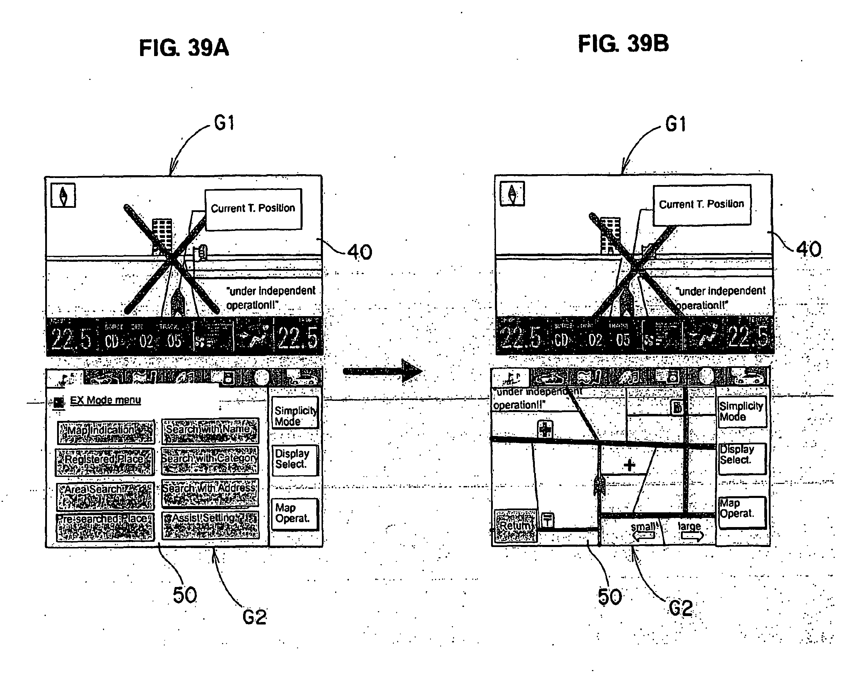

FIGS. 39A, 39B are explanatory views of the first and second displays G1, G2 showing an indication control to make the second display G2 indicate the visual information of the first display G1 when the first display G1 is out of order. In the figures, an image of the display that is out of order is shown with a mark x.

The second display G2 indicates the operation information normally as shown in FIG. 39A. When the first display G1 is out of order, as shown in FIG. 39B, the second display G2 indicates the map information having the larger area than the map information of the first display G1, as the information relating to the visual information to be indicated by the first display G1, that is similar to one shown in FIG. 35B. Thus, the operation of this map information indicated is available. Thereby, the utility and facility of the visual information can be ensured even when the first display G1 is out of order. Herein, when the first display G1 is out of order, the visual information to be indicated by the first display G1 may be indicated by the second display G2.

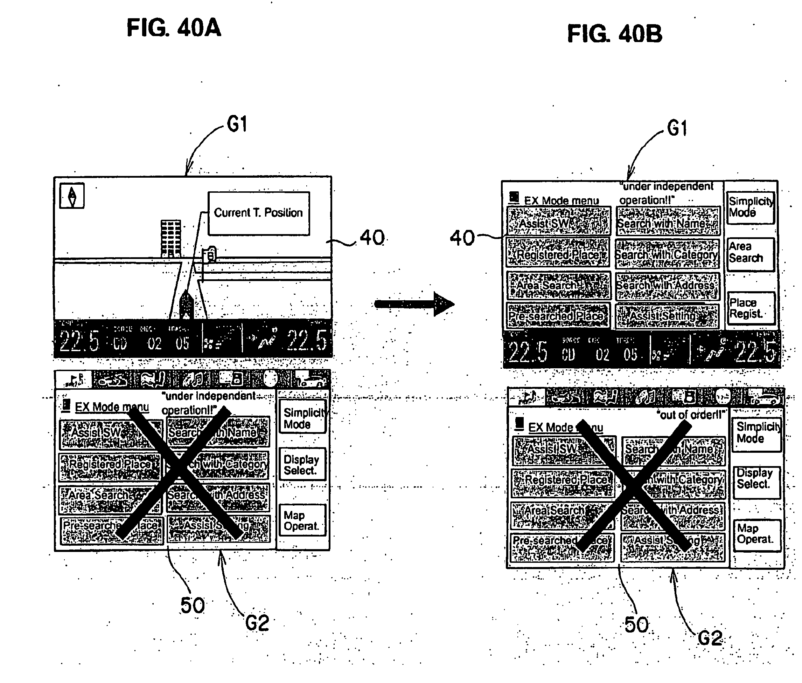

FIGS. 40A, 40B are explanatory views of the first and second displays G1, G2 showing an indication control to make the first display G1 indicate the visual information of the second display G2 when the second display is out of order. Herein, likewise, the image of the display that is out of order is shown with the mark x. The first display G1 indicates the visual information normally as shown in FIG. 40A. When the second display G2 is out of order, as shown in FIG. 40B, the first display G1 indicates the operation information or its related information to be indicated by the second display G2. Thus, the operation of this operation information indicated is available. Thereby, the operation of the visual information can be ensured even when the second display G2 is out of order.

It should be understood that the first display G1 and/or the second display G2 may be arranged according to the invention in a way different than the above described, e.g. the first display G1 and/or the second display G2 may be arranged independently of the central console portion 2c e.g. by being separately placed on the instrument panel 2, mounted to the windshield 3 (e.g. by one or more ventouses) and/or to the rear-vision mirror (not shown) or by being incorporated into meters of the instrument panel (such as a display in meterconfiguration where a display is underlaid to or at least partly overlapping with a speed meter or to any other portion of the meter portion (not shown) of the instrument panel 2 substantially in correspondence to (or substantially behind as seen from the driver) the steering wheel 4). The first display G1 and/or the second display G2 may also or alternatively be at least partly projected on the windshield 3.

## Claims

1. An information indication device for a vehicle (1), comprising;
at least one first indication device (D1) with a first display (G1), the first display (G1) indicating at least visual information;
at least one second indication device (D2) with a second display (G2), the second display (G2) indicating at least operation information for operating the visual information indicated by the first display (G1);
an operation detecting device (Pd) provided at or in connection with the second indication device (D2) and operative to detect an operation by a passenger that is conducted to the operation information indicated by the second display (G2);
an operation signal generating device (32) operative to generate at least one operation signal based on the operation information indicated by the second display (G2) and a detecting signal of the operation detecting device (Pd);
a first indication control device (31) operative to control an indication state of the information on the first display (G1) based on the operation signal generated by the operation signal generating device (32); and
wherein the second indication control device (36) is operative to make the first display (G1) indicate the operation information and/or to make the second display (G2) indicate the visual information according to the operation of the passenger; and
the second indication control device (36) is operative to make the second display (G2) indicate the visual information relating to the first display (G1) according to the operation of the passenger on the first display (G1);
**characterized in that**
when the passenger executes an operation for changing scale of map information, the second indication control device (36) is operative to make the second display (G2) indicate map information that is indicated by the first display (G1), the map information indicated by the second display (G2) being old map information whose scale has not changed or having a scale that is reverse to the scale of map information indicated by the first display (G1) or relating to camera-image information that is indicated by the first display (G1).

2. An information indication device for a vehicle (1), comprising;
at least one first indication device (D1) with a first display (G1), the first display (G1) indicating at least visual information;
at least one second indication device (D2) with a second display (G2), the second display (G2) indicating at least operation information for operating the visual information indicated by the first display (G1);
an operation detecting device (Pd) provided at or in connection with the second indication device (D2) and operative to detect an operation by a passenger that is conducted to the operation information indicated by the second display (G2);
an operation signal generating device (32) operative to generate at least one operation signal based on the operation information indicated by the second display (G2) and a detecting signal of the operation detecting device (Pd);
a first indication control device (31) operative to control an indication state of the information on the first display (G1) based on the operation signal generated by the operation signal generating device (32); and
wherein the second indication control device (36) is operative to make the first display (G1) indicate the operation information and/or to make the second display (G2) indicate the visual information according to the vehicle traveling state;
wherein the second indication control device (36) is operative to make the second display (G2) indicate the visual information relating to the first display (G1), according to the vehicle traveling state;
**characterized in that**
the map information indicated by the second display (G2) shows a larger map area than that indicated by the first display (G1) at a vehicle high-speed traveling state;
wherein in a case where the first display (G1) indicates map information, the second indication control device (36) is operative to make the second display (G2) indicate map information that is more specific than that indicated by the first display (G1), as the visual information relating to the first display (G1), at a vehicle low-speed traveling state.

3. The information indication device for a vehicle (1) of any one of the preceding claims, wherein the map information indicated by the second display (G2) shows an enlarged map area that is located in front of the traveling vehicle (1) compared to the map information indicated by the first display (G1) at a vehicle high-speed traveling state.

4. The information indication device for a vehicle (1) of any one of the preceding claims, wherein in a case where the first display (G1) indicates map information, the second indication control device (36) is operative to make the second display is (G2) indicate information of service area and/or interchange based on the map information indicated by the first display (G1), as the visual information relating to the first display (G1), at a vehicle expressway traveling state.

5. The information indication device for a vehicle (1) of any one of the preceding claims, wherein the second indication control device (36) is operative to make the second display (G2) at least partly indicate the visual information relating to the first display (G1) on part of the second display (G2) at a vehicle low-speed traveling state.

6. The information indication device for a vehicle (1) of any one of the preceding claims, wherein the visual information is displayed on the second display (G2) at an area that is on a side closer to a driver.

7. The information indication device for a vehicle (1) of any one of the preceding claims, wherein in a case where the first display (G1) indicates map information, the second indication control device (36) is operative to make the second display (G2) indicate circumference information based on the map information indicated by the first display (G1), as the visual information relating to the first display (G1), at a vehicle urban-area traveling state.

8. The information indication device for a vehicle (1) of any one of the preceding claims, wherein the second indication control device (36) is operative to make the first display (G1) at least partly indicate the operation information relating to the second display (G2) at a vehicle low-speed traveling state or a vehicle stop state.

9. The information indication device for a vehicle (1) of any one of the preceding claims, wherein the second indication control device (36) is operative to make the first display (G1) indicate explanation of contents of the operation information indicated by the second display (G2), as the operation information relating to the second display (G2).

10. The information indication device for a vehicle (1) of any one of the preceding claims, wherein the second indication control device (36) is operative to make the first display (G1) indicate information that is obtained through a simplification from the operation information indicated by the second display (G2), as the operation information relating to the second display (G2).

11. The information indication device for a vehicle (1) of any one of the preceding claims, wherein the second indication control device (36) is operative to make the first display (G1) indicate hierarchical operation contents of the operation information indicated by the second display (G2), as the operation information relating to the second display (G2).

12. The information indication device for a vehicle (1) of any one of the preceding claims, wherein the second indication control device (36) is operative to make the first display (G1) indicate at least part of the operation information indicated by the second display (G2), as the operation information relating to the second display (G2).

13. The information indication device for a vehicle (1) of any one of claims 8 through 12, wherein the indication control by the second indication control device (36) is to make the first display (G1) indicate the operation information relating to the second display (G2) is prohibited while the vehicle (1) is accelerated at the vehicle low-speed traveling state.

14. The information indication device for a vehicle (1) of any one of the preceding claims, wherein near at a driver's hand is provided an operational device (10) that conducts the operation by the passenger that is conducted to the operation information indicated by the second display (G2), and an icon indication portion (41) that corresponds to operation contents of the operational device (10) is indicated by the first display (G1) at the vehicle traveling state.

15. The information indication device for a vehicle (1) of claim 14, wherein the indication of the icon indication portion (41) by the first display (G1) is stopped at a vehicle stop state.

16. The information indication device for a vehicle (1) of any one of the preceding claims, wherein the first display (G1) is provided at a location where a driver can view the first display (G1) with a relatively-short movement of driver's eyes during a vehicle driving, and the second display (G2) is provided at another location, which is closer to the driver than the first display (G1), where a relatively long movement of driver's eyes is necessary to view the second display (G2) during the vehicle driving.

17. The information indication device for a vehicle (1) of any one of the preceding claims, wherein there is provided a warning device operative to warn the passenger when the indication control by the second indication control device (36) is executed.

18. The information indication device for a vehicle (1) of any one of the preceding claims, wherein there is provided a setting device operative to set contents of the vindication control by the second indication control device (36).

19. The information indication device for a vehicle (1) of any one of the preceding claims, wherein the first display (G1) is configured to be larger than the second display (G2).

20. The information indication device for a vehicle (1) of any one of the preceding claims, wherein the second display (G2) is configured such that a vertical center line (L2) of the second display (G2) is inclined toward a driver's seat (5).

21. The information indication device for a vehicle (1) of any one of the preceding claims, wherein the second indication control device (36) is operative to make the first display (G1) indicate the operation information relating to the second display (G2) according to the operation of the passenger on the second display (G2).

22. The information indication device for a vehicle (1) of claim 21, wherein the second indication control device (36) is operative to make the first display (G1) indicate explanation of contents of the operation information indicated by the second display (G2) as the operation information relating to the second display (G2) when the passenger executes the operation that is conducted to the operation information indicated by the second display (G2).

23. The information indication device for a vehicle (1) of claim 21 or 22, wherein the second indication control device (36) is operative to make the first display (G1) indicate information that is obtained through a simplification from the operation information indicated by the second display (G2) as the operation information relating to the second display (G2) when the passenger executes the operation that is conducted to the operation information indicated by the second display (G2).

24. The information indication device for a vehicle (1) of claim 21, 22 or 23, wherein the second indication control device (36) is operative to make the first display (G1) indicate hierarchical operation contents of the operation information indicated by the second display (G2) as the operation information relating to the second display (G2) when the passenger executes the operation that is conducted to the operation information indicated by the second display (G2).

25. The information indication device for a vehicle (1) of claim 21, 22, 23 or 24, wherein the second indication control device (36) is operative to make the first display (G1) indicate destination-related information when the passenger executes an operation for setting destination of vehicle travelling.

26. The information indication device for a vehicle (1) of claim 25, wherein the destination-related information indicated by the first display (G1) is shown so as to at least partly overlap with map information indicated by the first display (G1)

27. The information indication device for a vehicle (1) of any of the preceding claims 21 to 26, wherein the map information indicated by the first display (G1) is changed according to the destination-related information.

28. The information indication device for a vehicle (1) of any of the preceding claims 21 to 27, wherein the second indication control device (36) is operative to make the first display (G1) indicate searched information when the passenger executes an operation for information search.

29. The information indication device for a vehicle (1) of any of the preceding claims 21 to 28, wherein the second indication control device (36) is operative to make the first display (G1) indicate future-prediction information of searched traffic-congestion information that is indicated by the second display (G2) when the passenger executes an operation for traffic-congestion information search.

30. The information indication device for a vehicle (1) of claim 29, wherein future time for prediction of the future-prediction information is controllable.

31. The information indication device for a vehicle (1) of any of the preceding claims 21 to 30, wherein the second indication control device (36) is operative to make the first display (G1) indicate at least part of the .operation information when the passenger executes an operation in which the operation information increases.

32. The information indication device for a vehicle (1) of claim 31, wherein low-priority operation information is indicated by the first display (G1).

33. The information indication device for a vehicle (1) of any of the preceding claims 21 to 32, wherein when the passenger executes an operation for scrolling the operation information, the second indication control device (36) is operative to make the first display (G1) indicate at least part of deleted information through the scrolling operation.

34. The information indication device for a vehicle (1) of any one of the preceding claims, wherein when the passenger executes an operation for map information, the second indication control device (36) is operative to make the second display (G2) indicate the map information that is indicated by the first display (G1).

35. The information indication device for a vehicle (1) of any one of the preceding claims, wherein when the passenger executes an operation for scrolling map information, the second indication control device (36) is operative to make the second display (G2) indicate map information that shows a larger map area than that indicated by the first display (G1), as the visual information relating to the first display (G1).

36. The information indication device for a vehicle (1) of any one of the preceding claims, wherein the reverse scale of the map information that is indicated by the second display (G2) is restricted within a specified range.

37. The information indication device for a vehicle (1) of any of the preceding claims, wherein when the passenger executes an operation of the visual information, the second indication control device (36) is operative to make the second display (G2) indicate visual information for confirmation relating to the operation by the passenger for a specified time.

38. The information indication device for a vehicle (1) of any of the preceding claims, wherein when the passenger executes an operation in which the visual information indicated by the first display (G1) increases, the second indication control device (36) is operative to make the second display (G2) indicate at least part of the visual information.

39. The information indication device for a vehicle (1) of claim 38, wherein low-priority visual information is indicated by the second display (G2).

40. The information indication device for a vehicle (1) of any of the preceding claims, wherein when the passenger executes an operation for scrolling the visual information, the second indication control device (36) is operative to make the second display (G2) indicate at least part of deleted information through the scrolling operation.

41. The information indication device for a vehicle (1) of any one of the preceding claims, wherein the first display (G1) is provided at a location where a driver can view the first display (G1) with a relatively-short movement of driver's eyes during a vehicle driving, and the second display (G2) is provided at another location, which is closer to the driver than the first display (G1), where a relatively long movement of driver's eyes is necessary to view the second display (G2) during the vehicle driving.

42. The information indication device for a vehicle (1) of claim 41, wherein there is provided a switch (50a) for controlling the second indication control device (36).

43. The information indication device for a vehicle (1) of claim 42, wherein the switch (50a) is indicated by the second display (G2).

44. The information indication device for a vehicle (1) of any one of claims 41 through 43, wherein the visual information indicated by the second display (G2) with the second indication control device (36) is different from the visual information indicated by the first display (G1) in an indication manner.

45. The information indication device for a vehicle (1) of any one of claims 41 through 43, wherein the operation information indicated by the first display (G1) with the second indication control device (36) is different from the operation information indicated by the second display (G2) in an indication manner.

46. The information indication device for a vehicle (1) of any of the preceding claims 41 to 45, wherein near at a driver's hand is provided an operational device (10) that conducts the operation by the passenger that is conducted to the operation information indicated by the second display (G2), and an icon indication portion (41) that corresponds to operation contents of the operational device (10) is indicated by the first display (G1) when the operation device is operated.

47. The information indication device for a vehicle (1) of any of the preceding claims 41 to 46, wherein there is provided another operational device (13; 52d) to operate the visual information indicated by the first display (G1).

48. The information indication device for a vehicle (1) of claim 47, wherein when the visual information indicated by the first display (G1)is operated by the operational device (13), the first display (G1) is configured to be operated only by the operational device (13).

49. The information indication device for a vehicle (1) of claims 47 or 48,
wherein when the visual information indicated by the first display (G1) is operated by the operational device (52d), the visual information indicated by the first display (G1) is indicated by the second display (G2), whereby the visual information indicated can be operated.

50. The information indication device for a vehicle (1)of any of the preceding claims 41 to 49, wherein when the first display (G1) is out of order, the visual information indicated by the first display (G1) is indicated by the second display (G2), whereby the visual information indicated can be operated.

51. The information indication device for a vehicle (1) of claim 47, 48, 49 or 50, wherein when the second display (G2) is out of order, the visual information indicated by the first display (G1) can be operated by the operational device.

52. The information indication device for a vehicle (1) of any one of claims, 41 through 51, wherein there is provided a warning device operative to warn the driver when the indication control by the second indication control device (36) is executed.

53. The information indication device for a vehicle (1) of any one of claims, 41 through 52, wherein there is provided a setting device operative to set contents of the indication control by the second indication control device (36).

54. The information indication device for a vehicle (1) of any one of claims 41 through 53, wherein the first display (G1) is configured to be larger than the second display (G2).

55. The information indication device for a vehicle (1) of any one of claims 41 through 54, wherein the second display (G2) is configured such that a vertical center line (L2) of the second display (G2) is inclined toward a driver's seat (5).

56. An information indication method for a vehicle (1) comprising an information indication device comprising at least one first indication device (D1) with a first display (G1), the first display (G1) indicating at least visual information and at least one second indication device (D2) with a second display (G2), the second display (G2) indicating at least operation information for operating the visual information indicated by the first display (G1), the method comprising the following steps:
detecting an operation by a passenger that is conducted to the operation information indicated by the second display (G2) by means of an operation detecting device (Pd) provided at or in connection with the second indication device (D2);
generating at least one operation signal by means of an operation signal generating device (32) based on the operation information indicated by the second display (G2) and a detecting signal of the operation detecting device (Pd);
controlling an indication state of the information on the first display (G1) based on the operation signal generated by the operation signal generating device (32); and
operating the second indication control device (36) so as to make the first display (G1) indicate the operation information and/or make the second display (G2) indicate the visual information according to the operation of the passenger; and
operating the second indication control device (36) so as to make the second display (G2) indicate the visual information relating to the first display (G1) according to the operation of the passenger on the first display (G1);
**characterized by**
when the passenger executes an operation for changing scale of map information, operating the second indication control device (36) so as to make the second display (G2) indicate map information that is indicated by the first display (G1), the map information indicated by the second display (G2) being old map information whose scale has not changed or having a scale that is reverse to the scale of map information indicated by the first display (G1) or relating to camera-image information that is indicated by the first display (G1).

57. Computer program product comprising computer-readable instructions which, when loaded and executed on a suitable system perform an information indication method for a vehicle (1) according to claim 56.

## Patentansprüche

1. Informationsangabevorrichtung für ein Fahrzeug (1), umfassend:
zumindest eine erste Angabevorrichtung (D1) mit einer ersten Anzeige (G1), wobei die erste Anzeige (G1) zumindest visuelle Informationen angibt;
zumindest eine zweite Angabevorrichtung (D2) mit einer zweiten Anzeige (G2), wobei die zweite Anzeige (G2) zumindest Bedien- bzw. Betätigungsinformationen zum Bedienen bzw. Betätigen der visuellen Informationen angibt, die von der ersten Anzeige (G1) angegeben werden;
eine Bedien- bzw. Betätigungsdetektiervorrichtung (Pd), die an oder in Verbindung mit der zweiten Angabevorrichtung (D2) vorgesehen ist und wirksam ist, eine durch den Fahrgast vorgenommene Betätigung der Bedieninformationen zu detektieren, die von der zweiten Anzeige (G2) angegeben werden;
eine Bedien- bzw. Betätigungssignalerzeugungsvorrichtung (32), die wirksam ist, um zumindest ein Bedien- bzw. Betätigungssignal basierend auf den Bedieninformationen, die von der zweiten Anzeige (G2) angegeben werden, und einem Detektiersignal der Bediendetektiervorrichtung (Pd) zu erzeugen;
eine erste Angabesteuer- bzw. -regelvorrichtung (31), die wirksam ist, einen Angabezustand der Informationen der ersten Anzeige (G1) basierend auf dem von der Bediensignalerzeugungsvorrichtung (32) erzeugten Bediensignal zu steuern bzw. zu regeln; und
wobei die zweite Angabesteuer- bzw. -regelvorrichtung (36) wirksam ist, die erste Anzeige (G1) zu veranlassen, die Bedieninformationen anzugeben, und/oder die zweite Anzeige (G2) zu veranlassen, die visuellen Informationen gemäß der Bedienung durch den Fahrgast anzugeben; und
die zweite Angabesteuer- bzw. -regelvorrichtung (36) wirksam ist, die zweite Anzeige (G2) zu veranlassen, die die erste Anzeige (G1) betreffenden visuellen Informationen gemäß der Bedienung durch den Fahrgast auf der ersten Anzeige (G1) anzugeben;
**dadurch gekennzeichnet, dass**
wenn der Fahrgast eine Bedienung zum Ändern des Maßstabs von Karteninformationen durchführt, die zweite Angabesteuer- bzw. -regelvorrichtung (36) wirksam ist, die zweite Anzeige (G2) zu veranlassen, Karteninformationen anzugeben, die von der ersten Anzeige (G1) angegeben werden, wobei die Karteninformationen, die von der zweiten Anzeige (G2) angegeben werden, alte Karteninformationen sind, deren Maßstab sich nicht geändert hat oder die einen Maßstab aufweisen, der umgekehrt zu dem Maßstab der Karteninformationen ist, die von der ersten Anzeige (G1) angegeben werden oder Kamerabildinformationen betreffen, die von der ersten Anzeige (G1) angegeben werden.

2. Informationsangabevorrichtung für ein Fahrzeug (1), umfassend:
zumindest eine erste Angabevorrichtung (D1) mit einer ersten Anzeige (G1), wobei die erste Anzeige (G1) zumindest visuelle Informationen angibt;
zumindest eine zweite Angabevorrichtung (D2) mit einer zweiten Anzeige (G2), wobei die zweite Anzeige (G2) zumindest Bedien- bzw. Betätigungsinformationen zum Bedienen bzw. Betätigen der visuellen Informationen angibt, die von der ersten Anzeige (G1) angegeben werden;
eine Bedien- bzw. Betätigungsdetektiervorrichtung (Pd), die an oder in Verbindung mit der zweiten Angabevorrichtung (D2) vorgesehen ist und wirksam ist, eine durch den Fahrgast vorgenommene Betätigung der Bedieninformationen zu detektieren, die von der zweiten Anzeige (G2) angegeben werden;
eine Bedien- bzw. Betätigungssignalerzeugungsvorrichtung (32), die wirksam ist, um zumindest ein Bedien- bzw. Betätigungssignal basierend auf den Bedieninformationen, die von der zweiten Anzeige (G2) angegeben werden, und einem Detektiersignal der Bediendetektiervorrichtung (Pd) zu erzeugen;
eine erste Angabesteuer- bzw. -regelvorrichtung (31), die wirksam ist, einen Angabezustand der Informationen der ersten Anzeige (G1) basierend auf dem von der Bediensignalerzeugungsvorrichtung (32) erzeugten Bediensignal zu steuern bzw. zu regeln; und
wobei die zweite Angabesteuer- bzw. -regelvorrichtung (36) wirksam ist, die erste Anzeige (G1) zu veranlassen, die Bedieninformationen anzugeben, und/oder die zweite Anzeige (G2) zu veranlassen, die visuellen Informationen gemäß dem Fahrzeugfahrtzustand anzugeben;
wobei die zweite Angabesteuer- bzw. -regelvorrichtung (36) wirksam ist, die zweite Anzeige (G2) zu veranlassen, die die erste Anzeige (G1) betreffenden visuellen Informationen gemäß dem Fahrzeugfahrtzustand anzugeben;
**dadurch gekennzeichnet, dass**
die Karteninformationen, die von der zweiten Anzeige (G2) angegeben werden, einen größeren Kartenbereich als denjenigen zeigen, der von der ersten Anzeige (G1) in einem Fahrzeughochgeschwindigkeitsfahrzustand angegeben wird;
wobei in einem Fall, wo die erste Anzeige (G1) Karteninformationen angibt, die zweite Angabesteuer- bzw. -regelvorrichtung (36) wirksam ist, die zweite Anzeige (G2) zu veranlassen, Karteninformationen, die spezifischer bzw. genauer sind als diejenigen, die von der ersten Anzeige (G1) angegeben werden, als die die erste Anzeige (G1) betreffenden visuellen Informationen in einem Fahrzeugniedergeschwindigkeitsfahrzustand anzugeben.

3. Informationsangabevorrichtung für ein Fahrzeug (1) nach einem der vorhergehenden Ansprüche, wobei die von der zweiten Anzeige (G2) angegebenen Karteninformationen einen vergrößerten Kartenbereich zeigen, der sich vor dem fahrenden Fahrzeug (1) befindet, und zwar verglichen mit Karteninformationen, die von der ersten Anzeige (G1) in einem Fahrzeughochgeschwindigkeitsfahrzustand angegeben werden.

4. Informationsangabevorrichtung für ein Fahrzeug (1) nach einem der vorhergehenden Ansprüche, wobei in einem Fall, wo die erste Anzeige (G1) Karteninformationen angibt, die zweite Angabesteuer- bzw. -regelvorrichtung (36) wirksam ist, die zweite Anzeige (G2) zu veranlassen, Informationen zu Rasthöfen und/oder Autobahnkreuzen basierend auf Karteninformationen, die von der ersten Anzeige (G1) angegeben werden, als die die ersten Anzeige (G1) betreffenden visuellen Informationen in einem Fahrzeugautobahnfahrtzustand anzugeben.

5. Informationsangabevorrichtung für ein Fahrzeug (1) nach einem der vorhergehenden Ansprüche, wobei die zweite Angabesteuer- bzw. -regelvorrichtung (36) wirksam ist, die zweite Anzeige (G2) zu veranlassen, die die erste Anzeige (G1) betreffenden Informationen auf einem Teil der zweiten Anzeige (G2) in einem Fahrzeugniedergeschwindigkeitsfahrzustand zumindest teilweise anzugeben.

6. Informationsangabevorrichtung für ein Fahrzeug (1) nach einem der vorhergehenden Ansprüche, wobei die visuellen Informationen auf der zweiten Anzeige (G2) an einem Bereich angegeben werden, der sich auf einer Seite näher an dem Fahrer befindet.

7. Informationsangabevorrichtung für ein Fahrzeug (1) nach einem der vorhergehenden Ansprüche, wobei in einem Fall, wo die ersten Anzeige (G1) Karteninformationen angibt, die zweite Angabesteuer- bzw. -regelvorrichtung (36) wirksam ist, die zweite Anzeige (G2) zu veranlassen, Umgebungsinformationen basierend auf den Karteninformationen, die von der ersten Anzeige (G1) angegeben werden, als die die ersten Anzeige (G1) betreffenden visuellen Informationen in einem Fahrzeugstadtbereichfahrtzustand anzugeben.

8. Informationsangabevorrichtung für ein Fahrzeug (1) nach einem der vorhergehenden Ansprüche, wobei die zweite Angabesteuer- bzw. -regelvorrichtung (36) wirksam ist, die erste Anzeige (G1) zu veranlassen, die die zweite Anzeige (G2) betreffenden Bedieninformationen in einem Fahrzeugniedergeschwindigkeitsfahrzustand oder einem Fahrzeugstoppzustand zumindest teilweise anzugeben.

9. Informationsangabevorrichtung für ein Fahrzeug (1) nach einem der vorhergehenden Ansprüche, wobei die zweite Angabesteuer- bzw. -regelvorrichtung (36) wirksam ist, die erste Anzeige (G1) zu veranlassen, eine Erklärung zum Inhalt der von der zweiten Anzeige (G2) angegebenen Bedieninformationen als die die zweite Anzeige (G2) betreffenden Bedieninformationen anzugeben.

10. Informationsangabevorrichtung für ein Fahrzeug (1) nach einem der vorhergehenden Ansprüche, wobei die zweite Angabesteuer- bzw. -regelvorrichtung (36) wirksam ist, die erste Anzeige (G1) zu veranlassen, Informationen, die durch eine Vereinfachung aus den von der zweiten Anzeige (G2) angegebenen Bedieninformationen erhalten werden, als die die zweite Anzeige (G2) betreffenden Bedieninformationen anzugeben.

11. Informationsangabevorrichtung für ein Fahrzeug (1) nach einem der vorhergehenden Ansprüche, wobei die zweite Angabesteuer- bzw. -regelvorrichtung (36) wirksam ist, die erste Anzeige (G1) zu veranlassen, hierarchische Bedieninhalte der von der zweiten Anzeige (G2) angegebenen Bedieninformationen als die die zweite Anzeige (G2) betreffenden Bedieninformationen anzugeben.

12. Informationsangabevorrichtung für ein Fahrzeug (1) nach einem der vorhergehenden Ansprüche, wobei die zweite Angabesteuer- bzw. -regelvorrichtung (36) wirksam ist, die erste Anzeige (G1) zu veranlassen, zumindest einen Teil der von der zweiten Anzeige (G2) angegebenen Bedieninformationen als die die zweite Anzeige (G2) betreffenden Bedieninformationen anzugeben.

13. Informationsangabevorrichtung für ein Fahrzeug (1) nach einem der Ansprüche 8 bis 12, wobei die Angabesteuerung bzw. -regelung durch die zweite Angabesteuer- bzw. -regelvorrichtung (36), die wirksam ist, um die erste Anzeige (G1) zu veranlassen, die die zweite Anzeige (G2) betreffenden Bedienformationen anzugeben, verboten ist, während das Fahrzeug (1) in dem Fahrzeugniedergeschwindigkeitsfahrzustand beschleunigt wird.

14. Informationsangabevorrichtung für ein Fahrzeug (1) nach einem der vorhergehenden Ansprüche, wobei nahe der Hand eines Fahrers eine Bedien- bzw. Betätigungsvorrichtung (10) vorgesehen ist, welche die Bedienung bzw. Betätigung durch den Fahrgast durchführt, die zu den Bedieninformationen durchgeführt wird, die von der zweiten Anzeige (G2) angegeben werden, und ein Icon-Angabeabschnitt (41), der Bedieninhalten der Bedienvorrichtung (10) entspricht, von der ersten Anzeige (G1) im Fahrzeugbewegungszustand angegeben wird.

15. Informationsangabevorrichtung für ein Fahrzeug (1) nach Anspruch 14, wobei die Angabe des Icon-Angabeabschnitts (41) durch die erste Anzeige (G1) in einem Fahrzeugstoppzustand gestoppt wird.

16. Informationsangabevorrichtung für ein Fahrzeug (1) nach einem der vorhergehenden Ansprüche, wobei die erste Anzeige (G1) an einer Stelle vorgesehen ist, wo ein Fahrer die erste Anzeige (G1) mit einer relativ kurzen Augenbewegung während des Fahrens des Fahrzeugs sehen kann, und die zweite Anzeige (G2) an einer anderen Stelle vorgesehen ist, die näher an dem Fahrer ist als die erste Anzeige (G1), wo eine relativ lange Augenbewegung des Fahrers nötig ist, um die zweite Anzeige (G2) während des Fahrens des Fahrzeugs zu sehen.

17. Informationsangabevorrichtung für ein Fahrzeug (1) nach einem der vorhergehenden Ansprüche, wobei eine Warnvorrichtung vorgesehen ist, die wirksam ist, den Fahrgast zu warnen, wenn die Angabesteuerung bzw. -regelung von der zweiten Angabesteuer- bzw. -regelvorrichtung (36) ausgeführt wird.

18. Informationsangabevorrichtung für ein Fahrzeug (1) nach einem der vorhergehenden Ansprüche, wobei eine Festlegungsvorrichtung vorgesehen ist, die wirksam ist, Inhalte der Angabesteuerung bzw. -regelung von der zweiten Angabesteuer- bzw. -regelvorrichtung (36) festzulegen.

19. Informationsangabevorrichtung für ein Fahrzeug (1) nach einem der vorhergehenden Ansprüche, wobei die erste Anzeige (G1) so konfiguriert ist, dass sie größer ist als die zweite Anzeige (G2).

20. Informationsangabevorrichtung für ein Fahrzeug (1) nach einem der vorhergehenden Ansprüche, wobei die zweite Anzeige (G2) so konfiguriert ist, dass eine vertikale Mittellinie (L2) der zweiten Anzeige (G2) zu einem Fahrersitz (5) hin geneigt ist.

21. Informationsangabevorrichtung für ein Fahrzeug (1) nach einem der vorhergehenden Ansprüche, wobei die zweite Angabesteuer- bzw. -regelvorrichtung (36) wirksam ist, die erste Anzeige (G1) zu veranlassen, die die zweite Anzeige (G2) betreffenden Bedieninformationen gemäß der Bedienung des Fahrgasts auf der zweiten Anzeige (G2) anzugeben.

22. Informationsangabevorrichtung für ein Fahrzeug (1) nach Anspruch 21, wobei die zweite Angabesteuer- bzw. -regelvorrichtung (36) wirksam ist, die erste Anzeige (G1) zu veranlassen, Erklärungen zum Inhalt der von der zweiten Anzeige (G2) angegebenen Bedieninformationen als die die zweite Anzeige (G2) betreffenden Bedieninformationen anzugeben, wenn der Fahrgast die Betätigung ausführt, die zu den Bedieninformationen durchgeführt wird, die von der zweiten Anzeige (G2) angegeben werden.

23. Informationsangabevorrichtung für ein Fahrzeug (1) nach Anspruch 21 oder 22, wobei die zweite Angabesteuer- bzw. -regelvorrichtung (36) wirksam ist, die erste Anzeige (G1) zu veranlassen, Informationen, die durch eine Vereinfachung aus den von der zweiten Anzeige (G2) angegebenen Bedieninformationen erhalten werden, als die die zweite Anzeige (G2) betreffenden Bedieninformationen anzugeben, wenn der Fahrgast die Betätigung ausführt, die zu den Bedieninformationen durchgeführt wird, die von der zweiten Anzeige (G2) angegeben werden.

24. Informationsangabevorrichtung für ein Fahrzeug (1) nach Anspruch 21, 22 oder 23, wobei die zweite Angabesteuer- bzw. -regelvorrichtung (36) wirksam ist, die erste Anzeige (G1) zu veranlassen, hierarchische Bedieninhalte der von der zweiten Anzeige (G2) angegebenen Bedieninformationen als die die zweite Anzeige (G2) betreffenden Bedieninformationen anzugeben, wenn der Fahrgast die Betätigung ausführt, die zu den Bedieninformationen durchgeführt wird, die von der zweiten Anzeige (G2) angegeben werden.

25. Informationsangabevorrichtung für ein Fahrzeug (1) nach Anspruch 21, 22, 23 oder 24, wobei die zweite Angabesteuer- bzw. -regelvorrichtung (36) wirksam ist, die erste Anzeige (G1) zu veranlassen, zielortbezogene Informationen anzugeben, wenn der Fahrgast eine Bedienung zum Festlegen des Zielorts der Fahrzeugfahrt durchführt.

26. Informationsangabevorrichtung für ein Fahrzeug (1) nach Anspruch 25, wobei die von der ersten Anzeige (G1) angegebenen zielortbezogenen Informationen so gezeigt werden, dass sie mit von der ersten Anzeige (G1) angegebenen Karteninformationen überlappen.

27. Informationsangabevorrichtung für ein Fahrzeug (1) nach einem der vorhergehenden Ansprüche 21 bis 26, wobei die von der ersten Anzeige (G1) angegebenen Karteninformationen gemäß der zielortbezogenen Informationen geändert werden.

28. Informationsangabevorrichtung für ein Fahrzeug (1) nach einem der vorhergehenden Ansprüche 21 bis 27, wobei die zweite Angabesteuer- bzw. -regelvorrichtung (36) wirksam ist, die erste Anzeige (G1) zu veranlassen, gesuchte Informationen anzugeben, wenn der Fahrgast eine Bedienung zum Suchen von Informationen durchführt.

29. Informationsangabevorrichtung für ein Fahrzeug (1) nach einem der vorhergehenden Ansprüche 21 bis 28, wobei die zweite Angabesteuer- bzw. -regelvorrichtung (36) wirksam ist, die erste Anzeige (G1) zu veranlassen, zukunftsvorhersagende Informationen von gesuchten Verkehrsstauinformationen anzugeben, die von der zweiten Anzeige (G2) angegeben werden, wenn der Fahrgast eine Bedienung zum Suchen von Verkehrsstauinformationen durchführt.

30. Informationsangabevorrichtung für ein Fahrzeug (1) nach Anspruch 29, wobei eine zukünftige Zeit zur Vorhersage der zukunftsvorhersagenen Informationen steuer- bzw. regelbar ist.

31. Informationsangabevorrichtung für ein Fahrzeug (1) nach einem der vorhergehenden Ansprüche 21 bis 30, wobei die zweite Angabesteuer- bzw. -regelvorrichtung (36) wirksam ist, die erste Anzeige (G1) zu veranlassen, zumindest einen Teil der Bedieninformationen anzugeben, wenn der Fahrgast eine Bedienung durchführt, bei dem die Bedieninformationen zunehmen.

32. Informationsangabevorrichtung für ein Fahrzeug (1) nach Anspruch 31, wobei Bedieninformationen mit niedriger Priorität von der ersten Anzeige (G1) angegeben werden.

33. Informationsangabevorrichtung für ein Fahrzeug (1) nach einem der vorhergehenden Ansprüche 21 bis 32, wobei wenn der Fahrgast eine Bedienung zum Scrollen der Bedieninformationen durchführt, die zweite Angabesteuer- bzw. -regelvorrichtung (36) wirksam ist, die erste Anzeige (G1) zu veranlassen, zumindest einen Teil gelöschter Informationen durch die Scroll-Bedienung anzugeben.

34. Informationsangabevorrichtung für ein Fahrzeug (1) nach einem der vorhergehenden Ansprüche, wobei wenn der Fahrgast eine Bedienung für Karteninformationen durchführt, die zweite Angabesteuer- bzw. -regelvorrichtung (36) wirksam ist, die zweite Anzeige (G2) zu veranlassen, die Karteninformationen anzugeben, die von der ersten Anzeige (G1) angegeben werden.

35. Informationsangabevorrichtung für ein Fahrzeug (1) nach einem der vorhergehenden Ansprüche, wobei wenn der Fahrgast eine Bedienung zum Scrollen von Karteninformationen durchführt, die zweite Angabesteuer- bzw. -regelvorrichtung (36) wirksam ist, die zweite Anzeige (G2) zu veranlassen, Karteninformationen, die einen größere Kartenbereich zeigen als die, die von der ersten Anzeige (G1) angegeben werden, als die die erste Anzeige (G1) betreffenden visuellen Informationen anzugeben.

36. Informationsangabevorrichtung für ein Fahrzeug (1) nach einem der vorhergehenden Ansprüche, wobei die umgekehrte Skala der Karteninformationen, die von der zweiten Anzeige (G2) angegeben werden, innerhalb eines spezifizierten Bereichs begrenzt ist.

37. Informationsangabevorrichtung für ein Fahrzeug (1) nach einem der vorhergehenden Ansprüche, wobei wenn der Fahrgast eine Bedienung der visuellen Informationen durchführt, die zweite Angabesteuer- bzw. -regelvorrichtung (36) wirksam ist, die erste Anzeige (G1) zu veranlassen, visuelle Informationen zur Bestätigung, welche die Bedienung durch den Fahrgast betreffen, für eine spezifizierte Zeit anzugeben.

38. Informationsangabevorrichtung für ein Fahrzeug (1) nach einem der vorhergehenden Ansprüche, wobei wenn der Fahrgast eine Bedienung durchführt, bei der die von er ersten Anzeige (G1) angegebenen visuellen Informationen zunehmen, die zweite Angabesteuer- bzw. -regelvorrichtung (36) wirksam ist, die zweite Anzeige (G2) zu veranlassen, zumindest einen Teil der visuellen Informationen anzugeben.

39. Informationsangabevorrichtung für ein Fahrzeug (1) nach Anspruch 38, wobei visuelle Informationen mit niedriger Priorität von der zweiten Anzeige (G2) angegeben werden.

40. Informationsangabevorrichtung für ein Fahrzeug (1) nach einem der vorhergehenden Ansprüche, wobei wenn der Fahrgast eine Bedienung zum Scrollen der visuellen Informationen durchführt, die zweite Angabesteuer- bzw. -regelvorrichtung (36) wirksam ist, die zweite Anzeige (G2) zu veranlassen, zumindest einen Teil gelöschter Informationen durch die Scroll-Bedienung anzugeben.

41. Informationsangabevorrichtung für ein Fahrzeug (1) nach einem der vorhergehenden Ansprüche, wobei die erste Anzeige (G1) an einer Stelle vorgesehen ist, wo ein Fahrer die erste Anzeige (G1) mit einer relativ kurzen Augenbewegung während des Fahrens des Fahrzeugs sehen kann, und die zweite Anzeige (G2) an einer anderen Stelle vorgesehen ist, die näher an dem Fahrer ist als die erste Anzeige (G1), wo eine relativ lange Augenbewegung des Fahrers nötig ist, um die zweite Anzeige (G2) während des Fahrens des Fahrzeugs zu sehen.

42. Informationsangabevorrichtung für ein Fahrzeug (1) nach Anspruch 41, wobei ein Schalter (50a) vorgesehen ist, um die zweite Angabesteuer- bzw. -regelvorrichtung (36) zu steuern bzw. zu regeln.

43. Informationsangabevorrichtung für ein Fahrzeug (1) nach Anspruch 42, wobei der Schalter (50a) von der zweiten Anzeige (G2) angegeben wird.

44. Informationsangabevorrichtung für ein Fahrzeug (1) nach einem der Ansprüche 41 bis 43, wobei die visuellen Informationen, die von der ersten Anzeige (G1) mit der zweiten Angabesteuer- bzw. -regelvorrichtung (36) angegeben werden, in einer Angabeweise von den visuellen Informationen unterschiedlich sind, die von der ersten Anzeige (G1) angegeben werden.

45. Informationsangabevorrichtung für ein Fahrzeug (1) nach einem der Ansprüche 41 bis 43, wobei die Bedieninformationen, die von der ersten Anzeige (G1) mit der zweiten Angabesteuer- bzw. -regelvorrichtung (36) angegeben werden, in einer Angabeweise von den Bedieninformationen unterschiedlich sind, die von der zweiten Anzeige (G2) angegeben werden.

46. Informationsangabevorrichtung für ein Fahrzeug (1) nach einem der vorhergehenden Ansprüche 41 bis 45, wobei nahe der Hand eines Fahrers eine Bedien- bzw. Betätigungsvorrichtung (10) vorgesehen ist, welche die Bedienung bzw. Betätigung durch den Fahrgast durchführt, die zu den Bedieninformationen durchgeführt wird, die von der zweiten Anzeige (G2) angegeben werden, und ein Icon-Angabeabschnitt (41), der Bedieninhalten der Bedienvorrichtung (10) entspricht, von der ersten Anzeige (G1) angegeben wird, wenn die Bedienvorrichtung betätigt wird.

47. Informationsangabevorrichtung für ein Fahrzeug (1) nach einem der vorhergehenden Ansprüche 41 bis 46, wobei eine weitere Bedien- bzw. Betätigungsvorrichtung (13; 52d) vorgesehen ist, um die visuellen Informationen zu bedienen, die von der ersten Anzeige (G1) angegeben werden.

48. Informationsangabevorrichtung für ein Fahrzeug (1) nach Anspruch 47, wobei wenn die von der ersten Anzeige (G1) angegebenen visuellen Informationen durch die Bedienvorrichtung (13) bedient werden, die erste Anzeige (G1) konfiguriert ist, nur durch die Bedienvorrichtung (13) bedient zu werden.

49. Informationsangabevorrichtung für ein Fahrzeug (1) nach Anspruch 47 oder 48, wobei wenn die von der ersten Anzeige (G1) angegebenen visuellen Informationen durch die Bedienvorrichtung (52d) bedient werden, die von der ersten Anzeige (G1) angegebenen visuellen Informationen von der zweiten Anzeige (G2) angegeben werden, wodurch die angegebenen visuellen Informationen bedient werden können.

50. Informationsangabevorrichtung für ein Fahrzeug (1) nach einem der vorhergehenden Ansprüche 41 bis 49, wobei wenn die erste Anzeige (G1) außer Betrieb ist, die von der ersten Anzeige (G1) angegebenen visuellen Informationen von der zweiten Anzeige (G2) angegeben werden, wodurch die angegebenen visuellen Informationen bedient werden können.

51. Informationsangabevorrichtung für ein Fahrzeug (1) nach Anspruch 47, 48, 49 oder 50, wobei wenn die zweite Anzeige (G2) außer Betrieb ist, die von der ersten Anzeige (G1) angegebenen visuellen Informationen durch die Bedienvorrichtung bedient werden können.

52. Informationsangabevorrichtung für ein Fahrzeug (1) nach einem der Ansprüche 41 bis 51, wobei eine Warnvorrichtung vorgesehen ist, die wirksam ist, den Fahrer zu warnen, wenn die Angabesteuerung bzw. -regelung von der zweiten Angabesteuer- bzw. -regelvorrichtung (36) ausgeführt wird.

53. Informationsangabevorrichtung für ein Fahrzeug (1) nach einem der Ansprüche 41 bis 52, wobei eine Festlegungsvorrichtung vorgesehen ist, die wirksam ist, Inhalte der Angabesteuerung bzw. -regelung von der zweiten Angabesteuer- bzw. -regelvorrichtung (36) festzulegen.

54. Informationsangabevorrichtung für ein Fahrzeug (1) nach einem der Ansprüche 41 bis 53, wobei die erste Anzeige (G1) so konfiguriert ist, dass sie größer ist als die zweite Anzeige (G2).

55. Informationsangabevorrichtung für ein Fahrzeug (1) nach einem der Ansprüche 41 bis 54, wobei die zweite Anzeige (G2) so konfiguriert ist, dass eine vertikale Mittellinie (L2) der zweiten Anzeige (G2) zu einem Fahrersitz (5) hin geneigt ist.

56. Informationsangabeverfahren für ein Fahrzeug (1) umfassend eine Informationsangabevorrichtung umfassend zumindest eine erste Angabevorrichtung (D1) mit einer ersten Anzeige (G1), wobei die erste Anzeige (G1) zumindest visuelle Informationen angibt, und zumindest eine zweite Angabevorrichtung (D2) mit einer zweiten Anzeige (G2), wobei die zweite Anzeige (G2) zumindest Bedien- bzw. Betätigungsinformationen zum Bedienen bzw. Betätigen der visuellen Informationen angibt, die von der ersten Anzeige (G1) angegeben werden, wobei das Verfahren die folgenden Schritte umfasst:
Detektieren einer durch den Fahrgast vorgenommene Betätigung der Bedieninformationen, die von der zweiten Anzeige (G2) angegeben werden, mittels einer Bedien- bzw. Betätigungsdetektiervorrichtung (Pd), die an oder in Verbindung mit der zweiten Angabevorrichtung (D2) vorgesehen ist;
Erzeugen zumindest eines Bedien- bzw. Betätigungssignals durch eine Bedien- bzw. Betätigungssignalerzeugungsvorrichtung (32) basierend auf den Bedieninformationen, die von der zweiten Anzeige (G2) angegeben werden, und eines Detektiersignals der Bediendetektiervorrichtung (Pd);
Steuern bzw. Regeln eines Angabezustands der Informationen auf der ersten Anzeige (G1) basierend auf dem von der Bediensignalerzeugungsvorrichtung (32) erzeugten Bediensignal; und
Bedienen der zweiten Angabesteuer- bzw. -regelvorrichtung (36), um die erste Anzeige (G1) zu veranlassen, die Bedieninformationen anzugeben, und/oder die zweite Anzeige (G2) zu veranlassen, die visuellen Informationen gemäß der Bedienung durch den Fahrgast anzugeben; und
Bedienen der zweiten Angabesteuer- bzw. -regelvorrichtung (36), um die zweite Anzeige (G2) zu veranlassen, die die erste Anzeige (G1) betreffenden visuellen Informationen gemäß der Bedienung durch den Fahrgast auf der ersten Anzeige (G1) anzugeben;
**gekennzeichnet durch**
wenn der Fahrgast eine Bedienung zum Ändern des Maßstabs von Karteninformationen durchführt, Bedienen der zweiten Angabesteuer- bzw. -regelvorrichtung (36), um die zweite Anzeige (G2) zu veranlassen, Karteninformationen anzugeben, die von der ersten Anzeige (G1) angegeben werden, wobei die Karteninformationen, die von der zweiten Anzeige (G2) angegeben werden, alte Karteninformationen sind, deren Maßstab sich nicht geändert hat oder die einen Maßstab aufweisen, der umgekehrt zu dem Maßstab der Karteninformationen ist, die von der ersten Anzeige (G1) angegeben werden oder Kamerabildinformationen betreffen, die von der ersten Anzeige (G1) angegeben werden.

57. Computerprogrammprodukt, umfassend computerlesbare Instruktionen, das, wenn auf einem geeigneten System geladen und ausgeführt, ein Informationsangabeverfahren für ein Fahrzeug (1) nach Anspruch 56 durchführt.

## Revendications

1. Dispositif d'affichage d'informations pour un véhicule (1), comprenant :
au moins un premier dispositif d'affichage (D1) avec un premier écran (G1), le premier écran (G1) affichant au moins des informations visuelles ;
au moins un deuxième dispositif d'affichage (D2) avec un second écran (G2), le second écran (G2) affichant au moins des informations d'opération pour mettre en action les informations visuelles affichées par le premier écran (G1) ;
un dispositif de détection d'opération (Pd) prévu au niveau de ou en connexion avec le deuxième dispositif d'affichage (D2) et actif pour détecter une opération par un passager qui est dirigée vers les informations d'opération affichées par le second écran (G2) ;
un dispositif de génération de signaux d'opération (32) actif pour générer au moins un signal d'opération en fonction des informations d'opération affichées par le second écran (G2) et un signal de détection du dispositif de détection d'opération (Pd) ;
un premier dispositif de commande d'affichage (31) actif pour commander un état d'affichage des informations sur le premier écran (G1) en fonction du signal d'opération généré par le dispositif de génération de signaux d'opération (32) ;
et
dans lequel le second dispositif de commande d'affichage (36) est actif pour que le premier écran (G1) affiche les informations d'opération et/ou que le second écran (G2) affiche les informations visuelles en fonction de l'opération du passager ; et
le second dispositif de commande d'affichage (36) est actif pour que le second écran (G2) affiche les informations visuelles concernant le premier écran (G1) en fonction de l'opération du passager sur le premier écran (G1) ;
**caractérisé en ce que,**
lorsque le passager exécute une opération pour changer l'échelle d'informations cartographiques, le second dispositif de commande d'affichage (36) est actif pour que le second écran (G2) affiche les informations cartographiques qui sont affichées par le premier écran (G1), les informations cartographiques affichées par le second écran (G2) étant d'anciennes informations cartographiques dont l'échelle n'a pas changé ou ayant une échelle qui est inverse à l'échelle des informations cartographiques affichées par le premier écran (G1) ou concernant des informations d'images photographiques qui sont affichées par le premier écran (G1).

2. Dispositif d'affichage d'informations pour un véhicule (1), comprenant :
au moins un premier dispositif d'affichage (D1) avec un premier écran (G1), le premier écran (G1) affichant au moins des informations visuelles ;
au moins un deuxième dispositif d'affichage (D2) avec un second écran (G2), le second écran (G2) affichant au moins des informations d'opération pour mettre en action les informations visuelles affichées par le premier écran (G1) ;
un dispositif de détection d'opération (Pd) prévu au niveau de ou en connexion avec le deuxième dispositif d'affichage (D2) et actif pour détecter une opération par un passager qui est dirigée vers les informations d'opération affichées par le second écran (G2) ;
un dispositif de génération de signaux d'opération (32) actif pour générer au moins un signal d'opération en fonction des informations d'opération affichées par le second écran (G2) et un signal de détection du dispositif de détection d'opération (Pd) ;
un premier dispositif de commande d'affichage (31) actif pour commander un état d'affichage des informations sur le premier écran (G1) en fonction du signal d'opération généré par le dispositif de génération de signaux d'opération (32) ;
et
dans lequel le second dispositif de commande d'affichage (36) est actif pour que le premier écran (G1) affiche les informations d'opération et/ou que le second écran (G2) affiche les informations visuelles en fonction de l'état de déplacement du véhicule ;
dans lequel le second dispositif de commande d'affichage (36) est actif pour que le second écran (G2) affiche les informations visuelles concernant le premier écran (G1) en fonction de l'état de déplacement du véhicule ;
**caractérisé en ce que**
les informations cartographiques affichées par le second écran (G2) illustrent une zone cartographique plus grande que celle affichée par le premier écran (G1) dans un état de déplacement à vitesse élevée du véhicule ;
dans lequel, lorsque le premier écran (G1) affiche des informations cartographiques, le second dispositif de commande d'affichage (36) est actif pour que le second écran (G2) affiche des informations cartographiques qui sont plus spécifiques que celles affichées par le premier écran (G1), en tant qu'informations visuelles concernant le premier écran (G1), dans un état de déplacement à faible vitesse du véhicule.

3. Dispositif d'affichage d'informations pour un véhicule (1) selon l'une quelconque des revendications précédentes, dans lequel les informations cartographiques affichées par le second écran (G2) illustrent une zone cartographique agrandie qui est située en face du véhicule en déplacement (1) par rapport aux informations cartographiques affichées par le premier écran (G1) dans un état de déplacement à vitesse élevée du véhicule.

4. Dispositif d'affichage d'informations pour un véhicule (1) selon l'une quelconque des revendications précédentes, dans lequel, lorsque le premier écran (G1) affiche des informations cartographiques, le second dispositif de commande d'affichage (36) est actif pour que le second écran (G2) affiche des informations concernant une aire de repos et/ou un échangeur en fonction des informations cartographiques affichées par le premier écran (G1), en tant qu'informations visuelles concernant le premier écran (G1), dans un état de déplacement sur autoroute du véhicule.

5. Dispositif d'affichage d'informations pour un véhicule (1) selon l'une quelconque des revendications précédentes, dans lequel le second dispositif de commande d'affichage (36) est actif pour que le second écran (G2) affiche au moins partiellement les informations visuelles concernant le premier écran (G1) sur une partie du second écran (G2) dans un état de déplacement à faible vitesse du véhicule.

6. Dispositif d'affichage d'informations pour un véhicule (1) selon l'une quelconque des revendications précédentes, dans lequel les informations visuelles sont affichées sur le second écran (G2) dans une zone qui est d'un côté plus proche d'un conducteur.

7. Dispositif d'affichage d'informations pour un véhicule (1) selon l'une quelconque des revendications précédentes, dans lequel, lorsque le premier écran (G1) affiche des informations cartographiques, le second dispositif de commande d'affichage (36) est actif pour que le second écran (G2) affiche des informations de circonférence en fonction des informations cartographiques affichées par le premier écran (G1), en tant qu'informations visuelles concernant le premier écran (G1), dans un état de déplacement en zone urbaine du véhicule.

8. Dispositif d'affichage d'informations pour un véhicule (1) selon l'une quelconque des revendications précédentes, dans lequel le second dispositif de commande d'affichage (36) est actif pour que le premier écran (G1) affiche au moins partiellement les informations d'opération concernant le second écran (G2) dans un état de déplacement à faible vitesse du véhicule ou un état d'arrêt du véhicule.

9. Dispositif d'affichage d'informations pour un véhicule (1) selon l'une quelconque des revendications précédentes, dans lequel le second dispositif de commande d'affichage (36) est actif pour que le premier écran (G1) affiche une explication du contenu des informations d'opération affichées par le second écran (G2), en tant qu'informations d'opération concernant le second écran (G2).

10. Dispositif d'affichage d'informations pour un véhicule (1) selon l'une quelconque des revendications précédentes, dans lequel le second dispositif de commande d'affichage (36) est actif pour que le premier écran (G1) affiche des informations qui sont obtenues par une simplification provenant des informations d'opération affichées par le second écran (G2), en tant qu'informations d'opération concernant le second écran (G2).

11. Dispositif d'affichage d'informations pour un véhicule (1) selon l'une quelconque des revendications précédentes, dans lequel le second dispositif de commande d'affichage (36) est actif pour que le premier écran (G1) affiche le contenu d'opération hiérarchique des informations d'opération affichées par le second écran (G2), en tant qu'informations d'opération concernant le second écran (G2).

12. Dispositif d'affichage d'informations pour un véhicule (1) selon l'une quelconque des revendications précédentes, dans lequel le second dispositif de commande d'affichage (36) est actif pour que le premier écran (G1) affiche au moins une partie des informations d'opération affichées par le second écran (G2), en tant qu'informations d'opération concernant le second écran (G2).

13. Dispositif d'affichage d'informations pour un véhicule (1) selon l'une quelconque des revendications 8 à 12, dans lequel la commande d'affichage par le second dispositif de commande d'affichage (36) est pour faire afficher au premier écran (G1) les informations d'opération concernant le second écran (G2) est interdite tandis que le véhicule (1) est accéléré dans l'état de déplacement à faible vitesse du véhicule.

14. Dispositif d'affichage d'informations pour un véhicule (1) selon l'une quelconque des revendications précédentes, dans lequel un dispositif opérationnel (10) qui dirige l'opération par le passager qui est dirigée vers les informations d'opération affichées par le second écran (G2) est prévu près de la main d'un conducteur, et une portion d'affichage d'icône (41) qui correspond au contenu d'opération du dispositif opérationnel (10) est affichée par le premier écran (G1) dans l'état de déplacement du véhicule.

15. Dispositif d'affichage d'informations pour un véhicule (1) selon la revendication 14, dans lequel l'affichage de la portion d'affichage d'icône (41) par le premier écran (G1) est arrêté dans un état d'arrêt du véhicule.

16. Dispositif d'affichage d'informations pour un véhicule (1) selon l'une quelconque des revendications précédentes, dans lequel le premier écran (G1) est prévu à un emplacement où un conducteur peut visualiser le premier écran (G1) avec un mouvement relativement bref des yeux du conducteur pendant la conduite d'un véhicule, et le second écran (G2) est prévu à un autre emplacement, qui est plus proche du conducteur que le premier écran (G1), où un mouvement relativement long des yeux du conducteur est nécessaire pour visualiser le second écran (G2) pendant la conduite du véhicule.

17. Dispositif d'affichage d'informations pour un véhicule (1) selon l'une quelconque des revendications précédentes, dans lequel il est prévu un dispositif d'avertissement actif pour avertir le passager lorsque la commande d'affichage par le second dispositif de commande d'affichage (36) est exécutée.

18. Dispositif d'affichage d'informations pour un véhicule (1) selon l'une quelconque des revendications précédentes, dans lequel il est prévu un dispositif de réglage actif pour régler le contenu de la commande d'affichage par le second dispositif de commande d'affichage (36).

19. Dispositif d'affichage d'informations pour un véhicule (1) selon l'une quelconque des revendications précédentes, dans lequel le premier écran (G1) est configuré pour être plus grand que le second écran (G2).

20. Dispositif d'affichage d'informations pour un véhicule (1) selon l'une quelconque des revendications précédentes, dans lequel le second écran (G2) est configuré de sorte qu'une ligne centrale verticale (L2) du second écran (G2) est inclinée vers le siège d'un conducteur (5).

21. Dispositif d'affichage d'informations pour un véhicule (1) selon l'une quelconque des revendications précédentes, dans lequel le second dispositif de commande d'affichage (36) est actif pour que le premier écran (G1) affiche les informations d'opération concernant le second écran (G2) en fonction de l'opération du passager sur le second écran (G2).

22. Dispositif d'affichage d'informations pour un véhicule (1) selon la revendication 21, dans lequel le second dispositif de commande d'affichage (36) est actif pour que le premier écran (G1) affiche une explication du contenu des informations d'opération affichées par le second écran (G2), en tant qu'informations d'opération concernant le second écran (G2), lorsque le passager exécute l'opération qui est dirigée vers les informations d'opération affichées par le second écran (G2).

23. Dispositif d'affichage d'informations pour un véhicule (1) selon la revendication 21 ou 22, dans lequel le second dispositif de commande d'affichage (36) est actif pour que le premier écran (G1) affiche des informations qui sont obtenues par une simplification provenant des informations d'opération affichées par le second écran (G2), en tant qu'informations d'opération concernant le second écran (G2), lorsque le passager exécute l'opération qui est dirigée vers les informations d'opération affichées par le second écran (G2).

24. Dispositif d'affichage d'informations pour un véhicule (1) selon la revendication 21, 22 ou 23, dans lequel le second dispositif de commande d'affichage (36) est actif pour que le premier écran (G1) affiche le contenu d'opération hiérarchique des informations d'opération affichées par le second écran (G2), en tant qu'informations d'opération concernant le second écran (G2), lorsque le passager exécute l'opération qui est dirigée vers les informations d'opération affichées par le second écran (G2).

25. Dispositif d'affichage d'informations pour un véhicule (1) selon la revendication 21, 22, 23 ou 24, dans lequel le second dispositif de commande d'affichage (36) est actif pour que le premier écran (G1) affiche des informations concernant une destination lorsque le passager exécute une opération pour régler la destination du déplacement du véhicule.

26. Dispositif d'affichage d'informations pour un véhicule (1) selon la revendication 25, dans lequel les informations concernant la destination affichées par le premier écran (G1) sont illustrées de manière à au moins partiellement se chevaucher avec les informations cartographiques affichées par le premier écran (G1).

27. Dispositif d'affichage d'informations pour un véhicule (1) selon l'une quelconque des revendications précédentes 21 à 26, dans lequel les informations cartographiques affichées par le premier écran (G1) sont changées en fonction des informations concernant la destination.

28. Dispositif d'affichage d'informations pour un véhicule (1) selon l'une quelconque des revendications précédentes 21 à 27, dans lequel le second dispositif de commande d'affichage (36) est actif pour que le premier écran (G1) affiche des informations recherchées lorsque le passager exécute une opération pour recherche d'informations.

29. Dispositif d'affichage d'informations pour un véhicule (1) selon l'une quelconque des revendications précédentes 21 à 28, dans lequel le second dispositif de commande d'affichage (36) est actif pour que le premier écran (G1) affiche des informations de prévision de l'avenir d'informations sur les embouteillages recherchées qui sont affichées par le second écran (G2) lorsque le passager exécute une opération pour recherche d'informations sur les embouteillages.

30. Dispositif d'affichage d'informations pour un véhicule (1) selon la revendication 29, dans lequel l'heure future pour la prévision des informations de prévision de l'avenir peut être commandée.

31. Dispositif d'affichage d'informations pour un véhicule (1) selon l'une quelconque des revendications précédentes 21 à 30, dans lequel le second dispositif de commande d'affichage (36) est actif pour que le premier écran (G1) affiche au moins une partie des informations d'opération lorsque le passager exécute une opération dans laquelle les informations d'opération augmentent.

32. Dispositif d'affichage d'informations pour un véhicule (1) selon la revendication 31, dans lequel les informations d'opération à faible priorité sont affichées par le premier écran (G1).

33. Dispositif d'affichage d'informations pour un véhicule (1) selon l'une quelconque des revendications précédentes 21 à 32, dans lequel, lorsque le passager exécute une opération pour faire défiler les informations d'opération, le second dispositif de commande d'affichage (36) est actif pour que le premier écran (G1) affiche au moins une partie des informations effacées par l'opération de défilement.

34. Dispositif d'affichage d'informations pour un véhicule (1) selon l'une quelconque des revendications précédentes, dans lequel, lorsque le passager exécute une opération pour informations cartographiques, le second dispositif de commande d'affichage (36) est actif pour que le second écran (G2) affiche les informations cartographiques qui sont affichées par le premier écran (G1).

35. Dispositif d'affichage d'informations pour un véhicule (1) selon l'une quelconque des revendications précédentes, dans lequel, lorsque le passager exécute une opération pour faire défiler des informations cartographiques, le second dispositif de commande d'affichage (36) est actif pour que le second écran (G2) affiche des informations cartographiques qui illustrent une zone cartographique plus grande que celle affichée par le premier écran (G1), en tant qu'informations visuelles concernant le premier écran (G1).

36. Dispositif d'affichage d'informations pour un véhicule (1) selon l'une quelconque des revendications précédentes, dans lequel l'échelle inverse des informations cartographiques qui sont affichées par le second écran (G2) est limitée au sein d'une plage spécifiée.

37. Dispositif d'affichage d'informations pour un véhicule (1) selon l'une quelconque des revendications précédentes, dans lequel, lorsque le passager exécute une opération des informations visuelles, le second dispositif de commande d'affichage (36) est actif pour que le second écran (G2) affiche les informations visuelles pour confirmation concernant l'opération par le passager pour une heure spécifiée.

38. Dispositif d'affichage d'informations pour un véhicule (1) selon l'une quelconque des revendications précédentes, dans lequel, lorsque le passager exécute une opération dans laquelle les informations visuelles affichées par le premier écran (G1) augmentent, le second dispositif de commande d'affichage (36) est actif pour que le second écran (G2) affiche au moins une partie des informations visuelles.

39. Dispositif d'affichage d'informations pour un véhicule (1) selon la revendication 38, dans lequel les informations visuelles à faible priorité sont affichées par le second écran (G2).

40. Dispositif d'affichage d'informations pour un véhicule (1) selon l'une quelconque des revendications précédentes, dans lequel, lorsque le passager exécute une opération pour faire défiler les informations visuelles, le second dispositif de commande d'affichage (36) est actif pour que le second écran (G2) affiche au moins une partie des informations effacées par l'opération de défilement.

41. Dispositif d'affichage d'informations pour un véhicule (1) selon l'une quelconque des revendications précédentes, dans lequel le premier écran (G1) est prévu à un emplacement où un conducteur peut visualiser le premier écran (G1) avec un mouvement relativement bref des yeux du conducteur pendant la conduite d'un véhicule, et le second écran (G2) est prévu à un autre emplacement, qui est plus proche du conducteur que le premier écran (G1), où un mouvement relativement long des yeux du conducteur est nécessaire pour visualiser le second écran (G2) pendant la conduite du véhicule.

42. Dispositif d'affichage d'informations pour un véhicule (1) selon la revendication 41, dans lequel il est prévu un commutateur (50a) pour commander le second dispositif de commande d'affichage (36).

43. Dispositif d'affichage d'informations pour un véhicule (1) selon la revendication 42, dans lequel le commutateur (50a) est affiché par le second écran (G2).

44. Dispositif d'affichage d'informations pour un véhicule (1) selon l'une quelconque des revendications 41 à 43, dans lequel les informations visuelles affichées par le second écran (G2) avec le second dispositif de commande d'affichage (36) sont différentes des informations visuelles affichées par le premier écran (G1) dans une manière d'afficher.

45. Dispositif d'affichage d'informations pour un véhicule (1) selon l'une quelconque des revendications 41 à 43, dans lequel les informations d'opération affichées par le premier écran (G1) avec le second dispositif de commande d'affichage (36) sont différentes des informations d'opération affichées par le second écran (G2) dans une manière d'afficher.

46. Dispositif d'affichage d'informations pour un véhicule (1) selon l'une quelconque des revendications précédentes 41 à 45, dans lequel un dispositif opérationnel (10) qui dirige l'opération par le passager qui est dirigée vers les informations d'opération affichées par le second écran (G2) est prévu près de la main d'un conducteur, et une portion d'affichage d'icône (41) qui correspond au contenu d'opération du dispositif opérationnel (10) est affichée par le premier écran (G1) lorsque le dispositif opérationnel est mis en action.

47. Dispositif d'affichage d'informations pour un véhicule (1) selon l'une quelconque des revendications précédentes 41 à 46, dans lequel il est prévu un autre dispositif opérationnel (13 ; 52d) pour mettre en action les informations visuelles affichées par le premier écran (G1).

48. Dispositif d'affichage d'informations pour un véhicule (1) selon la revendication 47, dans lequel, lorsque les informations visuelles affichées par le premier écran (G1) sont mises en action par le dispositif opérationnel (13), le premier écran (G1) est configuré pour être uniquement mis en action par le dispositif opérationnel (13).

49. Dispositif d'affichage d'informations pour un véhicule (1) selon la revendication 47 ou 48, dans lequel, lorsque les informations visuelles affichées par le premier écran (G1) sont mises en action par le dispositif opérationnel (52d), les informations visuelles affichées par le premier écran (G1) sont affichées par le second écran (G2), moyennant quoi les informations visuelles affichées peuvent être mises en action.

50. Dispositif d'affichage d'informations pour un véhicule (1) selon l'une quelconque des revendications précédentes 41 à 49, dans lequel, lorsque le premier écran (G1) est hors service, les informations visuelles affichées par le premier écran (G1) sont affichées par le second écran (G2), moyennant quoi les informations visuelles affichées peuvent être mises en action.

51. Dispositif d'affichage d'informations pour un véhicule (1) selon la revendication 47, 48, 49 ou 50, dans lequel, lorsque le second écran (G2) est hors service, les informations visuelles affichées par le premier écran (G1) peuvent être mises en action par le dispositif opérationnel.

52. Dispositif d'affichage d'informations pour un véhicule (1) selon l'une quelconque des revendications 41 à 51, dans lequel il est prévu un dispositif d'avertissement actif pour avertir le conducteur lorsque la commande d'affichage par le second dispositif de commande d'affichage (36) est exécutée.

53. Dispositif d'affichage d'informations pour un véhicule (1) selon l'une quelconque des revendications 41 à 52, dans lequel il est prévu un dispositif de réglage actif pour régler le contenu de la commande d'affichage par le second dispositif de commande d'affichage (36).

54. Dispositif d'affichage d'informations pour un véhicule (1) selon l'une quelconque des revendications 41 à 53, dans lequel le premier écran (G1) est configuré pour être plus grand que le second écran (G2).

55. Dispositif d'affichage d'informations pour un véhicule (1) selon l'une quelconque des revendications 41 à 54, dans lequel le second écran (G2) est configuré de sorte qu'une ligne centrale verticale (L2) du second écran (G2) est inclinée vers le siège d'un conducteur (5).

56. Procédé d'affichage d'informations pour un véhicule (1), comprenant un dispositif d'affichage d'information comprenant au moins un premier dispositif d'affichage (D1) avec un premier écran (G1), le premier écran (G1) affichant au moins des informations visuelles et au moins un deuxième dispositif d'affichage (D2) avec un second écran (G2), le second écran (G2) affichant au moins des informations d'opération pour mettre en action les informations visuelles affichées par le premier écran (G1), le procédé comprenant les étapes suivantes :
la détection d'une opération par un passager qui est dirigée vers les informations d'opération affichées par le second écran (G2) au moyen d'un dispositif de détection d'opération (Pd) prévu au niveau de ou en connexion avec le deuxième dispositif d'affichage (D2) ;
la génération d'au moins un signal d'opération au moyen d'un dispositif de génération de signaux d'opération (32) en fonction des informations d'opération affichées par le second écran (G2) et d'un signal de détection du dispositif de détection d'opération (Pd) ;
la commande d'un état d'affichage des informations sur le premier écran (G1) en fonction du signal d'opération généré par le dispositif de génération de signaux d'opération (32) ; et
la mise en action du second dispositif de commande d'affichage (36) de manière à faire afficher au premier écran (G1) les informations d'opération et/ou faire afficher au second écran (G2) les informations visuelles en fonction de l'opération du passager ; et
la mise en action du second dispositif de commande d'affichage (36) de manière à faire afficher au second écran (G2) les informations visuelles concernant le premier écran (G1) en fonction de l'opération du passager sur le premier écran (G1) ;
**caractérisé par**,
lorsque le passager exécute une opération pour changer l'échelle d'informations cartographiques, la mise en action du second dispositif de commande d'affichage (36) de manière à faire afficher au second écran (G2) les informations cartographiques qui sont affichées par le premier écran (G1), les informations cartographiques affichées par le second écran (G2) étant d'anciennes informations cartographiques dont l'échelle n'a pas changé ou ayant une échelle qui est inverse à l'échelle des informations cartographiques affichées par le premier écran (G1) ou concernant des informations d'images photographiques qui sont affichées par le premier écran (G1).

57. Produit de programme informatique comprenant des instructions lisibles par ordinateur qui, lorsqu'elles sont chargées et exécutées sur un système approprié, réalisent un procédé d'affichage d'informations pour un véhicule (1) selon la revendication 56.
